# EUROPEAN PATENT SPECIFICATION

(11) **EP 2 219 069 B1**
(45) Date of publication and mention of the grant of the patent: **15.05.2013**
(21) Application number: 08855500.8
(22) Date of filing: 03.09.2008
(51) Int. Cl.: G02F 1/1368, G02F 1/133, G09G 3/20, G09G 3/36, H04N 5/66, G02F 1/1362

(54) **LIQUID CRYSTAL DISPLAY**
FLÜSSIGKRISTALLANZEIGE
AFFICHAGE À CRISTAUX LIQUIDES

(30) Priority: 30.11.2007 JP 2007311626
(43) Date of publication of application: 18.08.2010
(73) Proprietor: Sharp Kabushiki Kaisha, Osaka-shi Osaka 545-8522 (JP)
(72) Inventor: TSUBATA, Toshihide, Osaka-shi Osaka 545-8522 (JP)
(74) Representative: Goddar, Heinz J.
(86) International application number: PCT/JP2008/065891
(87) International publication number: WO 2009/069359

(56) References cited:
- WO-A1-2006/038598
- JP-A- 5 119 344
- JP-A- 2004 062 146
- US-A- 5 668 613
- US-A1- 2003 227 429
- US-A1- 2005 253 797

## Description

### Technical Field

The present invention relates to (i) a liquid crystal display device employing a divided-pixel system, in which each pixel includes a plurality of subpixels, (ii) an active matrix substrate used in a liquid crystal display device employing the divided-pixel system, and (iii) a liquid crystal panel used in a liquid crystal display device employing the divided-pixel system.

### Background Art

Viewing angle dependence of a gamma characteristic is a difference between (i) a gamma characteristic of a liquid crystal display device as seen from the front and (ii) a gamma characteristic of the liquid crystal display device as seen at an angle. In order to improve the viewing angle dependence of the gamma characteristic on the liquid crystal display device, various solutions have been proposed. One of the solutions is a divided-pixel system (so-called multi-pixel technique), in which each pixel includes a plurality of subpixels (for example, refer to JP 2006-062146).

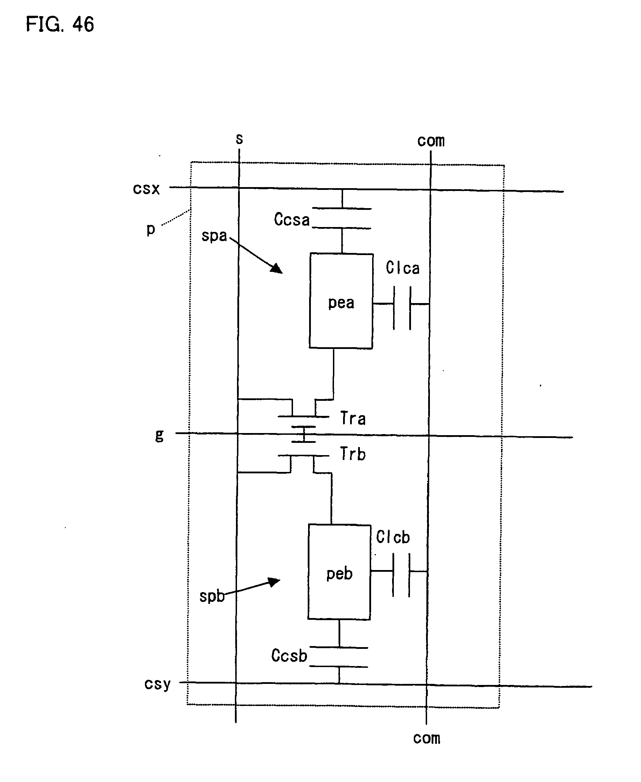

Fig. 46 illustrates an equivalent circuit of a liquid crystal display device employing the divided-pixel system. According to Fig. 46, the liquid crystal display device includes data signal lines s and scanning signal lines g which are orthogonal to each other, storage capacitor wires csx and storage capacitor wires csy, and pixels p which are arrayed in a matrix manner. Each of the pixels p includes two subpixels spa and spb. The subpixel spa includes a transistor Tra and a pixel electrode pea, while the subpixel spb includes a transistor Trb and a pixel electrode peb. Each of the scanning signal lines g is provided so as to pass through corresponding one of the pixels p in the middle of the pixel p. The transistors Ta and Trb are connected to identical one of the scanning signal lines g and to identical one of the data signal lines s. The pixel electrode pea and corresponding one of the storage capacitor wires csx define a capacitance Ccsa, and the pixel electrode pea and a common electrode (counter electrode) com define Clca. Further, the pixel electrode peb and corresponding one of the storage capacitor wires csy define a capacitance Ccsb, and the pixel electrode peb and the common electrode (counter electrode) com define Clcb. That is, in the liquid crystal display device as above, each of the pixels p is provided correspondingly with two storage capacitor wires (csx and csy).

According to the above liquid crystal display device, the pixel electrode pea and the pixel electrode peb receive the same signal potential (a potential corresponding to a data signal), which is supplied from corresponding one of the data signal lines s. However, if a potential of each of the two storage capacitor wires csx and csy is individually controlled when or while the transistor Tra and the transistor Trb are in an OFF state, then it is possible to cause, via the storage capacitance Ccsa and the storage capacitance Ccsb, the pixel electrode pea and the pixel electrode peb to have respectively different effective potentials. As used herein, "a potential of each of the two storage capacitor wires csx and csy is individually controlled" means that, for example, during each frame period, each of potential levels of the two storage capacitor wires csx and csy is reversed for every horizontal scanning period. Specifically, for example, (i) the potential levels of the two storage capacitor wires csx and csy shift in a positive direction and in a negative direction, respectively, during a horizontal scanning period, and (ii) the potential levels of the two storage capacitor wires csx and csy shift in the negative direction and in the positive direction, respectively, during a subsequent horizontal scanning period. For example, assuming that Vs represents a signal potential to be supplied to the data signal lines s, VF represents a feed-through potential obtained when transistors are in the OFF state, and 2 x Vp represents each of level shift amounts of the potential levels of the two storage capacitor wires csx and csy, and Kca = Ccsa / (Clca + Ccsa) and Kcb = Ccsb / (Clcb + Ccsb), the effective potential of the pixel electrode pea is represented by Vs - VF + Kca × Vp, and the effective potential of the pixel electrode peb is represented by Vs - VF - Kcb × Vp.

As described above, according to the above liquid crystal display device, it is possible to display a gray level by controlling pixels so that each of them includes a high-luminance subpixel spa (bright subpixel) and a low-luminance subpixel spb (dark subpixel). As such, the viewing angle dependence of the gamma characteristic (e.g., excess brightness of a display screen) is improved.

According to the above divided-pixel system, the viewing angle dependence of the gamma characteristic is improved for each pixel by blending different gamma characteristics of the subpixels. However, the conventional configuration, in which each pixel includes only two subpixels, brought about only a limited effect.

The Japanese patent application publication no. JP 2006-026146, mentioned herein above, which has been also published as US 2003/0227429 A1, aims to reduce the viewing angle dependence of gamma characteristics in a normally black liquid crystal display. In this document, each pixel 10 has a first sub-pixel 10a and a second sub-pixel 10b which can apply mutually different voltages to their respective liquid crystal layers. The relationships ΔV12 (gk)>0 volts and ΔV12 (gk)>= ΔV12 (gk+1) are satisfied at least in a range 0 <gk<=n-1, if it is assumed that ΔV12=V1-V2, where ΔV12 is the difference between root-mean-square voltage V1 applied to the liquid crystal layer of the first sub-pixel 10a and root-mean-square voltage V2 applied to the liquid crystal layer of the second sub-pixel 10b.

US 5,668,613 discloses a liquid crystal display (LCD) which has a plurality of pixels with different storage capacitances. In particular, the contiguous pixels have different storage capacitances. The storage capacitor has two electrodes, one of which is a pixel electrode and the other of which is a storage electrode. Since the storage capacitance is proportional to the overlapping area of the pixel electrode and the storage electrode, the storage capacitance is controlled by controlling the overlapping area. The different storage capacitances enables the LCD to have improved viewing characteristics.

### Summary of Invention

Under the circumstances, the inventors of the present invention conceived of providing, for each pixel, a larger number of storage capacitor wires. In this way, it would be possible to control three or more subpixels included in each pixel so that they have respective different luminance levels. However, if the number of storage capacitor wires is increased, then a complicated configuration is needed so as to control potentials of the storage capacitor wires. In addition, the storage capacitor wires become likely to short-circuit, and an aperture ratio of each pixel is reduced.

The present invention has been made in view of the above problems, and an object of the present invention is to provide a liquid crystal display device employing a divided-pixel system, in which three or more subpixels included in each pixel are controlled so that they have respective different luminance levels, without increasing the number of storage capacitor wires. In this way, a gray level is displayed by making use of area coverage modulation of the subpixels.

The invention is defined by the subject matter of independent claim 1. Advantageous embodiments are subject to the dependent claims.

A liquid crystal display device of the present invention includes: scanning signal lines; first data signal lines and second data signal lines; pixels; and a plurality of storage capacitor wires whose potential is controllable, in a case where a direction in which the scanning signal lines extend is referred to as a row direction, the pixels being arrayed in matrix along the row direction and a column direction, each pixel array in the column direction being provided correspondingly with one of the first data signal lines and one of the second data signal lines, each of the pixels including four subpixels which are connected to identical one of the scanning signal lines, the pixel being associated correspondingly with two storage capacitor wires of the plurality of storage capacitor wires, two subpixels of the four subpixels defining respective capacitances with one of the two storage capacitor wires, one of the two subpixels being connected to the one of the first data signal lines, and an other one of the two subpixels being connected to the one of the second data signal lines, other two subpixels of the four subpixels defining respective capacitances with an other one of the two storage capacitor wires, and one of the other two subpixels being connected to the one of the first data signal lines, and an other one of the other two subpixels being connected to the one of the second data signal lines.

According to the above configuration, it is possible to control the four subpixels included in the each of the pixels so that the four subpixels have respective different luminance levels. This is achieved by (i) supplying respective different signal potentials (for example, the signal potentials are identical in absolute value but opposite in direction from a reference potential to each other) to the one of the first data signal lines and the one of the second data signal lines, and (ii) individually controlling the two storage capacitor wires. This makes it possible to display a gray level by making use of area coverage modulation of the four subpixels having respective different luminance levels, without increasing the number of storage capacitor wires (i.e., without providing a complicated configuration for controlling a potential of each of the storage capacitor wires). As such, it is possible to reduce viewing angle dependence of a gamma characteristic (e.g., excess brightness of a display screen).

A liquid crystal display of the present invention includes: scanning signal lines; first data signal lines and second data signal lines; pixels; and a plurality of storage capacitor wires whose potential is controllable, in a case where a direction in which the scanning signal lines extend is referred to as a row direction, the pixels being arrayed in matrix along the row direction and a column direction, each pixel array in the column direction being provided correspondingly with one of the first data signal lines and one of the second data signal lines, each of the pixels including three subpixels which are connected to identical one of the scanning signal lines, the pixel being associated correspondingly with two storage capacitor wires of the plurality of storage capacitor wires, two subpixels of the three subpixels defining respective capacitances with one of the two storage capacitor wires, one of the two subpixels being connected to the one of the first data signal lines, and an other one of the two subpixels being connected to the one of the second data signal lines, an other subpixel of the three subpixels defining a capacitance with an other one of the two storage capacitor wires, and the other subpixel being connected to the one of the first data signal lines or the one of the second data signal lines.

According to the above configuration, it is possible to control the three subpixels included in the each of the pixels so that the three subpixels have respective different luminance levels. This is achieved by (i) supplying respective different signal potentials (for example, the signal potentials are identical in absolute value but opposite in direction from a reference potential to each other) to the one of the first data signal lines and the one of the second data signal lines, and (ii) individually controlling the two storage capacitor wires. This makes it possible to display a gray level by making use of area coverage modulation of the three subpixels having respective different luminance levels, without increasing the number of storage capacitor wires (i.e., without providing a complicated configuration for controlling a potential of each of the storage capacitor wires). As such, it is possible to reduce viewing angle dependence of a gamma characteristic (e.g., excess brightness of a display screen).

The liquid crystal display device of the present invention can be configured such that each pair of the first data signal lines and the second data signal lines receive signal potentials corresponding to identical data but having respective different polarities. According to the configuration, it is possible to simplify data processing and an arithmetic circuit configuration therefor, as compared to a configuration in which the each pair of the first data signal lines and the second data signal lines receive signal potentials corresponding to respective different gray scale levels.

The liquid crystal display device of the present invention is configured such that a potential level of each storage capacitor wire shifts after scanning of the scanning signal line that is connected to the subpixel or subpixels facing this storage capacitor wire, the potential level of each storage capacitor wire shifting at least once after the scanning in a frame in which the scanning is carried out.

The liquid crystal display device of the present invention can be configured such that potential levels of the two storage capacitor wires associated with the same pixel shift by respective different amounts. Such a liquid crystal display device can be so configured that the two storage capacitor wires associated with the same pixel define substantially identical capacitances with the subpixels corresponding thereto.

The liquid crystal display device of the present invention can be configured such that potential levels of the two storage capacitor wires associated with the same pixel shift by a same amount. Such a liquid crystal display device can be so configured that the two storage capacitor wires associated with the same pixel define different capacitances one of which is larger than the other, with the subpixels corresponding thereto.

The liquid crystal display device of the present invention can be configured such that the potential levels of the two storage capacitor wires associated with the same pixel shift in respective opposite directions at a first timing after the scanning.

The liquid crystal display device of the present invention can be configured such that the signal potentials are reversed in polarity (i) every or every plural horizontal scanning periods or (ii) every vertical scanning period.

The liquid crystal display device of the present invention can be configured such that each pixel shares one of the plurality of storage capacitor wires with its neighboring pixel adjacent to this pixel in the column direction so that one of the subpixels of this pixel and one of the subpixels of the neighboring pixel define respective capacitances with this storage capacitor wire. This makes it possible to reduce the number of the storage capacitor wires.

The liquid crystal display device of the present invention can be configured such that the two storage capacitor wires associated with the same pixel shift their potential levels at an identical timing. Alternatively, the liquid crystal display device of the present invention can be configured such that the two storage capacitor wires associated with the same pixel shift their potential levels at respective timings different by one horizontal period from each other.

The liquid crystal display device of the present invention can be configured such that the potential level of each of the plurality of storage capacitor wires changes so that the potential level is periodically switched between two levels, and potential phases of odd-numbered storage capacitor wires are subsequently shifted in a same direction by a same amount, whereas potential phases of even-numbered storage capacitor wires are subsequently shifted in a same direction by a same amount, where a first storage capacitor wire is one, being positioned upstream in a scanning direction, of two storage capacitor wires corresponding to that pixel, in each pixel array, which is first to receive data among the pixels of the pixel array.

The liquid crystal display device of the present invention can be configured such that the potential phases of the odd-numbered storage capacitor wires are subsequently shifted in a same direction by two horizontal scanning periods, whereas the potential phases of the even-numbered storage capacitor wires are subsequently shifted in a same direction by two horizontal scanning periods.

The liquid crystal display device of the present invention can be configured such that a potential level of first one of the plurality of storage capacitor wires and a potential level of second one of the plurality of storage capacitor wires shift in respective opposite directions at an identical timing.

The liquid crystal display device of the present invention can be configured such that each of the two levels remains constant over a plurality of horizontal scanning periods.

The liquid crystal display device of the present invention is configured such each of the plurality of storage capacitor wires performs a potential level shifting at a first timing after the scanning in such a manner that the level shifting is different between successive frames in terms of at least one of (i) a direction in which the potential level of the each of the plurality of storage capacitor wires shifts and (ii) an amount by which the potential level of the each of the plurality of storage capacitor wires shifts. The liquid crystal display device of the present invention is configured such that the amount by which the potential level shifts at the first timing can either be large or small, and the direction in which the potential level shifts at the first timing can either be positive or negative, and four types of level shift pattern, obtained by combining (i) the amount which is the large or the small and (ii) the direction which is the positive or the negative, are carried out in respective successive four frames in the potential level shiftings at the first timing after the scanning.

The liquid crystal display device of the present invention can be configured such that each of the pixels includes the four subpixels which are arrayed in matrix along the row direction and the column direction, in such a way that two of the four subpixels are arrayed along the row direction on one side of corresponding one of the scanning signal lines, while other two of the four subpixels are arrayed along the row direction on an other side of the corresponding one of the scanning signal lines, two of subpixels arrayed along the column directions are both connected to corresponding one of the first data signal lines or to corresponding one of the second data signal lines, while two of the subpixels arrayed along the row direction define respective capacitances with identical one of the plurality of storage capacitor wires, and two of the subpixels adjacent to each other in the column direction with no scanning signal line therebetween define respective capacitances with identical one of the plurality of storage capacitor wires. Such a liquid crystal display device can be configured such that, in one of two of the pixels adjacent to each other in the column direction, a first subpixel and a second subpixel, which are arrayed along the column direction, are connected to corresponding one of the first data signal lines, while a third subpixel and a fourth subpixel, which are arrayed along the column direction, are connected to corresponding one of the second data signal lines, and in an other one of the two of the pixels, two subpixels, which are included in a corresponding subpixel array including the first subpixel and the second subpixel, are connected to the corresponding one of the first data signal lines, while two subpixels, which are included in a corresponding subpixel array including the third subpixel and the fourth subpixel, are connected to the corresponding one of the second data signal lines. Alternatively, such a liquid crystal display device can be configured such that, in one of two of the pixels adjacent to each other in the column direction, a first subpixel and a second subpixel, which are arrayed along the column direction, are connected to corresponding one of the first data signal lines, while a third subpixel and a fourth subpixel, which are arrayed along the column direction, are connected to corresponding one of the second data signal lines, and in an other one of the two of the pixels, two subpixels, which are included in a corresponding subpixel array including the first subpixel and the second subpixel, are connected to the corresponding one of the second data signal lines, while two subpixels, which are included in a corresponding subpixel array including the third subpixel and the fourth subpixel, are connected to the corresponding one of the first data signal lines.

The liquid crystal display device of the present invention can be configured such that each of the pixels includes the three subpixels, in such a way that two of the three subpixels are arrayed along the row direction on one side of corresponding one of the scanning signal lines, while an other one of the three subpixels is provided on an other side of the corresponding one of the scanning signal lines, two of subpixels arrayed along the row direction define respective capacitances with identical one of the plurality of storage capacitor wires, and two of the subpixels adjacent to each other in the column direction with no scanning signal line therebetween define respective capacitances with identical one of the plurality of storage capacitor wires. Such a liquid crystal display device can be configured such that, in one of two of the pixels adjacent to each other, a first subpixel and a third subpixel, which are arrayed along the row direction, define respective capacitances with identical one of the plurality of storage capacitor wires, while a second subpixel defines a capacitance with another one of the plurality of storage capacitor wires, and in an other one of the two of the pixels, two subpixels arrayed along the row direction define respective capacitances with the another one of the plurality of storage capacitor wires. Alternatively, such a liquid crystal display device can be configured such that, in one of two of the pixels adjacent to each other, a first subpixel and a third subpixel, which are arrayed along the row direction, define respective capacitances with identical one of the plurality of storage capacitor wires, while a second subpixel defines a capacitance with another one of the plurality of storage capacitor wires, and in an other one of the two of the pixels, a pixel, which is other than two subpixels arrayed along the row direction, defines a capacitance with the another one of the plurality of storage capacitor wires.

The liquid crystal display device of the present invention can be configured such that, in a case where a first storage capacitor wire is one, being positioned upstream in a scanning direction, of two storage capacitor wires corresponding to a pixel, in each pixel array, which is first to receive data among pixels of the pixel array, a potential level of each odd-numbered storage capacitor wire changes so that the potential level is periodically switched between two levels, and potential phases of the odd-numbered storage capacitor wires subsequently shift in a same direction by a same amount, while a potential level of each even-numbered storage capacitor wire remains constant, or the potential level of each even-numbered storage capacitor wire changes so that the potential level is periodically switched between two levels, and potential phases of the even-numbered storage capacitor wires subsequently shift in a same direction by a same amount, while the potential level of each odd-numbered storage capacitor wire substantially remains constant.

The liquid crystal display device of the present invention can be configured such that each pixel array is provided correspondingly with one of the first data signal lines and one of the second data signal lines, and each pixel array is such that (i) the first data signal line of a pixel array and (ii) the second data signal line of a neighboring pixel array adjacent to this pixel array are adjacent to each other with no pixel array therebetween, and receive signal potentials having respective different polarities. Alternatively, the liquid crystal display device can be configured such that the one of the first data signal lines and the one of the second data signal lines receive signal potentials having an identical polarity.

The liquid crystal display device of the present invention can be configured such that each subpixel includes a pixel electrode and a transistor, the transistor is connected to (i) corresponding one of the scanning signal lines and (ii) corresponding one of the first data signal lines or corresponding one of the second data signal lines, and the pixel electrode or an electrode electrically connected with the pixel electrode defines a capacitance with corresponding one of the storage capacitor wires.

The liquid crystal display device of the present invention can be configured such that, in each of the pixels, a gap between (i) one pixel electrode included in one of two subpixels arrayed along the row direction and (ii) another pixel electrode included in an other one of the two subpixels arrayed along the row direction serves as an alignment control structure. Such a liquid crystal display device can be configured such that the gap is in a V shape as seen in the row direction.

A potential of each of the plurality of storage capacitor wires is controlled by, for example, a storage capacitor wire signal (CS signal) supplied to the each of the plurality of storage capacitor wires. In this case, the potential of each of the plurality of storage capacitor wires can be referred to as a level (potential) of the storage capacitor wire signal.

An active matrix substrate of the present invention includes: scanning signal lines; first data signal lines and second data signal lines; pixel regions; and a plurality of storage capacitor wires, in a case where a direction in which the scanning signal lines extend is referred to as a row direction, the pixel regions being arrayed in matrix along the row direction and a column direction, each pixel region array in the column direction being provided correspondingly with one of the first data signal lines and one of the second data signal lines, each of the pixel regions including four pixel electrodes which are connected to identical one of the scanning signal lines via respective transistors, the pixel region being associated correspondingly with two storage capacitor wires of the plurality of storage capacitor wires, two pixel electrodes of the four pixel electrodes defining respective capacitances with one of the two storage capacitor wires, one of the two pixel electrodes being connected to the one of the first data signal lines via corresponding one of the transistors, and an other one of the two pixel electrodes being connected to the one of the second data signal lines via corresponding one of the transistors, other two pixel electrodes of the four pixel electrodes defining respective capacitances with an other one of the two storage capacitor wires, and one of the other two pixel electrodes being connected to the one of the first data signal lines via corresponding one of the transistors, and an other one of the other two pixel electrodes being connected to the one of the second data signal lines via corresponding one of the transistors.

An active matrix substrate of the present invention includes: scanning signal lines; first data signal lines and second data signal lines; pixel regions; and a plurality of storage capacitor wires, in a case where a direction in which scanning signal lines extend is referred to as a row direction, the pixel regions being arrayed in matrix along the row direction and a column direction, each pixel region array in the column direction being provided correspondingly with one of the first data signal lines and one of the second data signal lines, each of the pixel regions including three pixel electrodes which are connected to identical one of the scanning signal lines via respective transistors, the pixel region being associated correspondingly with two storage capacitor wires of the plurality of storage capacitor wires, two pixel electrodes of the three pixel electrodes defining respective capacitances with one of the two storage capacitor wires, one of the two pixel electrodes being connected to the one of the first data signal lines via corresponding one of the transistors, and an other one of the two pixel electrodes being connected to the one of the second data signal lines via corresponding one of the transistors, an other pixel electrode of the three pixel electrodes defining a capacitance with an other one of the two storage capacitor wires, and the other pixel electrode being connected to the one of the first data signal lines or the one of the second data signal lines via corresponding one of the transistors.

A liquid crystal panel of the present invention includes: any of the above active matrix substrates; and a substrate including a common electrode. A liquid crystal display unit of the present invention includes: the above liquid crystal panel; and a driver. A television receiver of the present invention includes: any of the above liquid crystal display devices; and a tuner section for receiving television broadcasting.

As so far described, according to the liquid crystal display device of the present invention, it is possible to control three or more subpixels included in each of the pixels so that the subpixels have respective different luminance levels, without increasing the number of storage capacitor wires (i.e., without providing a complicated configuration for controlling a potential of each of the storage capacitor wires). Accordingly, it is possible to display a gray level by making use of area coverage modulation of the three or more subpixels. As such, it is possible to reduce viewing angle dependence of a gamma characteristic (e.g., excess brightness of a display screen).

### Brief Description of Drawings

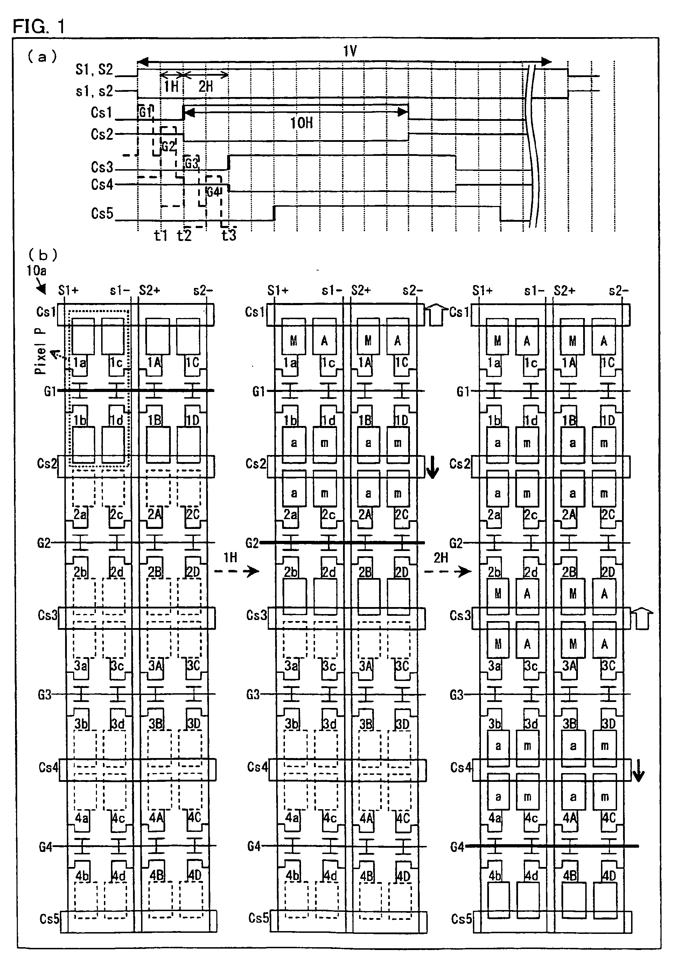

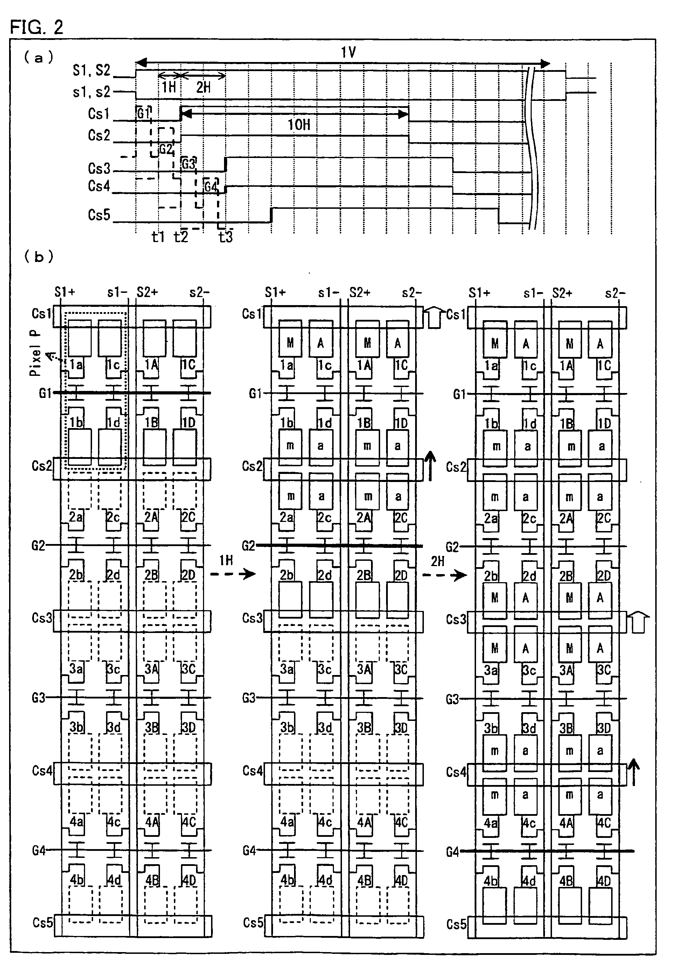

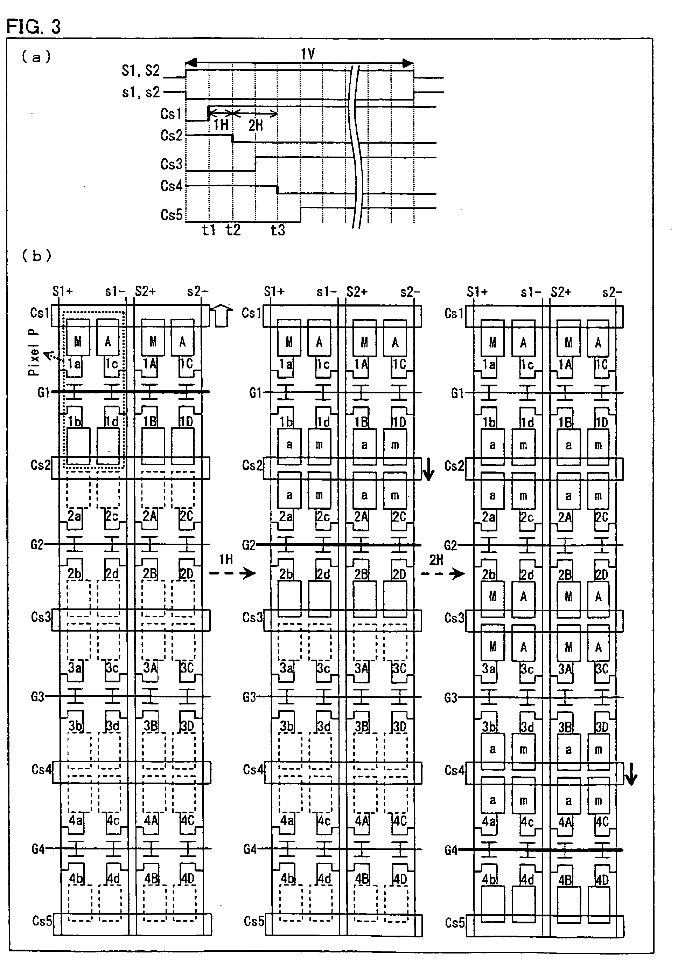

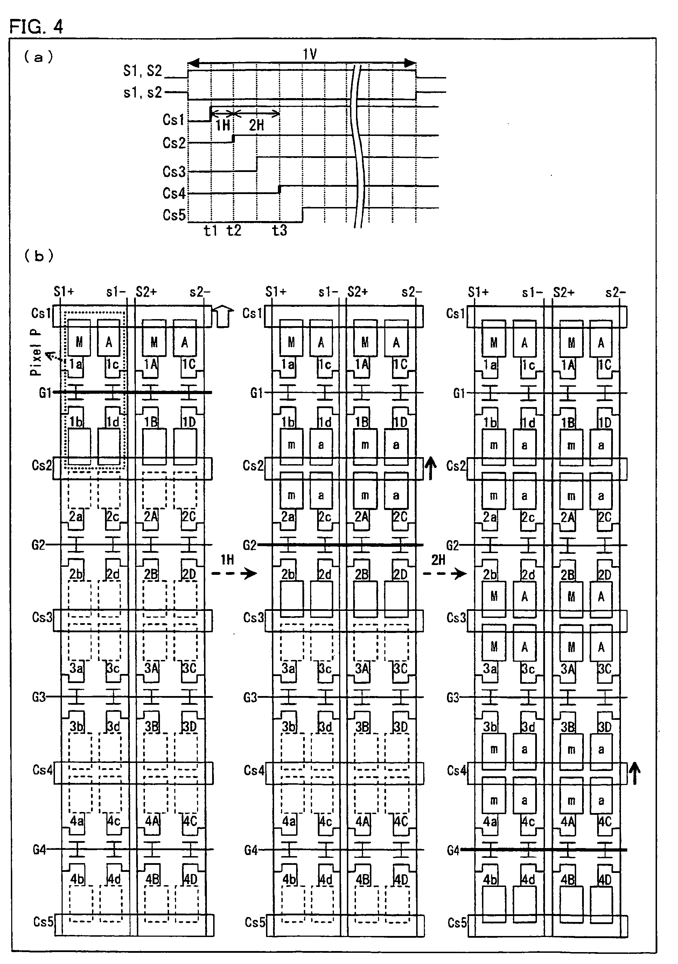

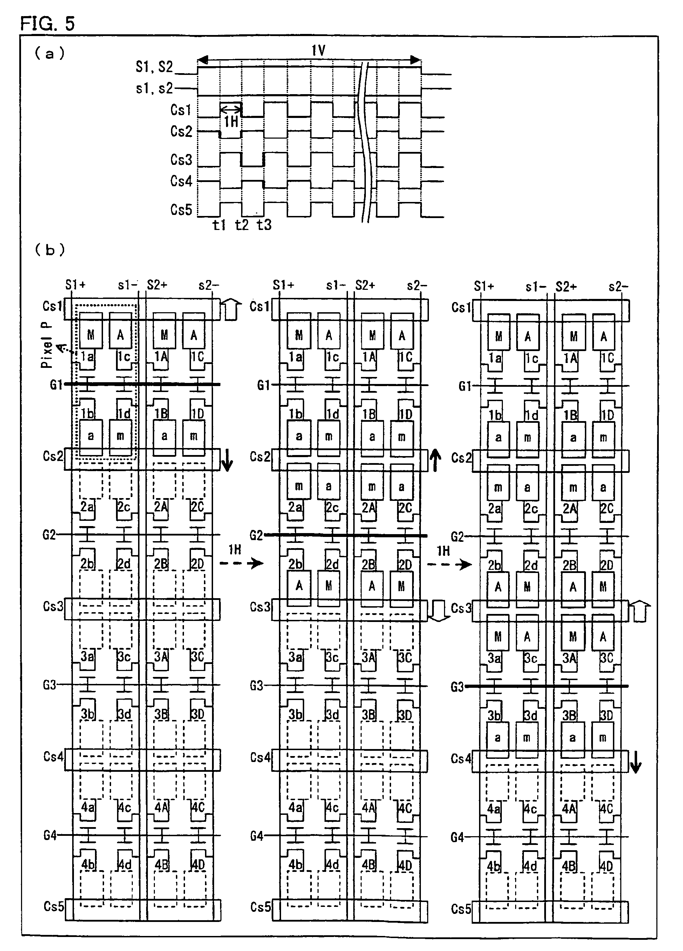

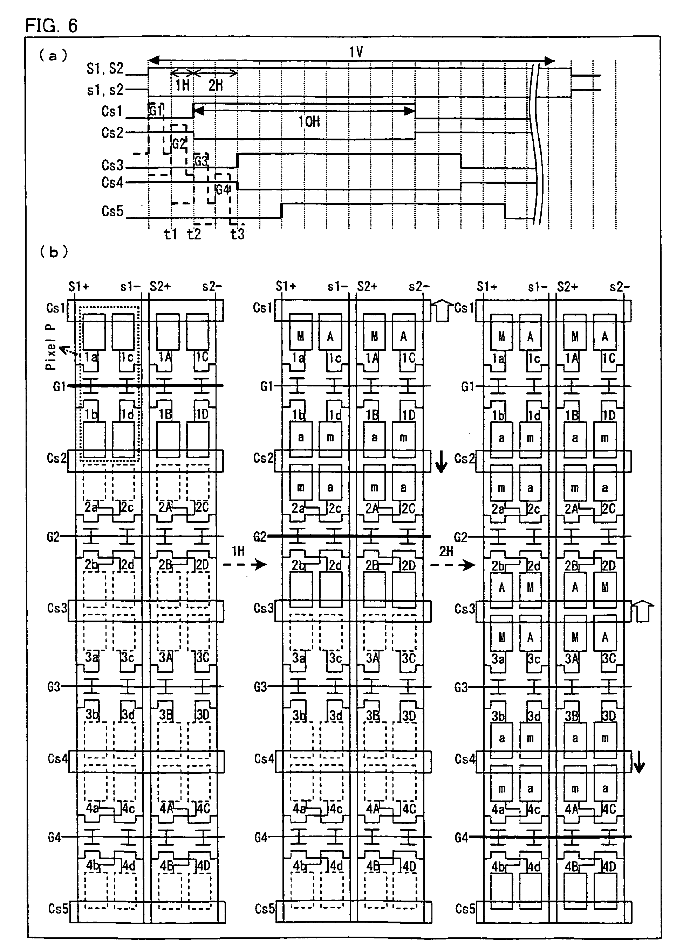

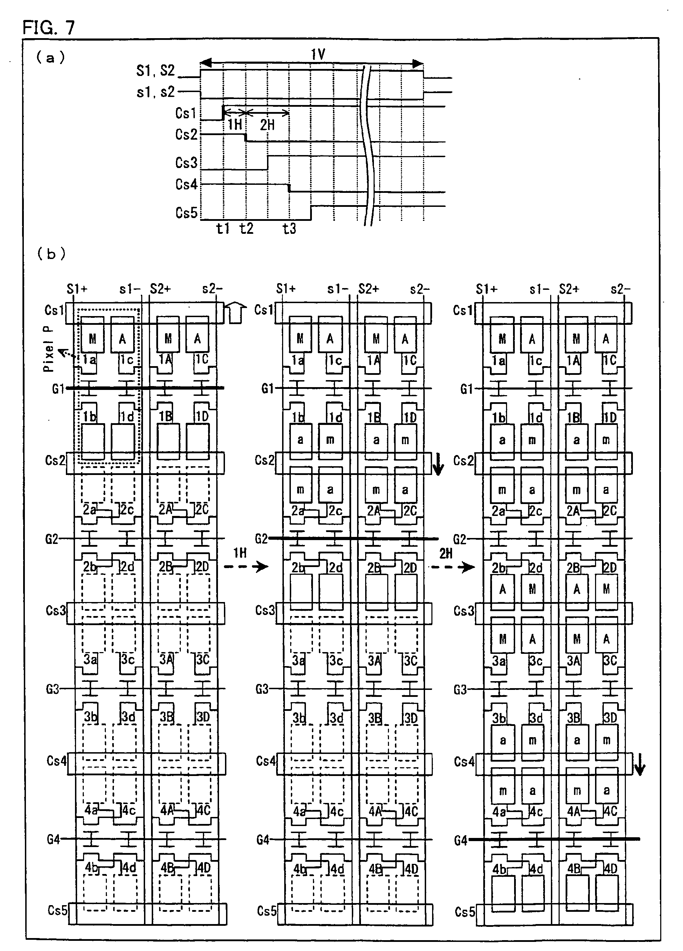

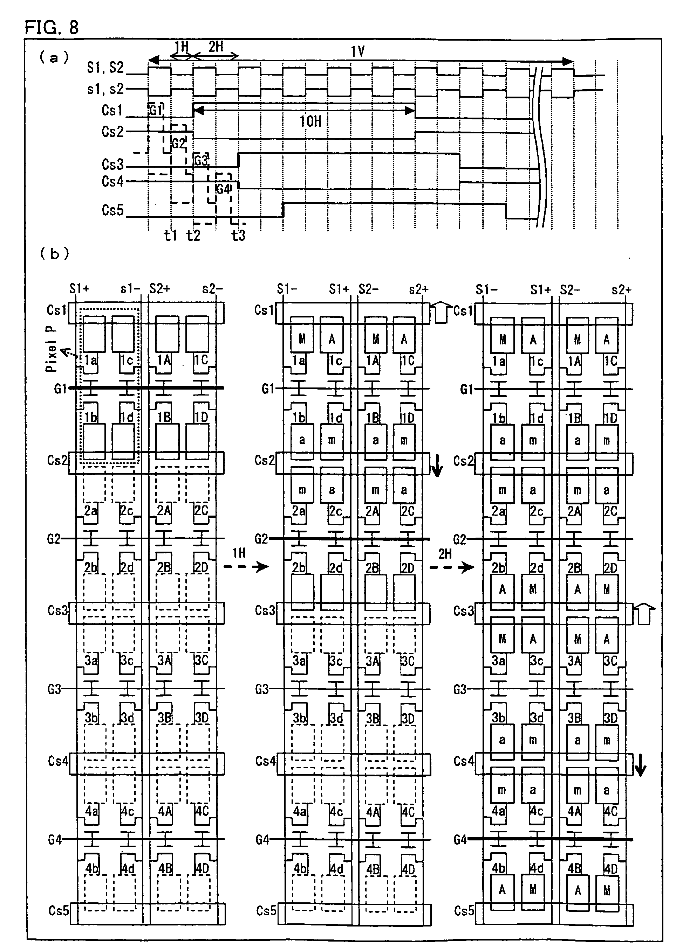

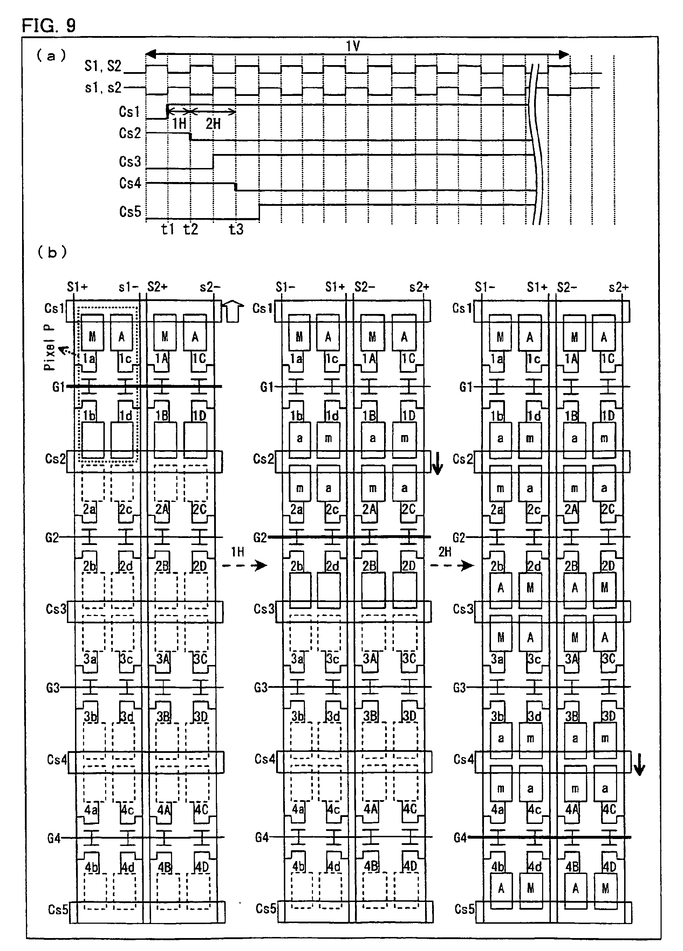

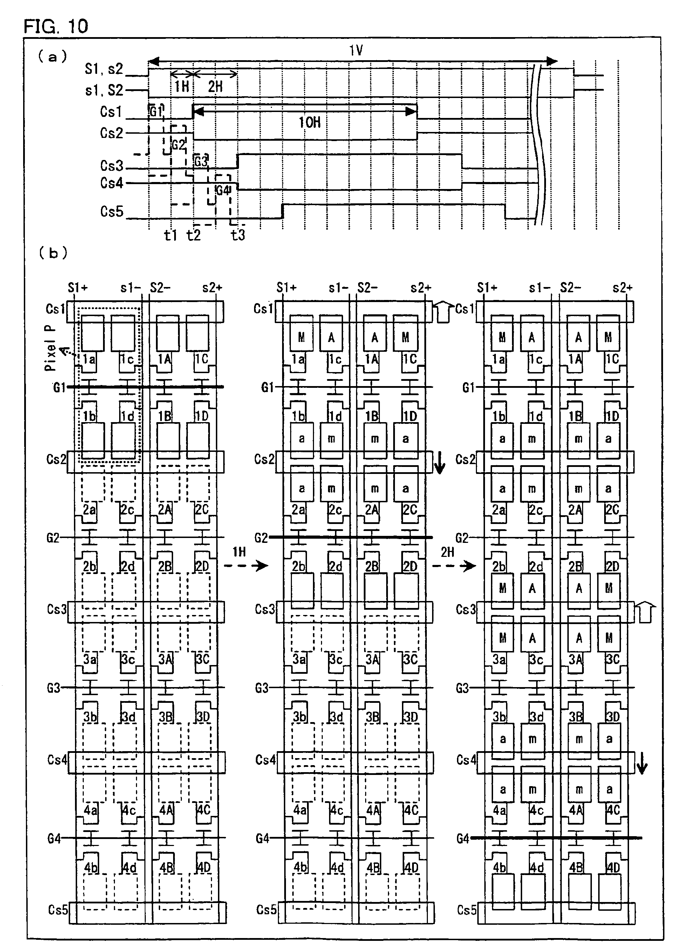

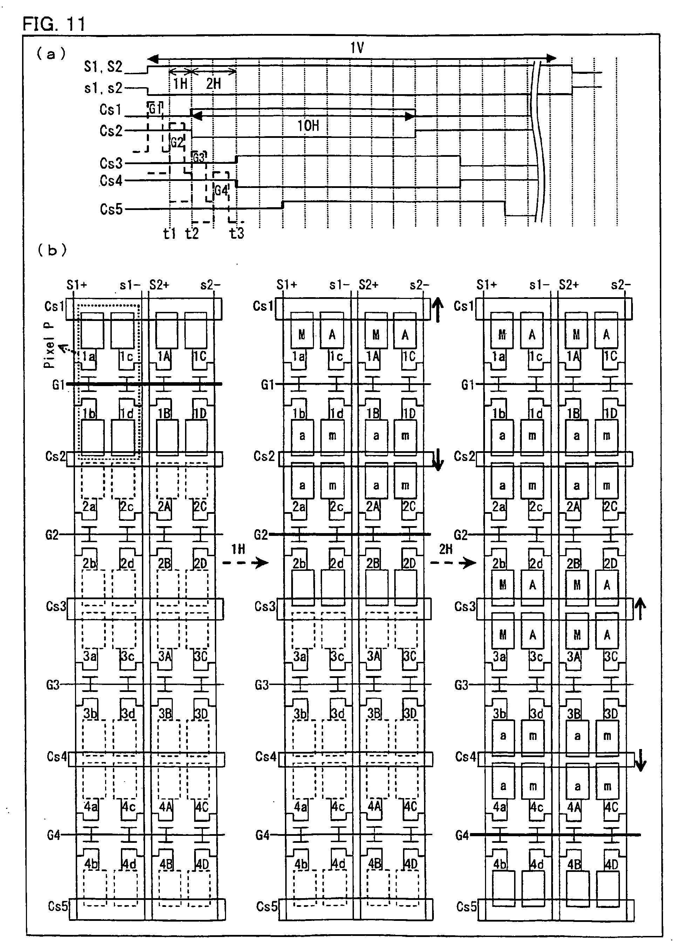

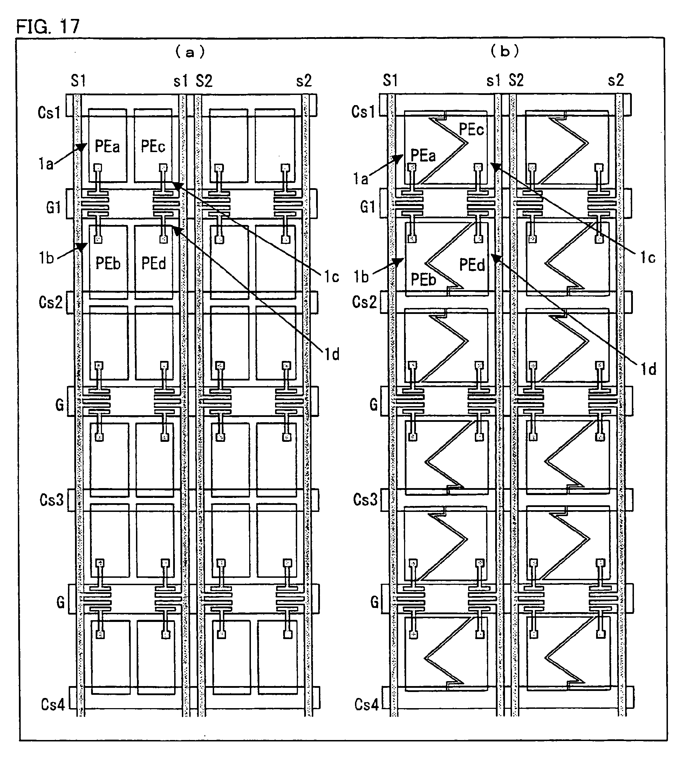

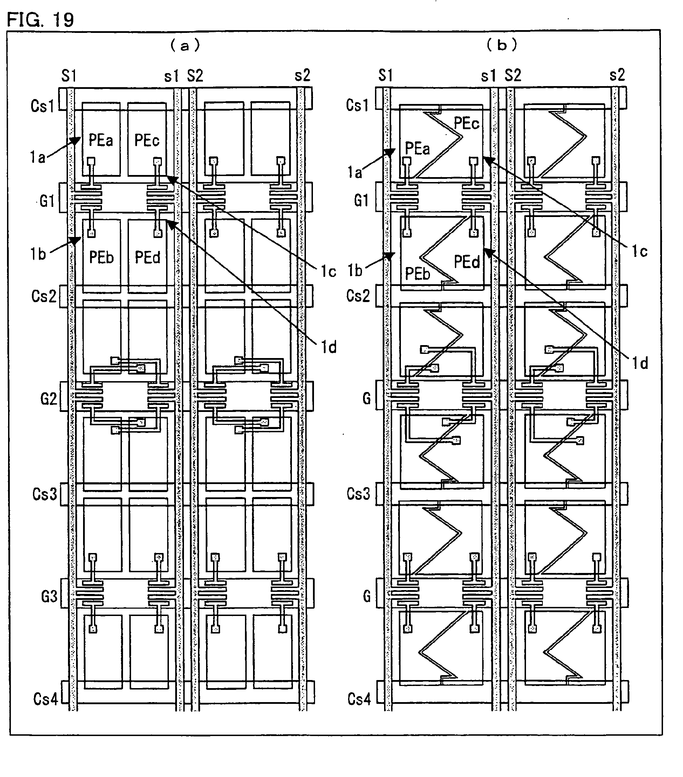

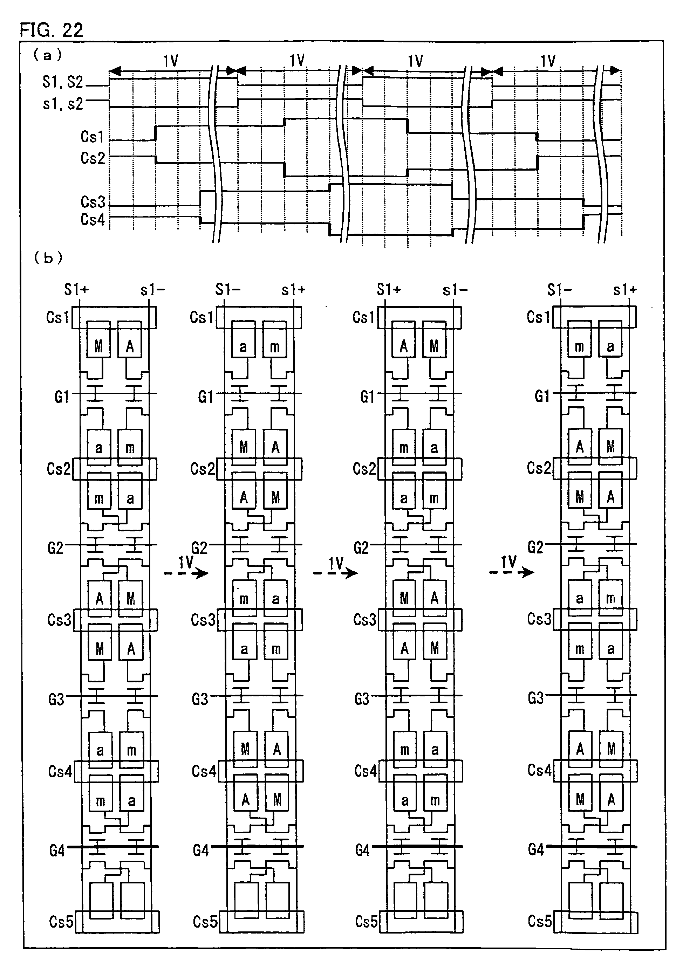

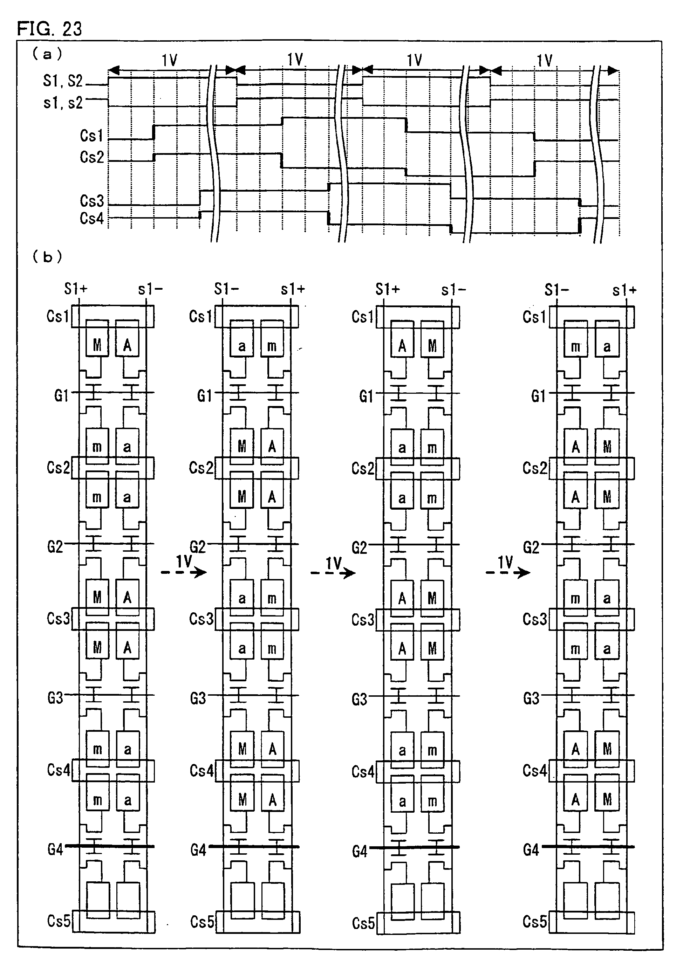

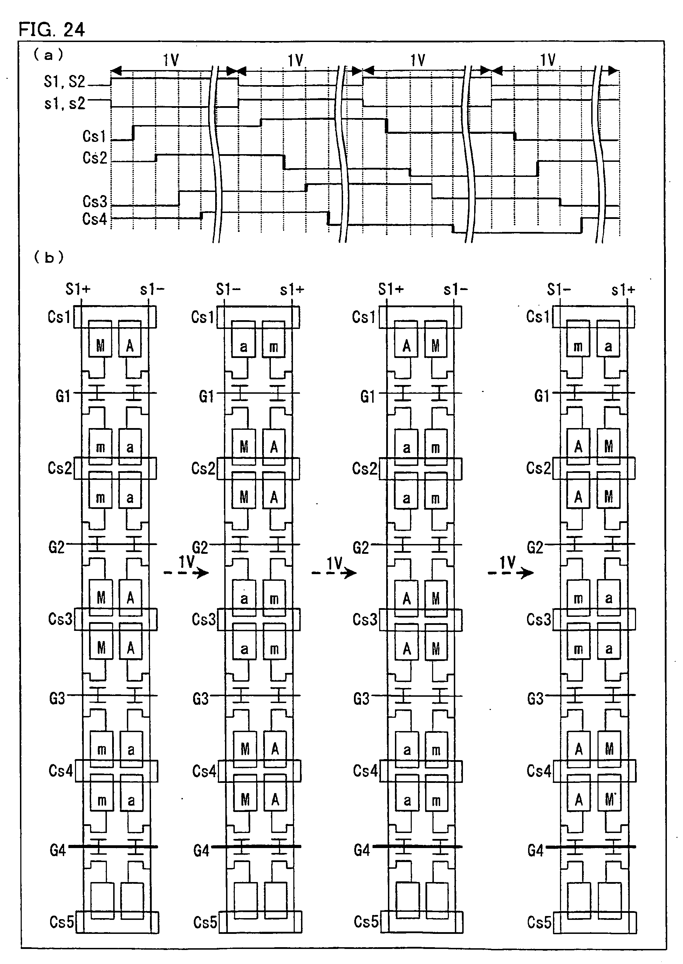

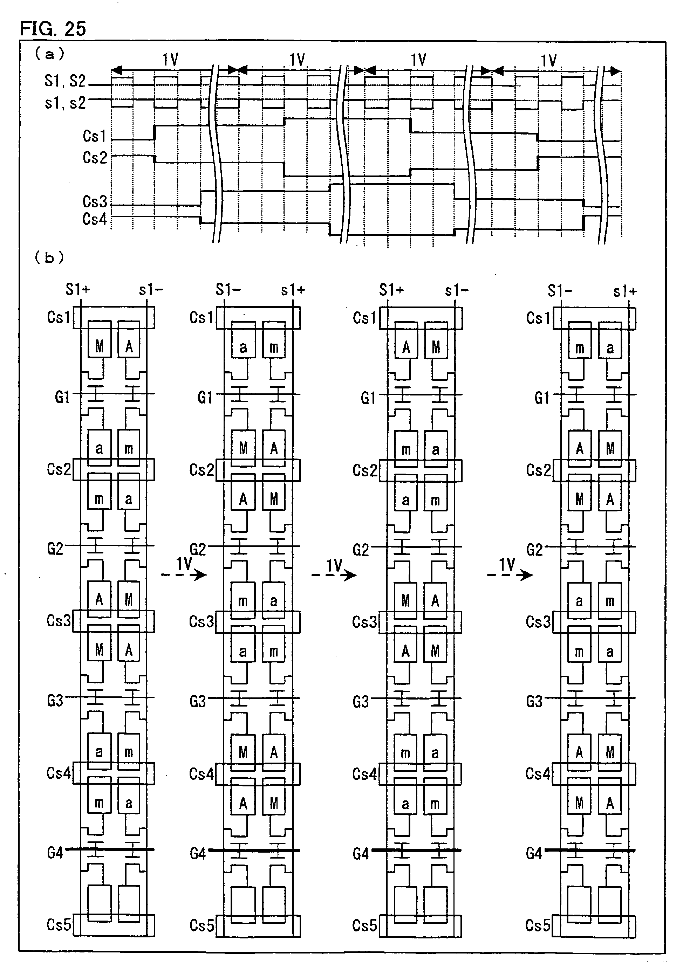

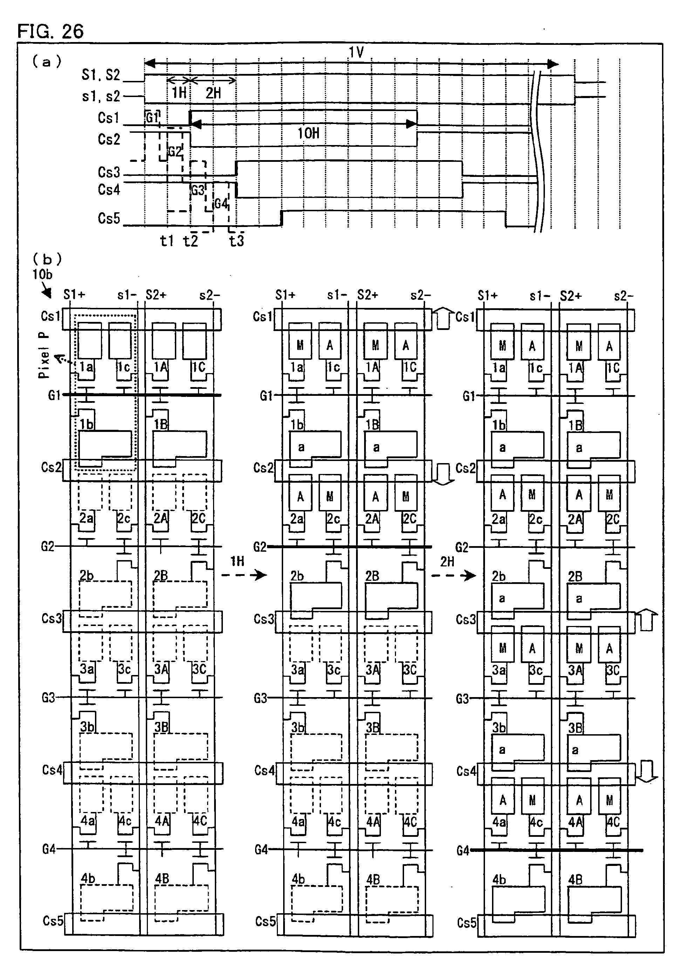

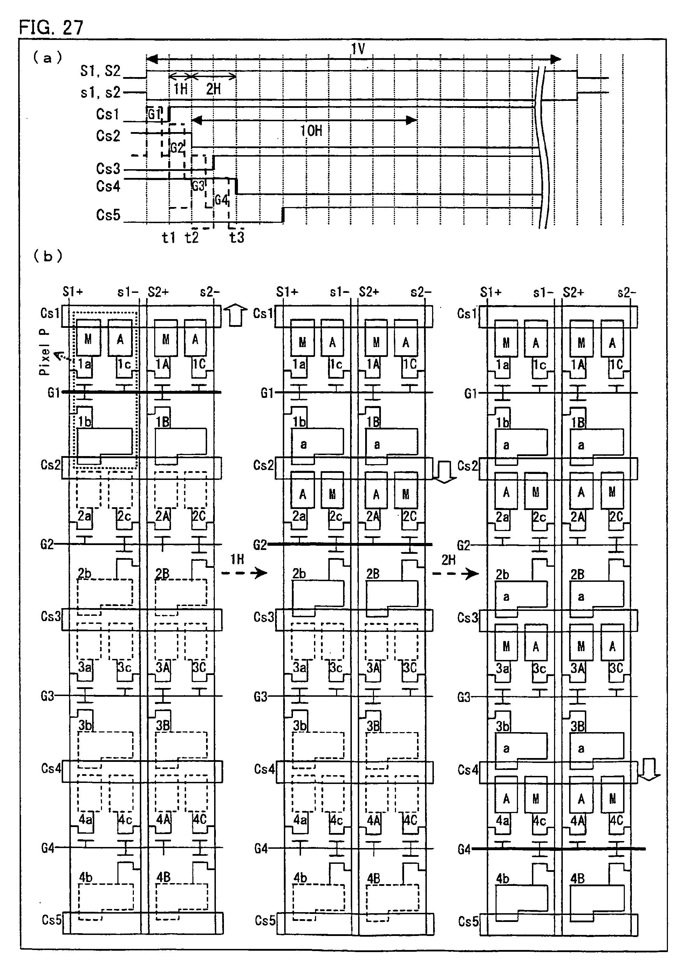

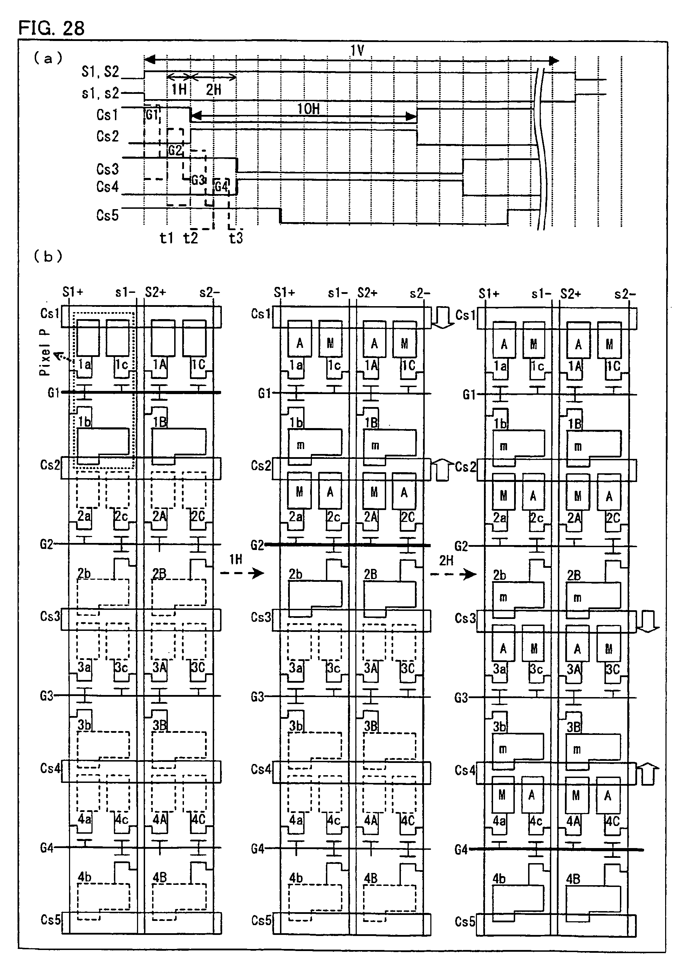

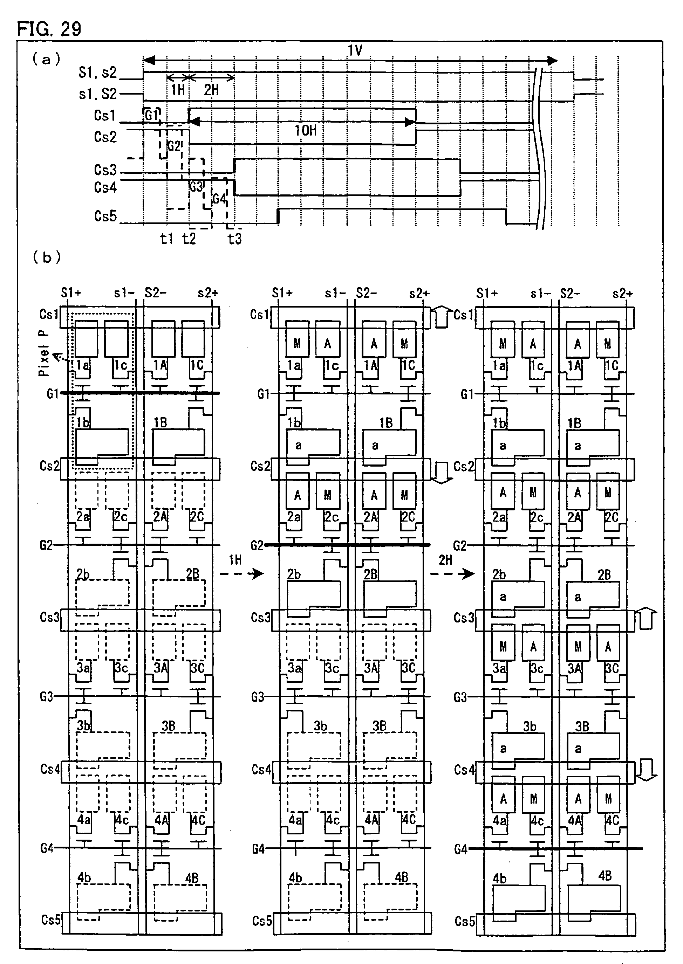

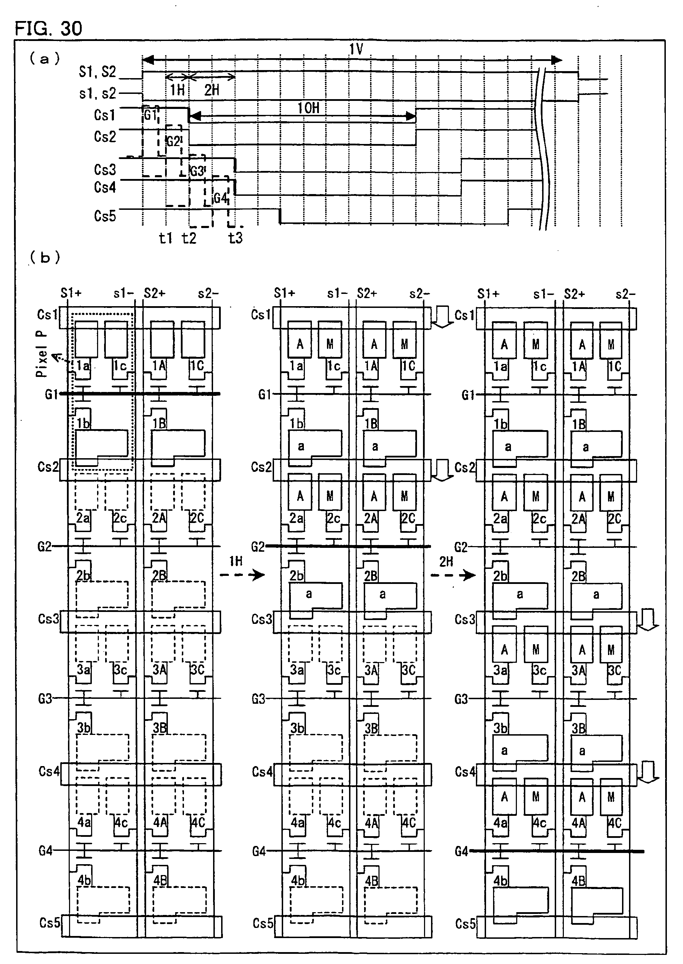

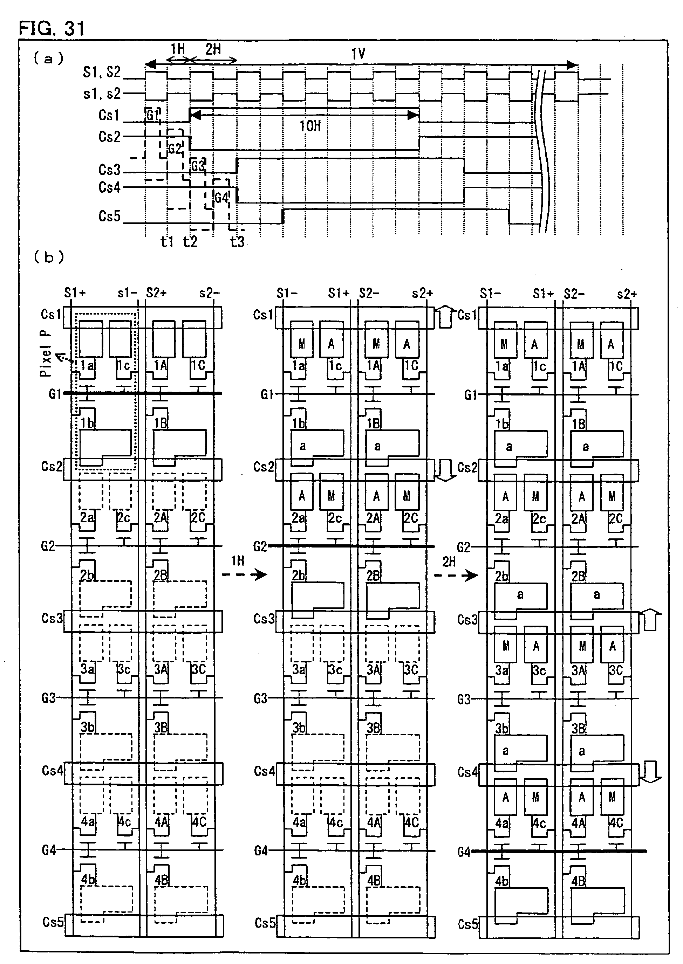

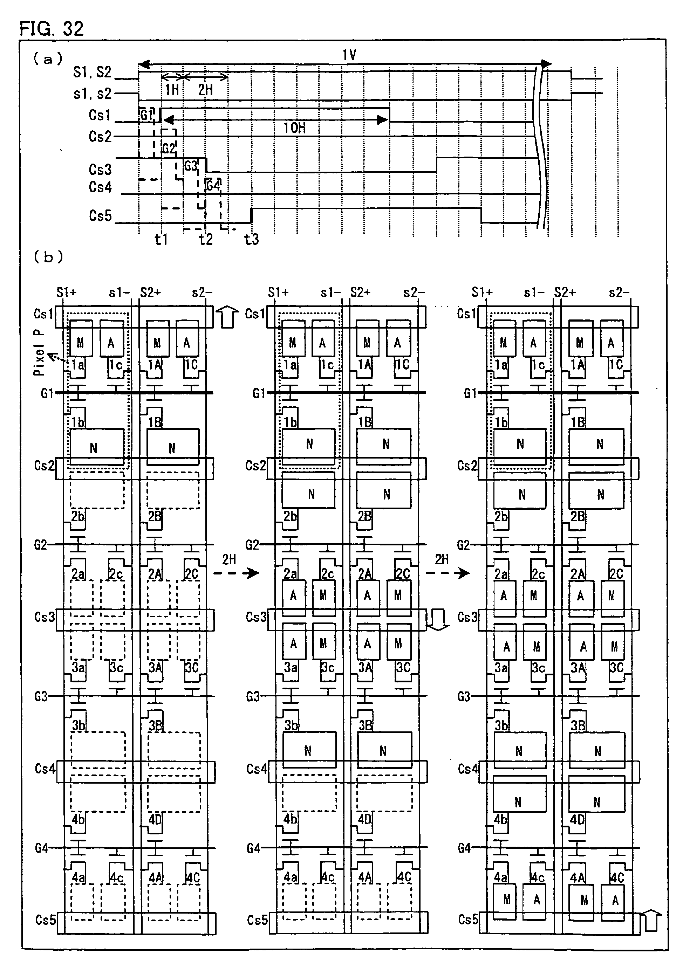

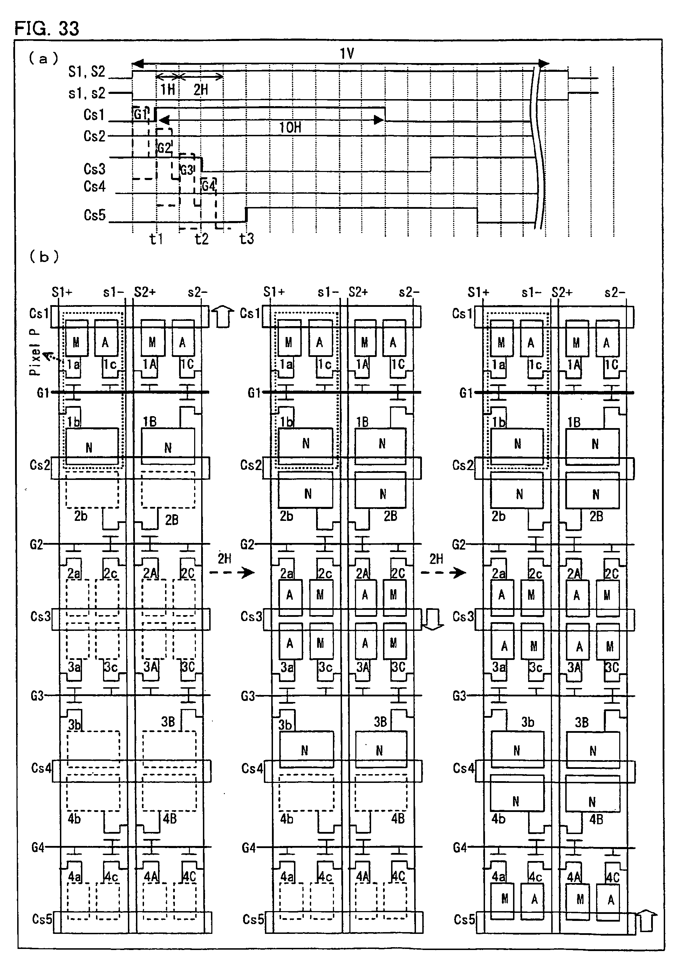

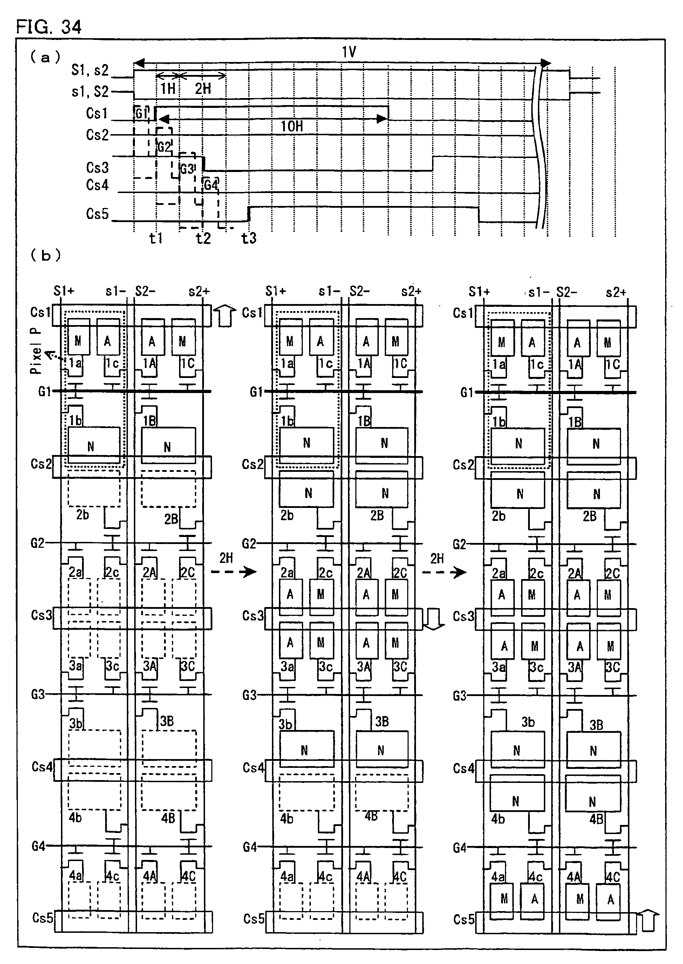

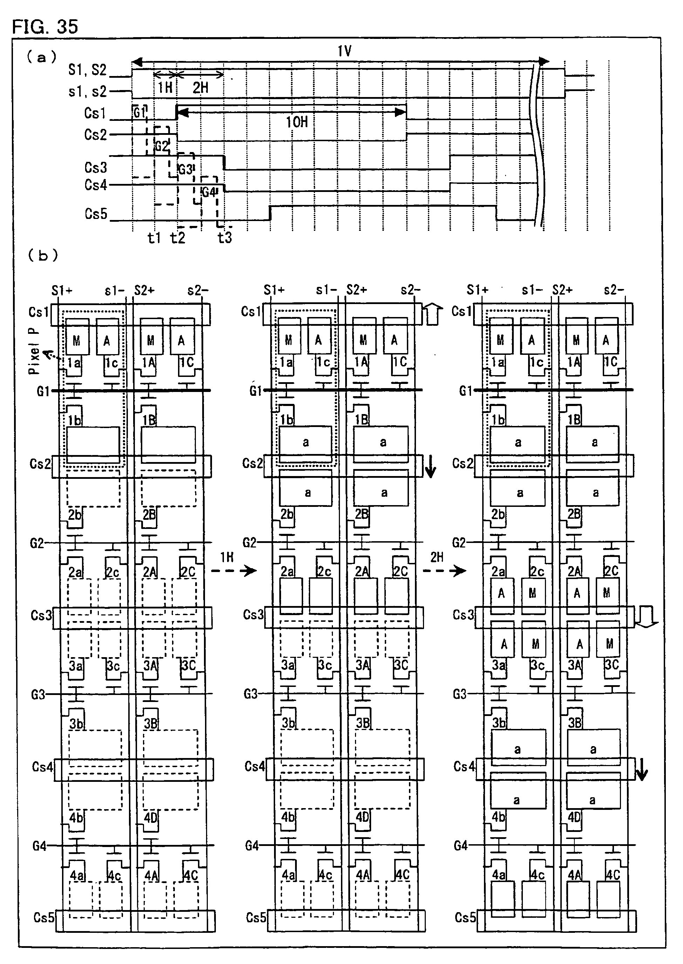

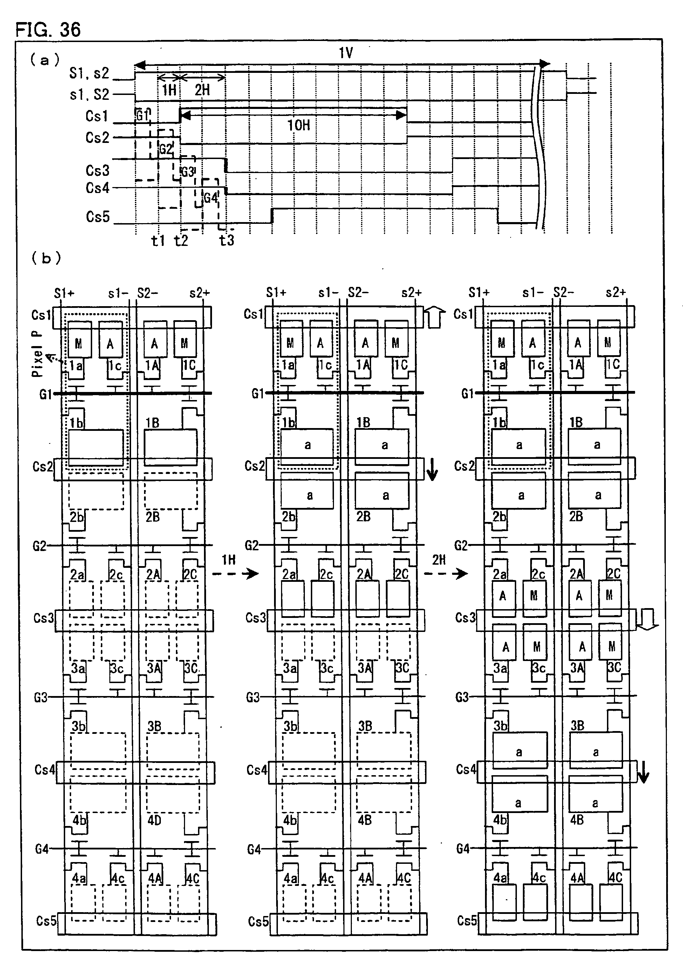

Fig. 1
   (a) of Fig. 1 is a view schematically illustrating a display section of a liquid crystal display device according to Embodiment 1. (b) of Fig. 1 is a view schematically illustrating how the display section is not driven according to the invention.
Fig. 2
   (a) of Fig. 2 is a view schematically illustrating a display section of the liquid crystal display device according to Embodiment 1. (b) of Fig. 2 is a view schematically illustrating how the display section is not driven according to the invention.
Fig. 3
   (a) of Fig. 3 is a view schematically illustrating a display section of the liquid crystal display device according to Embodiment 1. (b) of Fig. 3 is a view schematically illustrating how the display section is not driven according to the invention.
Fig. 4
   (a) of Fig. 4 is a view schematically illustrating a display section of the liquid crystal display device according to Embodiment 1. (b) of Fig. 4 is a view schematically illustrating how the display section is not driven according to the invention.
Fig. 5
   (a) of Fig. 5 is a view schematically illustrating a display section of the liquid crystal display device according to Embodiment 1. (b) of Fig. 5 is a view schematically illustrating how the display section is not driven according to the invention.
Fig. 6
   (a) of Fig. 6 is a view schematically illustrating a display section of the liquid crystal display device according to Embodiment 1. (b) of Fig. 6 is a view schematically illustrating how the display section is not driven according to the invention.
Fig. 7
   (a) of Fig. 7 is a view schematically illustrating a display section of the liquid crystal display device according to Embodiment 1. (b) of Fig. 7 is a view schematically illustrating how the display section is not driven according to the invention.
Fig. 8
   (a) of Fig. 8 is a view schematically illustrating a display section of the liquid crystal display device according to Embodiment 1. (b) of Fig. 8 is a view schematically illustrating how the display section is not driven according to the invention.
Fig. 9
   (a) of Fig. 9 is a view schematically illustrating a display section of the liquid crystal display device according to Embodiment 1. (b) of Fig. 9 is a view schematically illustrating how the display section is not driven according to the invention.
Fig. 10
   (a) of Fig. 10 is a view schematically illustrating a display section of the liquid crystal display device according to Embodiment 1. (b) of Fig. 10 is a view schematically illustrating how the display section is not driven according to the invention.
Fig. 11
   (a) of Fig. 11 is a view schematically illustrating a display section of the liquid crystal display device according to Embodiment 1. (b) of Fig. 11 is a view schematically illustrating how the display section is not driven according to the invention.
Fig. 12

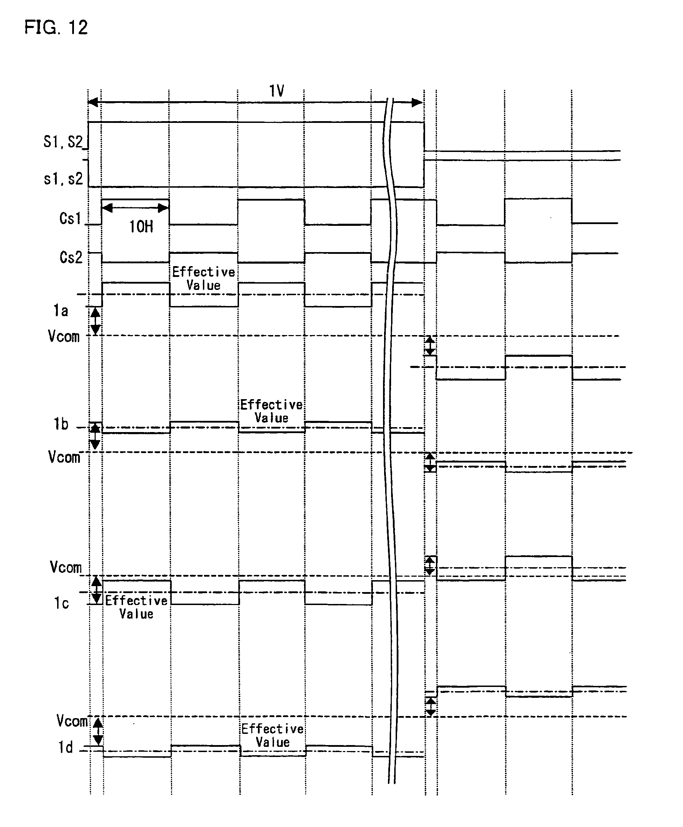

   Fig. 12 is a timing diagram indicating how the display section of (a) and (b) of Fig. 1 is not driven according to the invention.
Fig. 13

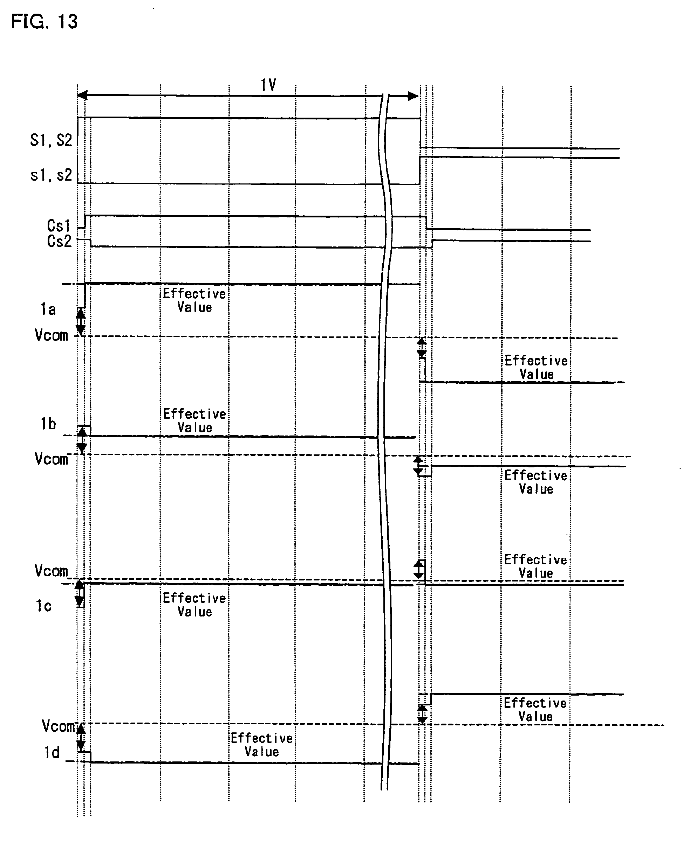

   Fig. 13 is a timing diagram indicating how the display section of (a) and (b) of Fig. 3 is not driven according to the invention.
Fig. 14

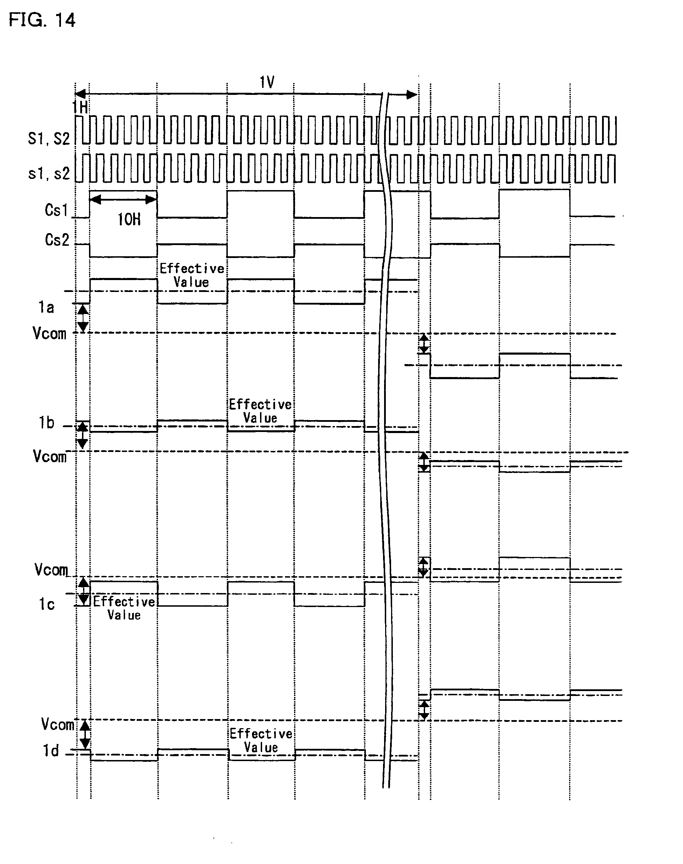

   Fig. 14 is a timing diagram indicating how the display section of (a) and (b) of Fig. 8 is not driven according to the invention.
Fig. 15

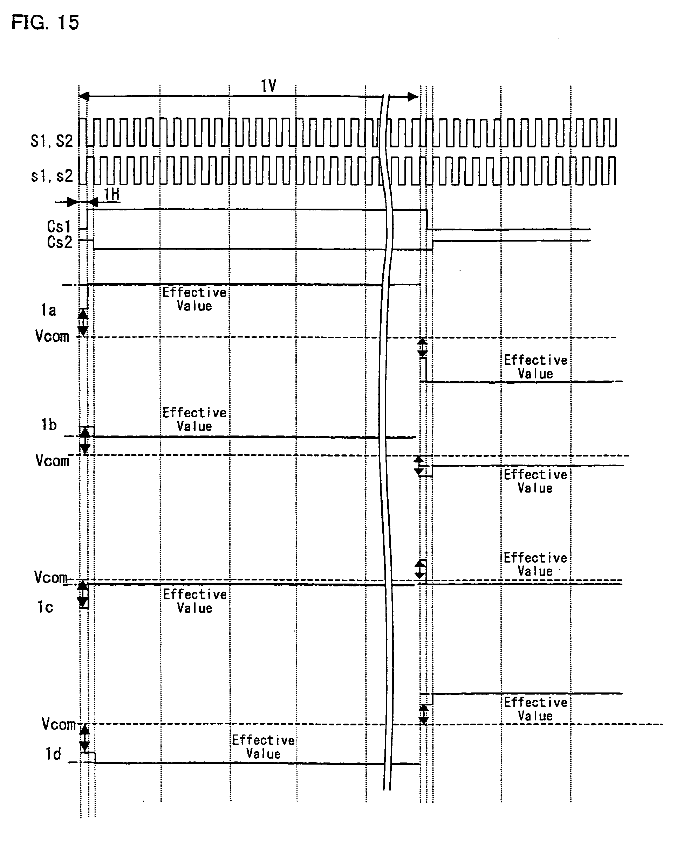

   Fig. 15 is a timing diagram indicating how the display section of (a) and (b) of Fig. 9 is not driven according to the invention.
Fig. 16

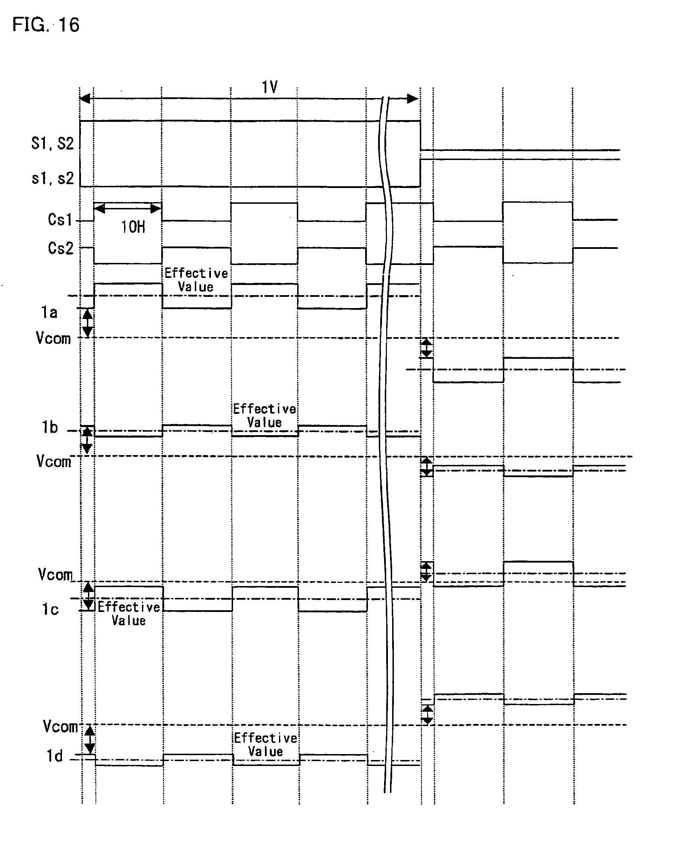

   Fig. 16 is a timing diagram indicating how the display section of (a) and (b) of Fig. 11 is not driven according to the invention.
Fig. 17
   (a) and (b) of Fig. 17 are plan views each illustrating a specific configuration of the display section of (b) of Fig. 1.
Fig. 18

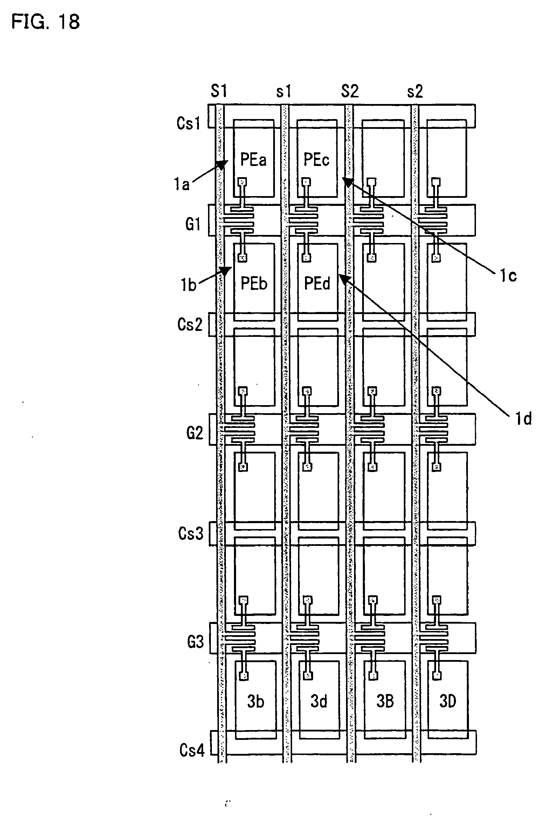

   Fig. 18 is a plan view illustrating another specific configuration of the display section of (b) of Fig. 1.
Fig. 19
   (a) and (b) of Fig. 19 are plan views illustrating specific configurations of the display sections of (b) of Fig. 6 and (b) of Fig. 7, respectively.
Fig. 20

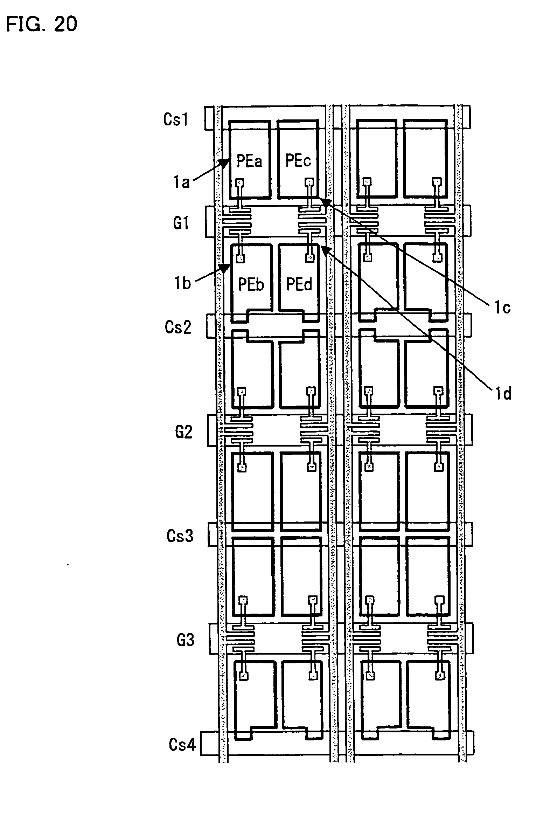

   Fig. 20 is a plan view illustrating a specific configuration of the display section of (b) of Fig. 11.
Fig. 21

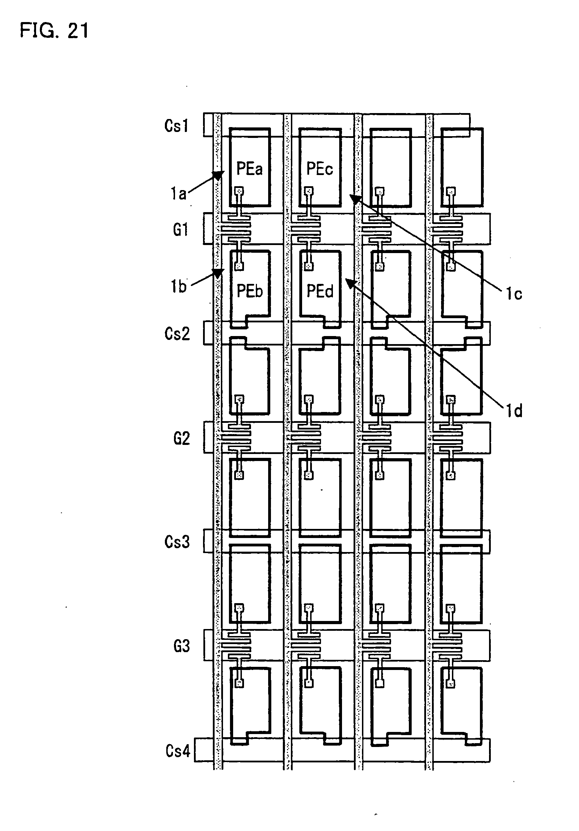

   Fig. 21 is a plan view illustrating another specific configuration of the display section of (b) of Fig. 11.
Fig. 22
   (a) of Fig. 22 is a view schematically illustrating the display section of (b) of Fig. 1. (b) of Fig. 22 is a view schematically illustrating how the display section is driven according to the invention.
Fig. 23
   (a) of Fig. 23 is a view schematically illustrating the display section of (b) of Fig. 2. (b) of Fig. 23 is a view schematically illustrating how the display section is driven according to the invention.
Fig. 24
   (a) of Fig. 24 is a view schematically illustrating the display of (b) of Fig. 3. (b) of Fig. 24 is a view schematically illustrating how the display section is driven.
Fig. 25
   (a) of Fig. 25 is a view schematically illustrating the display section of (b) of Fig. 8. (b) of Fig. 25 is a view schematically illustrating how the display section is not driven according to the invention.
Fig. 26
   (a) of Fig. 26 is a view schematically illustrating a display section of a liquid crystal display device according to Embodiment 2. (b) of Fig. 26 is a view schematically illustrating how the display section is not driven according to the invention.
Fig. 27
   (a) of Fig. 27 is a view schematically illustrating a display section of the liquid crystal display device according to Embodiment 2. (b) of Fig. 27 is a view schematically illustrating how the display section is not driven according to the invention.
Fig. 28
   (a) of Fig. 28 is a view schematically illustrating a display section of the liquid crystal display device according to Embodiment 2. (b) of Fig. 28 is a view schematically illustrating how the display section is not driven according to the invention.
Fig. 29
   (a) of Fig. 29 is a view schematically illustrating a display section of the liquid crystal display device according to Embodiment 2. (b) of Fig. 29 is a view schematically illustrating how the display section is not driven according to the invention.
Fig. 30
   (a) of Fig. 29 is a view schematically illustrating a display section of the liquid crystal display device according to Embodiment 2. (b) of Fig. 30 is a view schematically illustrating how the display section is not driven according to the invention.
Fig. 31
   (a) of Fig. 31 is a view schematically illustrating a display section of the liquid crystal display device according to Embodiment 2. (b) of Fig. 31 is a view schematically illustrating how the display section is not deriven according to the invention.
Fig. 32
   (a) of Fig. 32 is a view schematically illustrating a display section of the liquid crystal display device according to Embodiment 2. (b) of Fig. 32 is a view schematically illustrating how the display section is not deriven according to the invention.
Fig. 33
   (a) of Fig. 33 is a view schematically illustrating a display section of the liquid crystal display device according to Embodiment 2. (b) of Fig. 33 is a view schematically illustrating how the display section is not driven according to the invention.
Fig. 34
   (a) of Fig. 34 is a view schematically illustrating a display section of the liquid crystal display device according to Embodiment 2. (b) of Fig. 34 is a view schematically illustrating how the display section is not driven according to the invention.
Fig. 35
   (a) of Fig. 35 is a view schematically illustrating a display section of the liquid crystal display device according to Embodiment 2. (b) of Fig. 35 is a view schematically illustrating how the display section is not driven according to the invention.
Fig. 36
   (a) of Fig. 36 is a view schematically illustrating a display section of the liquid crystal display device according to Embodiment 2. (b) of Fig. 36 is a view schematically illustrating how the display section is not driven according to the invention.
Fig. 37

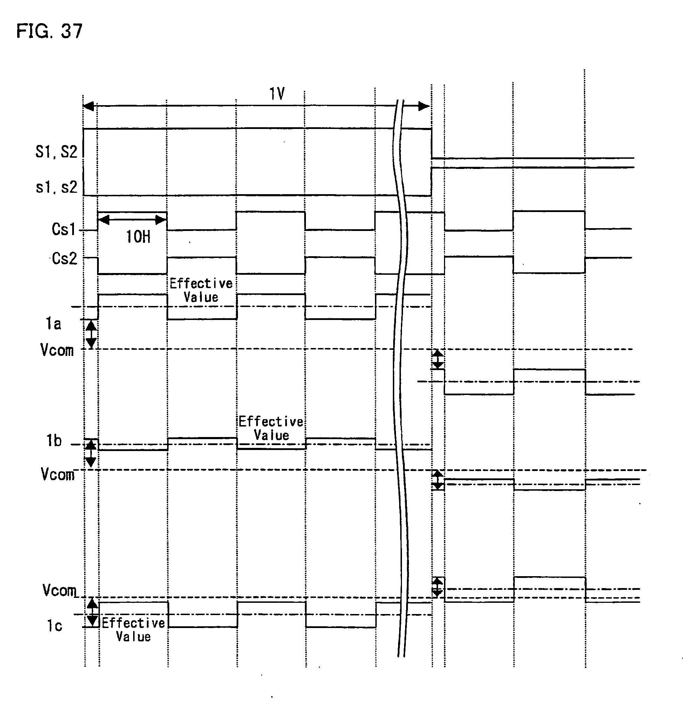

   Fig. 37 is a timing diagram indicating how the display section of (b) of Fig. 26 is not driven according to the invention.
Fig. 38

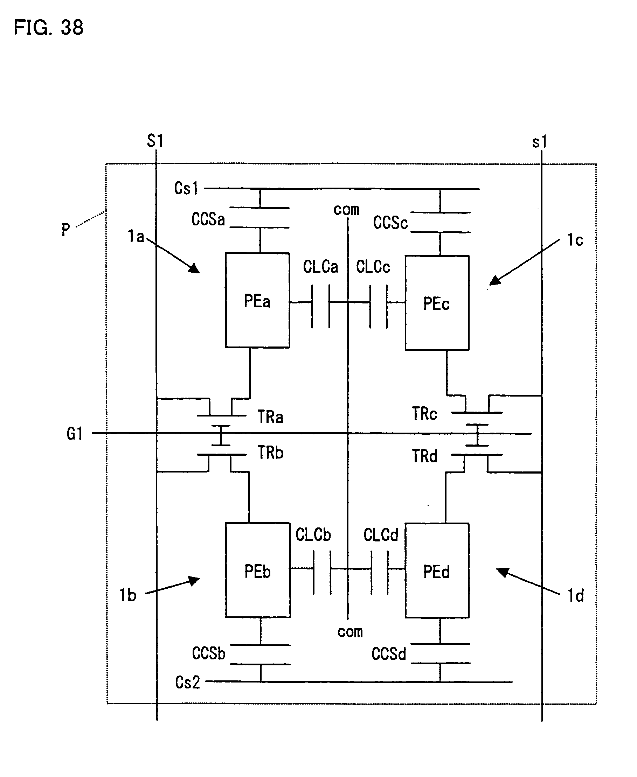

   Fig. 38 is an equivalent circuit diagram of a pixel P of (b) of Fig. 1.
Fig. 39

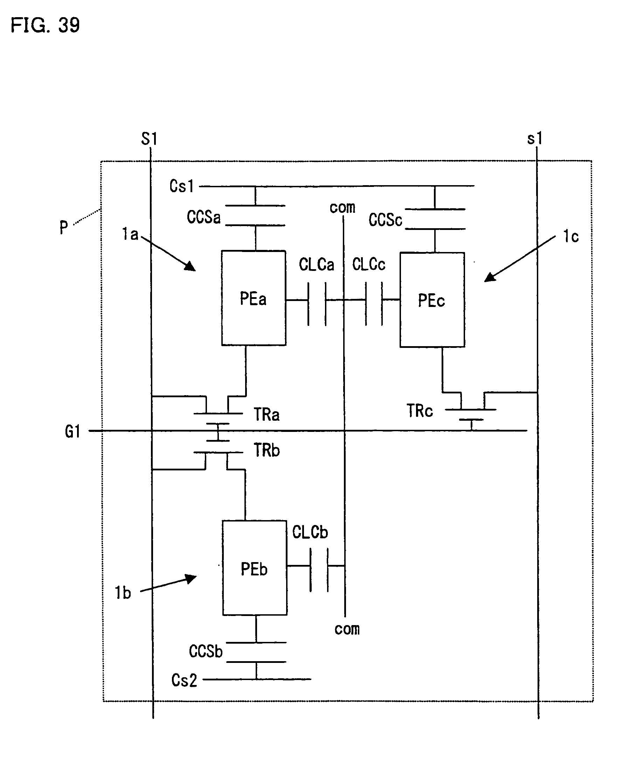

   Fig. 39 is an equivalent circuit diagram of a pixel P of (b) of Fig. 26.
Fig. 40

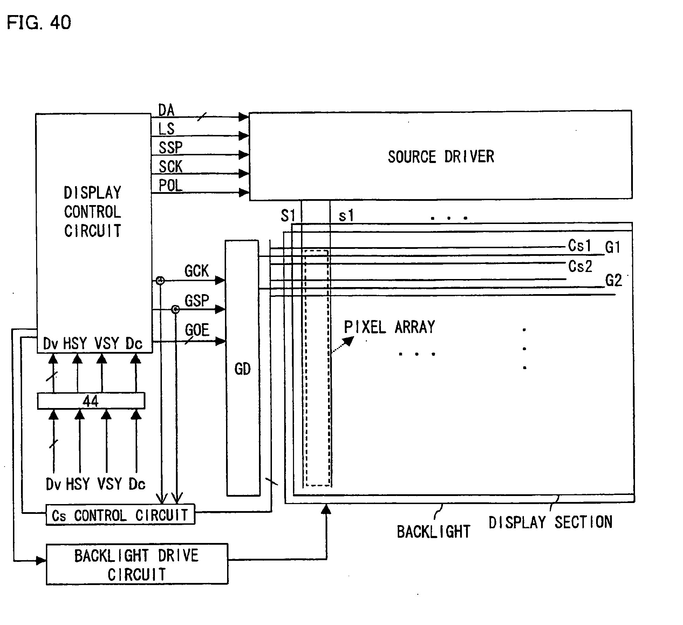

   Fig. 40 is a block diagram illustrating a configuration of a liquid crystal display device (employing a divided-pixel system) of the present invention.
Fig. 41

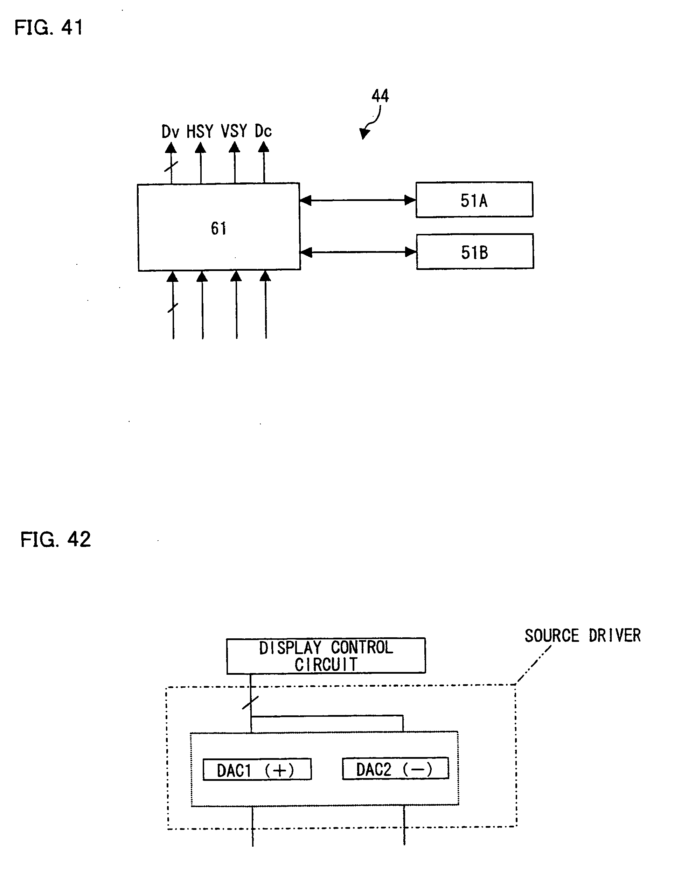

   Fig. 41 is a block diagram illustrating a configuration of a data rearrangement circuit of the liquid crystal display device of the present invention.
Fig. 42
   Fig. 42 is a block diagram illustrating a configuration of a source driver of the liquid crystal display device of the present invention.
Fig. 43

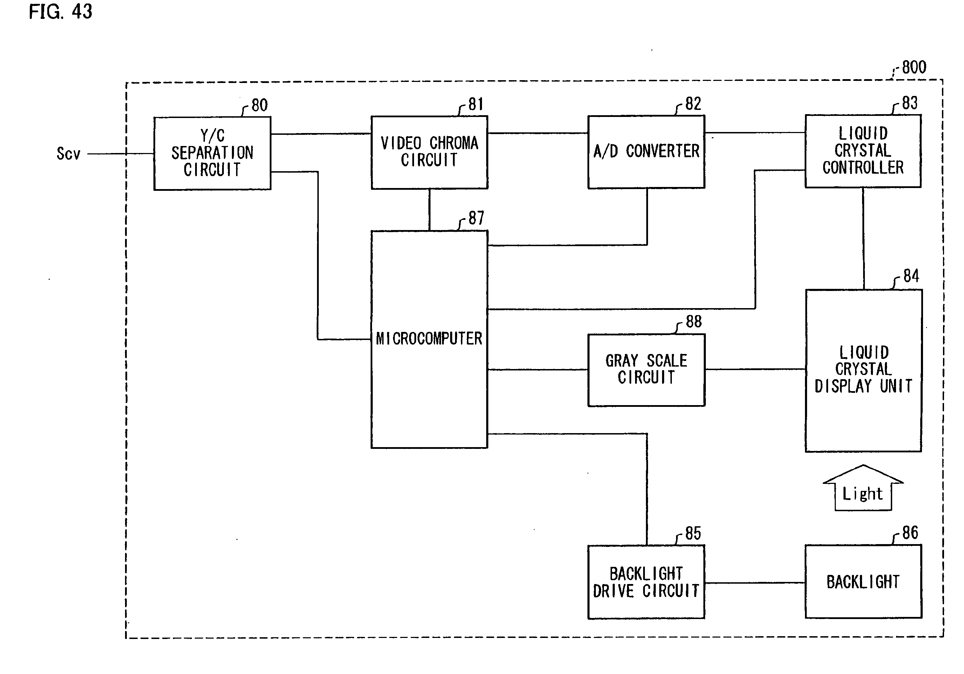

   Fig. 43 is a block diagram for describing a function of the liquid crystal display device of the present invention.
Fig. 44

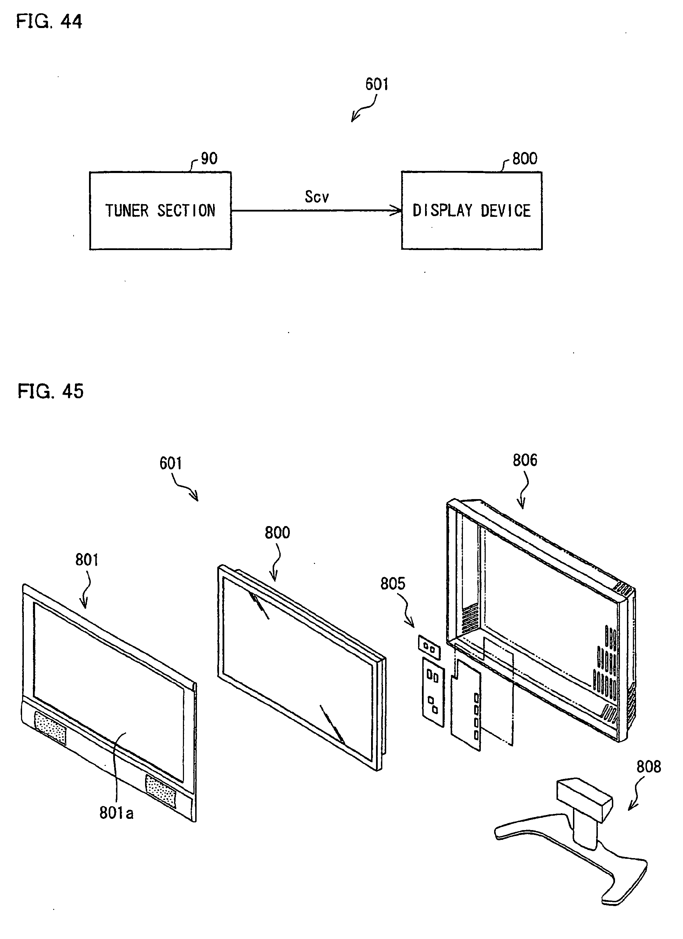

   Fig. 44 is a block diagram for describing a function of a television receiver of the present invention.
Fig. 45
   Fig. 45 is an exploded perspective view illustrating a configuration of the television receiver of the present invention.
Fig. 46
   Fig. 46 is a circuit diagram illustrating a configuration of one pixel included in a conventional liquid crystal display device.

### Reference Signs List

- 10a, 10b: Display Section
- S1, S2, s1, s2: First and Second Data Signal Lines
- P: Pixel
- G1 through G4: Scanning Signal Lines
- Cs1 through Cs5: Storage Capacitor Wires
- PE: Pixel Electrode
- 84: Liquid Crystal Display Unit
- 601: Television Receiver
- 800: Liquid Crystal Display Device

### Description of Embodiments

Exemplary embodiments of the present invention are described below with reference to Figs. 1 through 45. A liquid crystal display device of the present invention (e.g., a normally-black type liquid crystal display device) includes, in its display section, scanning signal lines and data signal lines which are orthogonal to each other. For the sake of easy description, a direction in which the scanning signal lines extend is referred to as a row direction, whereas a direction in which the data signal lines extend is referred to as a column direction. The display section further includes storage capacitor wires which extend in the row direction and are capable of governing potential therein, and pixels arrayed in matrix along the row direction and the column direction. Each of the pixels includes three or four subpixels. Each of the subpixels is connected to corresponding one of the data signal lines and to corresponding one of the scanning signal lines. Further, each of the subpixels and corresponding two of the storage capacitor wires define respective capacitances (storage capacitances). More specifically, each of the subpixels includes a transistor and a pixel electrode. The transistor is connected to corresponding one of the scanning signal lines and to corresponding one of the data signal lines. Further, (i) the pixel electrode or an electrode (storage capacitor electrode) electrically connected with the pixel electrode and (ii) corresponding one of the storage capacitor wires define a capacitance.

### [Embodiment 1]

The following description discusses an embodiment of Fig. 1. (a) of Fig. 1 is a timing diagram illustrating how a display section of a liquid crystal display device of the present invention is driven. (b) of Fig. 1 is a view schematically illustrating a configuration of the display section and a process of how the display section is driven. The left side of (b) of Fig. 1 illustrates the display section at a timing t1 of (a) of Fig. 1. The center of (b) of Fig. 1 illustrates the display section at a timing t2 of (a) of Fig. 1. The right side of (b) of Fig. 1 illustrates the display section at a timing t3 of (a) of Fig. 1. As illustrated in (b) of Fig. 1, a display section 10a is so configured that (i) first and second data signal lines are provided correspondingly to each pixel array at its both side ends and (ii) each pixel includes four subpixels which are connected to identical one of the scanning signal lines. Each pixel is associated correspondingly with two storage capacitor wires. In each pixel, two subpixels of the four subpixels and one of the two storage capacitor wires define respective capacitances. Further, one of the two subpixels is connected to corresponding one of the first data signal lines, whereas the other one of the two subpixels is connected to corresponding one of the second data signal lines. Meanwhile, the other two subpixels of the four subpixels and the other one of the two storage capacitor wires define respective capacitances. Further, one of the other two subpixels is connected to the corresponding one of the first data signal lines, whereas the other one of the other two subpixels is connected to the corresponding one of the second signal lines.

More specifically, in each pixel, two of the four subpixels are arrayed along a row direction on one side of corresponding one of the scanning signal lines, while the other two of the four subpixels are arrayed along the row direction on the other side of the corresponding one of the scanning signal lines. In this way, the four subpixels are arrayed in matrix along the row direction and the column direction. Meanwhile, two of the four subpixels arrayed along the column direction are both connected to corresponding one of the first data signal lines or both connected to corresponding one of the second data signal lines, while two of the four subpixels arrayed along the row direction define respective capacitances with corresponding one of the storage capacitor wires. Further, in one of two pixels adjacent to each other in the column direction, two subpixels (first and second subpixels), of the four subpixels, arrayed along the column direction are connected to corresponding one of the first data signal lines, while the other two subpixels (third and fourth subpixels), of the four subpixels, arrayed along the column direction are connected to corresponding one of the second data signal lines. On the other hand, in the other one of the two pixels adjacent to each other in the column direction, two subpixels, of the four subpixels, included in a subpixel array including the first subpixel and the second subpixel are connected to the corresponding one of the first data signal lines, while the other two subpixels, of the four subpixels, included in a subpixel array including the third subpixel and the fourth subpixel are connected to the corresponding one of the second data signal lines. Moreover, (i) one, of the second data signal lines, corresponding to one of two pixel arrays adjacent to each other and (ii) one, of the first data signal lines, corresponding to the other one of the two pixel arrays adjacent to each other are adjacent to each other with no pixel array therebetween.

Further, (i) a subpixel included in one of two pixels adjacent to each other in the column direction and (ii) a subpixel included in the other one of the two pixels adjacent to each other in the column direction define respective capacitances with identical one of the storage capacitor wires. Specifically, two subpixels, which are adjacent to each other in the column direction with no scanning signal line therebetween, define respective capacitances with identical one of the storage capacitor wires.

For example, first and second data signal lines S1 and s1 are provided corresponding to a pixel array including a pixel P, and the pixel P includes four subpixels 1a through 1d which are connected to a scanning signal line G1. Specifically, in the pixel P, the subpixels 1a and 1c are arrayed along the row direction on one side (the upper side in (b) of Fig. 1) of the scanning signal line G1, while the subpixels 1b and 1d are arrayed along the row direction on the other side (the lower side in (b) of Fig. 1) of the scanning signal line G1. In this way, the four subpixels 1a through 1d are arrayed in matrix along the row direction and the column direction. The subpixels 1a and 1b (first and second subpixels) arrayed along the column direction are both connected to the first data signal line S1, while the subpixels 1c and 1d (third and fourth subpixels) arrayed along the column direction are both connected to the second data signal line s1. Further, the subpixels 1a and 1c arrayed along the row direction define respective capacitances with a storage capacitor wire Cs1, while the subpixels 1b and 1d arrayed along the row direction define respective capacitances with a storage capacitor wire Cs2.

Similarly, a pixel adjacent to the pixel P in the column direction includes four subpixels 2a through 2d, which are connected to a scanning signal line G2. Specifically, the subpixels 2a and 2c are arrayed along the row direction on one side (the upper side of (b) of Fig. 1) of the scanning signal line G2, while the subpixels 2b and 2d are arrayed along the row direction on the other side (the lower side of (b) of Fig. 1) of the scanning signal line G2. The subpixels 2a and 2b which are included in a pixel array including the subpixels 1a and 1b of the pixel P are both connected to the first signal line S1, while the subpixels 2c and 2d which are included in a pixel array including the subpixels 1c and 1d of the pixel P are both connected to the second data signal line s1. Further, the subpixels 2a and 2c arrayed along the row direction define respective capacitances with a storage capacitor wire Cs2, while the subpixels 2b and 2d arrayed along the row direction define respective capacitances with a storage capacitor wire Cs3.

Meanwhile, first and second data signal lines S2 and s2 are provided correspondingly to a pixel array adjacent to the pixel array including the pixel P. A pixel adjacent to the pixel P in the row direction includes four subpixels 1A through 1D, which are connected to the scanning signal line G1. Specifically, the subpixels 1A and 1C are arrayed along the row direction on one side (the upper side in (b) of Fig. 1) of the scanning signal line G1, while the subpixels 1B and 1D are arrayed along the row direction on the other side (the lower side in (b) of Fig. 1) of the scanning signal line G1. The subpixels 1A and 1B arrayed along the column direction are both connected to the first data signal line S2, while the subpixels 1C and 1D arrayed along the column direction are both connected to the second data signal line s2. Further, the subpixels 1A and 1C arrayed along the row direction define respective capacitances with the storage capacitor wire Cs1, while the subpixels 1B and 1D arrayed along the row direction define respective capacitances with the storage capacitor wire Cs2.

As described above, (i) a subpixel (1b, 1d, 1B, or 1D) included in one of two pixels adjacent to each other in the column direction and (ii) a subpixel (2a, 2c, 2A, or 2C) included in the other one of the two pixels adjacent to each other in the column direction define respective capacitances with the storage capacitor wire Cs2. In other words, two subpixels adjacent to each other in the column direction with no scanning signal line therebetween (i.e., the subpixels 1b and 2a, 1d and 2c, 1B and 2A, or 1D and 2C) define respective capacitances with identical one of the storage capacitor wires (i.e., the storage capacitor wire Cs2).

Fig. 38 illustrates an equivalent circuit of the pixel P. As illustrated in Fig. 38, the pixel P includes four subpixels 1a through 1d. The subpixel 1a includes a transistor TRa and a pixel electrode PEa. The subpixel 1b includes a transistor TRb and a pixel electrode PEb. The subpixel 1c includes a transistor TRc and a pixel electrode PEc. The subpixel 1d includes a transistor TRd and a pixel electrode PEd.

The transistors TRa and TRb are both connected to the scanning signal line G1 and to the data signal line S1, while the transistors TRc and TRd are both connected to the scanning signal line G1 and the data signal line s1. The pixel electrode PEa and the storage capacitor wire Cs1 define a capacitance CCSa, while the pixel electrode PEa and a common electrode (counter electrode) com define CLCa. The pixel electrode PEb and the storage capacitor wire Cs2 define a capacitance CCSb, while the pixel electrode PEb and the common electrode (counter electrode) com define CLCb. The pixel electrode PEc and the storage capacitor wire Cs1 define a capacitance CCSc, while the pixel electrode PEc and the common electrode (counter electrode) com define CLCc. The pixel electrode PEd and the storage capacitor wire Cs2 define a capacitance CCSd, while the pixel electrode PEd and the common electrode (counter electrode) com define CLCd.

Now, refer back to (a) and (b) of Fig. 1. Each pair of the first and second data signal lines receive signal potentials corresponding to identical data (gray scale data) but having respective different polarities (for example, assuming that Vcom is a reference potential, the signal potentials are identical in absolute value but opposite in direction from Vcom to each other). Each of the polarities of the signal potentials is reversed for every one (1) vertical scanning period. One, of the first data signal lines, corresponding to one of two pixel arrays adjacent to each other and one, of the second data signal lines, corresponding to the other one of the two pixel arrays adjacent to each other receive signal potentials having respective different polarities. An example is as follows. First, in a frame, the first data signal lines S1 and S2 receive signal potentials having a positive polarity, while the second data signal lines s1 and s2 receive signal potentials having a negative polarity. Then, in a subsequent frame, the first data signal lines S1 and S2 receive the signal potentials having the negative polarity, while the second data signal lines s1 and s2 receive the signal potentials having the positive polarity.

Further, as illustrated in (a) and (b) of Fig. 1, a potential level of each of the storage capacitor wires shifts after scanning of a scanning signal line that is connected to the subpixel or subpixels facing the storage capacitor wire. The potential level of each of the storage capacitor wires shifts a plurality of times after the scanning in a frame in which the scanning is carried out. Specifically, the potential level of each of the storage capacitor wires so changes that the potential level is periodically switched between two levels during one frame period. In a case where a first storage capacitor wire is one, being positioned upstream in a scanning direction, of two storage capacitor wires corresponding to a pixel which is included in each pixel array and is first to receive data among pixels of the pixel array, potential phases of odd-numbered storage capacitor wires are subsequently shifted in the same direction by the same amount. Similarly, potential phases of even-numbered storage capacitor wires are subsequently shifted in the same direction by the same amount. Further, each of the above two levels remains constant over a plurality of horizontal scanning periods.

More specifically, a potential phase of each odd-numbered storage capacitor wire leads a potential phase of a subsequent odd-numbered storage capacitor wire by two horizontal scanning periods, while a potential phase of each even-numbered storage capacitor wire leads a potential phase of a subsequent even-numbered storage capacitor wire by two horizontal scanning periods. The potential level of the first storage capacitor wire and the potential level of a second storage capacitor wire shift, two horizontal scanning periods after start of a corresponding frame, in respective opposite directions at the same timing. Here, the potential level of each odd-numbered storage capacitor wires is switched between two levels whose difference is identical, while the potential level of each even-numbered storage capacitor wires is switched between two levels whose difference is also identical. Note however that the difference between the two levels between which the potential level of each odd-numbered storage capacitor wires is switched is larger than the difference between the two levels between which the potential level of each even-numbered storage capacitor wires is switched. Further, the four subpixels included in each pixel have an identical area size. Furthermore, (i) each of the capacitances defined by two, of the four subpixels, arrayed along the row direction and corresponding one of the storage capacitor wires and (ii) each of the capacitances defined by the other two of the four subpixels and corresponding one of the storage capacitor wires are identical.

For example, a potential level of the storage capacitor wire Cs1 shifts after scanning of the scanning signal line G1 that is connected to the subpixel (e.g., 1a or 1c) facing the storage capacitor wire Cs1. The potential level of the storage capacitor wire Cs1 shifts a plurality of times after the scanning during a frame period during which the scanning is carried out. On the other hand, a potential level of the storage capacitor wire Cs2 shifts after scanning of the scanning signal lines G1 and G2 that are connected to the subpixels (e.g., 1b, 1d, 1B, 1D, 2a, 2c, 2A, or 2C) facing the storage capacitor wire Cs2. The potential level of the storage capacitor wire Cs2 shifts a plurality of times after the scanning during a frame period during which the scanning is carried out. That is, the potential level of each of the storage capacitor wires (Cs1, Cs2, and so on) so changes that the potential level is switched between two levels (High and Low) for every 10 horizontal scanning periods (10H). In a case where a first storage capacitor wire is the storage capacitor wire Cs1, which is positioned more upstream in the scanning direction than the storage capacitor wire Cs2 (the storage capacitor wires Cs1 and Cs2 correspond to a pixel (e.g., pixel P) which is first to receive data among pixels in corresponding one of the pixel arrays), a potential phase of an odd-numbered storage capacitor wire (e.g., Cs1) leads a potential phase of a subsequent odd-numbered storage capacitor wire (e.g., Cs3) by two horizontal scanning periods. Similarly, a potential phase of an even-numbered storage capacitor wire (e.g., Cs2) leads a potential phase of a subsequent even-numbered storage capacitor wire (e.g., Cs4) by two horizontal scanning periods. The potential level of the storage capacitor wire Cs1 (first storage capacitor wire) shifts in a positive direction (L to H) at the timing t2, which is two horizontal scanning periods (2H) after the start of the frame. The potential level of the storage capacitor wire Cs2 (second storage capacitor wire) shifts in a negative direction (H to L) at the timing t2, which is two horizontal scanning periods (2H) after the start of the frame. Further, a difference between two potential levels (level shift amount) between which the potential level of each of the odd-numbered storage capacitor wires (Cs1, Cs3, and so on) switches remains constant throughout one (1) frame period, while a difference between two potential levels (level shift amount) between which the potential level of each of the even-numbered storage capacitor wires (Cs2, Cs4, and so on) switches also remains constant throughout one (1) frame period. Note however that the difference between the two potential levels between which the potential level of each of the odd-numbered storage capacitor wires (Cs1, Cs3, and so on) switches is larger than the difference between the two potential levels between which the potential level of each of the even-numbered storage capacitor wires (Cs2, Cs4, and so on) switches. Further, for example, four subpixels (1a through 1d) included in the pixel P each have the identical area size. Furthermore, (i) each of the capacitances defined by two (1a and 1c), of the four subpixels, arrayed along the row direction, and the storage capacitor wire Cs1 and (ii) each of the capacitances defined by the other two (1b and 1d) of the four subpixels and the storage capacitor wire Cs2 are identical in value.

The display section 10a configured as above, in which the first and second data signal lines and the storage capacitor wires are controlled as above, is driven in a manner shown in (b) of Fig. 1. The following description discusses how the pixel P is driven, with reference to Figs. 1, 12, and 38. Fig. 12 is a timing diagram illustrating (i) potentials of the first and second data signal lines S1 and s1, (ii) potentials of the storage capacitor wires Cs1 and Cs2, and (ii) potentials of the subpixels (1a thorough 1d) included in the pixel P (i.e., potentials of pixel electrodes included in the respective subpixels).

In Fig. 38, assuming that (i) VS represents a signal potential supplied to the data signal line S1, (ii) Vs represents a signal potential supplied to the data signal line s1, (iii) VF represents a feed-through potential when transistors are in an OFF state, (iv) 2 × Vp represents a level shift amount (a difference between High and Low) of the potential level of the storage capacitor wire Cs1, (v) 2 × Vq represents a level shift amount (a difference between High and Low) of the potential level of the storage capacitor wire Cs2, and (vi) Kca = CCSa/ (CLCa + CCSa), KCb = CCSb/ (CLCb + CCSb), KCc = CCSc/ (CLCc + CCSc), and KCd = CCSd/ (CLCd + CCSd), an effective potential of a pixel electrode 1a is represented by VS - VF + Kca × Vp, an effective potential of a pixel electrode 1b is represented by VS - VF - KCb × Vq, an effective potential of a pixel electrode 1c is represented by Vs - VF + KCc × Vp, and an effective potential of a pixel electrode 1d is represented by Vs - VF - KCd × Vq.

As illustrated in Figs. 1 and 12, according to the embodiment of Fig. 1, VS = Vda (a positive signal potential corresponding to gray scale data da), Vs = -Vda (a negative signal potential corresponding to gray scale data da), and Kca = KCb = KCc = KCd = KC. Accordingly, the effective potential of the pixel electrode 1a is represented by Vda - VF + KC × Vp, the effective potential of the pixel electrode 1b is represented by Vda - VF - KC × Vq, the effective potential of the pixel electrode 1c is represented by -Vda - VF + KC × Vp, and the effective potential of the pixel electrode 1d is represented by -Vda - VF - KC × Vq.

Further, since the Vp is greater than Vq, it is assumed that a super-bright subpixel has a luminance level higher than that of a bright subpixel, whereas a super-dark subpixel has a luminance level lower than that of a dark subpixel. Accordingly, it is possible to control the pixel P so that the subpixel 1a serves as a super-bright subpixel (hereinafter may be referred to as "M"), the subpixel 1b serves as a dark subpixel (hereinafter may be referred to as "a"), the subpixel 1c serves as a super-dark subpixel (hereinafter may be referred to as "A"), and the subpixel 1d serves as a bright subpixel (hereinafter may be referred to as "m"). Further, it is possible to control a pixel, which is adjacent to the pixel P in the column direction, so that the subpixel 2a serves as a dark subpixel (a), the subpixel 2b serves as a super-bright subpixel (M), the subpixel 2c serves as a bright subpixel (m), and the subpixel 2d serves as a super-dark subpixel (A). Moreover, it is possible to control a pixel, which is adjacent to the pixel P in the row direction, so that the subpixel 1A serves as a super-bright subpixel (M), the subpixel 1B serves as the dark subpixel (a), the subpixel 1C serves as a super-dark subpixel (A), and the subpixel 1D serves as a bright subpixel (m).

As described above, according to the embodiment of Fig. 1, it is possible to display a gray level by (i) controlling the four subpixels included in each of the pixels so that they have respective different luminance levels and (ii) making use of area coverage modulation of the four subpixels, without increasing the number of storage capacitor wires (i.e., without providing a complicated configuration for controlling a potential of each of the storage capacitor wires). Accordingly, it is possible to reduce viewing angle dependence of a gamma characteristic (e.g., excess brightness of a display screen). Moreover, each pair of the first and second data signal lines receive signal potentials having respective different polarities but corresponding to the same gray scale level. This makes it possible to simplify data processing and an arithmetic circuit configuration therefor, as compared to a configuration in which data signal lines receive respective different signal potentials corresponding to respective different gray scale levels so that the subpixels have respective different luminance levels.

Furthermore, in each of the pixel arrays, a super-bright subpixel and a bright subpixel are not adjacent to each other, while a super-dark subpixel and a dark subpixel are not adjacent to each other. Accordingly, it is possible to prevent display roughness and display unevenness in a line form in the column direction. Moreover, in each of the subpixel arrays, (i) super-bright subpixels and super-dark subpixels are alternately provided, or (ii) bright subpixels and dark subpixels are alternately provided. Accordingly, it is possible to prevent display roughness and display unevenness in a line form in the row direction. Moreover, since the potential level of each of the storage capacitor wires is periodically shifted, it is possible to control the potential phase of each of the storage capacitor wires so that every predetermined number of storage capacitor wires are identical in potential phase. This makes it possible to simplify a configuration for controlling the potential of each of the storage capacitor wires. In addition, since the potential level shifts every 10H, it is possible to shift the potential level by a sufficient amount even if an waveform distortion occurs.

(a) of Fig. 17 illustrates an exemplary configuration of the display section 10a. As illustrated in (a) of Fig. 17, in the pixel P, (i) a source electrode and a drain electrode of each of four transistors included in the pixel P are provided on the scanning signal line G1 passing in the middle of the pixel P, (ii) the storage capacitor wire Cs1 faces the pixel electrode PEa and the pixel electrode PEc included respectively in the subpixel 1a and the subpixel 1c, and (iii) the storage capacitor wire Cs2 faces the pixel electrode PEb and the pixel electrode PEd included respectively in the subpixel 1b and the subpixel 1d. Here, a slit which separates between pixel electrodes, included in the pixel P, adjacent to each other in the row direction can be in a linear shape in the column direction (see (a) of Fig. 17). Alternatively, the slit can be in a 90-degree rotated V shape (see (b) of Fig. 17). The configuration in (b) of Fig. 17 is preferably applicable for use in, for example, an MVA (multidomain vertical alignment) liquid crystal display device. In an MVA configuration, ribs and/or slits in the 90-degree rotated V shape are provided on surfaces, of pixel electrodes, facing a color filter substrate.

According to Figs. 1 and 17, each of the pixel arrays is provided correspondingly with one of the first signal lines and one of the second data signal lines at both side ends of the pixel array. However, the present embodiment is not limited to this configuration. For example, as illustrated in Fig. 18, the present embodiment can be configured such that the first and second data signal lines S1 and s1 are provided respectively at one side end and in the middle (e.g., in a space between the subpixels 1a and 1c adjacent to each other in the row direction) of corresponding one of the pixel arrays. According to this arrangement, it is possible to reduce the likelihood that a short circuit occurs between the first data signal line S1 and the second data signal line s1. Further, in a case where the first data signal line S1 and the second data signal line s1 receive signals having respective different polarities, the arrangement of the first and second data signal lines S1 and s1 as in Fig. 18 makes it possible to cancel variation, in a potential of each of the subpixels, due to a parasitic capacitance defined by (i) the data signal lines S1 and s1 and (ii) the subpixels. As such, it is possible to improve a display quality.

The following description discusses an embodiment of Fig. 2. (a) of Fig. 2 is a timing diagram illustrating how the display section included in the liquid crystal display device is driven. (b) of Fig. 2 is a view schematically illustrating a configuration of the display section and a process of how the display section is driven. The left side of (b) of Fig. 2 illustrates the display section at a timing t1 of (a) of Fig. 2. The center of (b) of Fig. 2 illustrates the display section at a timing t2 of (a) of Fig. 2. The right side of (b) of Fig. 2 illustrates the display section at a timing t3 of (a) of Fig. 2. The embodiments of Figs. 1 and 2 are different from each other in control of the storage capacitor wires. Therefore, (i) the configuration of the display section and (ii) control of the first and second data signal lines of the embodiment of Fig. 2 are same as those of Fig. 1.

As illustrated in (a) and (b) of Fig. 2, a potential level of the storage capacitor wire Cs1 shifts after scanning of the scanning signal line G1 that is connected to the subpixel (e.g., 1a or 1c) facing the storage capacitor wire Cs1. The potential level of the storage capacitor wire Cs1 shifts a plurality of times after the scanning during a frame period during which the scanning is carried out. On the other hand, a potential level of the storage capacitor wire Cs2 shifts after scanning of the scanning signal lines G1 and G2 that are connected to the subpixels (e.g., 1b, 1d, 1B, 1D, 2a, 2c, 2A, or 2C) facing the storage capacitor wire Cs2. The potential level of the storage capacitor wire Cs2 shifts a plurality of times after the scanning during a frame period during which the scanning is carried out. That is, the potential level of each of the storage capacitor wires (Cs1, Cs2, and so on) changes so that the potential level is switched between two levels (High and Low) for every 10 horizontal scanning periods (10H). In a case where a first storage capacitor wire is the storage capacitor wire Cs1, which is positioned more upstream in the scanning direction than the storage capacitor wire Cs2 (the storage capacitor wires Cs1 and Cs2 correspond to a pixel (e.g., pixel P) which is first to receive data among pixels in corresponding one of the pixel arrays), a potential phase of an odd-numbered storage capacitor wire (e.g., Cs1) leads a potential phase of a subsequent odd-numbered storage capacitor wire (e.g., Cs3) by two horizontal scanning periods. Similarly, a potential phase of an even-numbered storage capacitor wire (e.g., Cs2) leads a potential phase of a subsequent even-numbered storage capacitor wire (e.g., Cs4) by two horizontal scanning periods. The potential level of the storage capacitor wire Cs1 (first storage capacitor wire) shifts in the positive direction (L to H) at the timing t2, which is two horizontal scanning periods (2H) after the start of the frame. The potential level of the storage capacitor wire Cs2 (second storage capacitor wire) shifts in the positive direction (L to H) at the timing t2, which is two horizontal scanning periods (2H) after the start of the frame. Further, a difference between two potential levels between which the potential level of each of the odd-numbered storage capacitor wires (Cs1, Cs3, and so on) switches remains constant, while a difference between two potential levels between which the potential level of each of the even-numbered storage capacitor wires (Cs2, Cs4, and so on) switches also remains constant. Note however that the difference between the two potential levels between which the potential level of each of the odd-numbered storage capacitor wires (Cs1, Cs3, and so on) switches is larger than the difference between the two potential levels between which the potential level of each of the even-numbered storage capacitor wires (Cs2, Cs4, and so on) switches.

According to the embodiment, it is possible to control the pixel P so that the subpixel 1a serves as a super-bright subpixel (M), the subpixel 1b serves as a bright subpixel (m), the subpixel 1c serves as a super-dark subpixel (A), and the subpixel 1d serves as a dark subpixel (a). Further, it is possible to control a pixel, which is adjacent to the pixel P in the column direction, so that the subpixel 2a serves as a bright subpixel (m), the subpixel 2b serves as a super-bright subpixel (M), the subpixel 2c serves as a dark subpixel (a), and the subpixel 2d serves as a super-dark subpixel (A). Moreover, it is possible to control a pixel, which is adjacent to the pixel P in the row direction, so that the subpixel 1A serves as a super-bright subpixel (M), the subpixel 1B serves as a bright subpixel (m), the subpixel 1C serves as a super-dark subpixel (A), and the subpixel 1D serves as a dark subpixel (a).

According to the embodiment of Fig. 2, it is possible to attain advantages same as those of the embodiment of Fig. 1, except that an advantage regarding arrangement of bright and dark subpixels in each of the subpixel arrays.

The following description deals with an embodiment of Fig. 3. (a) of Fig. 3 is a timing diagram illustrating how the display section included in the liquid crystal display device is driven. (b) of Fig. 3 is a view schematically illustrating a configuration of the display section and a process of how the display section is driven. The left side of (b) of Fig. 3 illustrates the display section at a timing t1 of (a) of Fig. 3. The center of (b) of Fig. 3 illustrates the display section at a timing t2 of (a) of Fig. 3. The right side of (b) of Fig. 3 illustrates the display section at a timing t3 of (a) of Fig. 3. The embodiments of Figs. 1 and 3 are different from each other in control of the storage capacitor wires. Therefore, (i) the configuration of the display section and (ii) control of the first and second data signal lines of the embodiment of Fig. 3 are same as those of Fig. 1.

As illustrated in (a) and (b) of Fig. 3, a potential level of the storage capacitor wire Cs1 shifts after scanning of the scanning signal line G1 that is connected to the subpixel (e.g., 1a or 1c) facing the storage capacitor wires Cs1. The potential level of the storage capacitor wire Cs1 shifts once after the scanning during a frame period during which the scanning is carried out. On the other hand, a potential level of the storage capacitor wire Cs2 shifts after scanning of the scanning signal lines G1 and G2 that are connected to the subpixels (e.g., 1b, 1d, 1B, 1D, 2a, 2c, 2A, or 2C) facing the storage capacitor wire Cs2. The potential level of the storage capacitor wire Cs2 shifts once after the scanning during a frame period during which the scanning is carried out. That is, the potential level of each of the storage capacitor wires (Cs1, Cs2, and so on) changes so that the potential level is switched between two levels (High and Low) for every one (1) vertical scanning period (one (1) frame period). In a case where a first storage capacitor wire is the storage capacitor wire Cs1, which is positioned more upstream in the scanning direction than the storage capacitor wire Cs2 (the storage capacitor wires Cs1 and Cs2 correspond to a pixel (e.g., pixel P) which is first to receive data among pixels in corresponding one of the pixel arrays), a potential phase of an odd-numbered storage capacitor wire (e.g., Cs1) leads a potential phase of a subsequent odd-numbered storage capacitor wire (e.g., Cs3) by two horizontal scanning periods. Similarly, a potential phase of an even-numbered storage capacitor wire (e.g., Cs2) leads a potential phase of a subsequent even-numbered storage capacitor wire (e.g., Cs4) by two horizontal scanning periods. The potential level of the storage capacitor wire Cs1 (first storage capacitor wire) shifts in the positive direction (L to H) at the timing t1, which is one (1) horizontal scanning period (1H) after the start of the frame. The potential level of the storage capacitor wire Cs2 (second storage capacitor wire) shifts in the negative direction (H to L) at the timing t2, which is two horizontal scanning periods (2H) after the start of the frame. Further, a difference between two potential levels between which the potential level of each of the odd-numbered storage capacitor wires (Cs1, Cs3, and so on) switches remains constant, while a difference between two potential levels between which the potential level of each of the even-numbered storage capacitor wires (Cs2, Cs4, and so on) switches also remains constant. Note however that the difference between the two potential levels between which the potential level of each of the odd-numbered storage capacitor wires (Cs1, Cs3, and so on) switches is larger than the difference between the two potential levels between which the potential level of each of the even-numbered storage capacitor wires (Cs2, Cs4, and so on) switches.

Fig. 13 is a timing diagram, for the embodiment of the Fig. 3, illustrating (i) potentials of the first data signal line S1 and the second data signal line s1, (ii) potentials of the storage capacitor wire Cs1 and the storage capacitor wire Cs2, and (iii) potentials of the respective subpixels (1a through 1d) included in the pixel P (potentials of the pixel electrodes included in the respective subpixels). As illustrated in Fig. 13, according to the embodiment of Fig. 3, the potential level of each of the storage capacitor wires is shifted only once during one (1) frame period. Therefore, even if the level shift amount is smaller than that of the embodiment of Fig. 1, the subpixels 1a through 1d (the pixel electrodes included in respective subpixels 1a through 1d) have effective values that are same as those of the embodiment of Fig. 1.

According to the embodiment, it is possible to control the pixel P so that the subpixel 1a serves as a super-bright subpixel (M), the subpixel 1b serves as a dark subpixel (a), the subpixel 1c serves as a super-dark subpixel (A), and the subpixel 1d serves as a bright subpixel (m). Further, it is possible to control a pixel, which is adjacent to the pixel P in the column direction, so that the subpixel 2a serves as a dark subpixel (a), the subpixel 2b serves as a super-bright subpixel (M), the subpixel 2c serves as a bright subpixel (m), and the subpixel 2d serves as a super-dark subpixel (A). Moreover, it is possible to control a pixel, which is adjacent to the pixel P in the row direction, so that the subpixel 1A serves as a super-bright subpixel (M), the subpixel 1B serves as a dark subpixel (a), the subpixel 1C serves as a super-dark subpixel (A), and the subpixel 1D serves as a bright subpixel (m).

According to the configuration of Fig. 3, it is possible to attain advantages same as those of the embodiment of Fig. 1, except that an advantage that every predetermined number of storage capacitor wires are identical in potential phase. Besides, it is possible to reduce the level shift amount (amplitude) of the potential of each of the storage capacitor wires, and reduce power consumption.

The following description deals with an embodiment of Fig. 4. (a) of Fig. 4 is a timing diagram illustrating how the display section included in the liquid crystal display device is driven. (b) of Fig. 4 is a view schematically illustrating a configuration of the display section and a process of how the display section is driven. The left side of (b) of Fig. 4 illustrates the display section at a timing t1 of (a) of Fig. 4. The center of (b) of Fig. 4 illustrates the display section at a timing t2 of (a) of Fig. 4. The right side of (b) of Fig. 4 illustrates the display section at a timing t3 of (a) of Fig. 4. The embodiments of Figs. 4 and 1 are different from each other in control of the storage capacitor wires. Therefore, (i) the configuration of the display section and (ii) control of the first and second data signal lines of the embodiment of Fig. 4 are same as those of Fig. 1.

As illustrated in (a) and (b) of Fig. 4, a potential level of the storage capacitor wire Cs1 shifts after scanning of the scanning signal line G1 that is connected to the subpixel (e.g., 1a or 1c) facing the storage capacitor wires Cs1. The potential level of the storage capacitor wire Cs1 shifts once after the scanning during a frame period during which the scanning is carried out. On the other hand, a potential level of the storage capacitor wire Cs2 shifts after scanning of the scanning signal lines G1 and G2 that are connected to the subpixels (e.g., 1b, 1d, 1B, 1D, 2a, 2c, 2A, or 2C) facing the storage capacitor wire Cs2. The potential level of the storage capacitor wire Cs2 shifts once after the scanning during a frame period during which the scanning is carried out. That is, the potential level of each of the storage capacitor wires (Cs1, Cs2, and so on) changes so that the potential level is switched between two levels (High and Low) for every one (1) vertical scanning period (one (1) frame period). In a case where a first storage capacitor wire is the storage capacitor wire Cs1, which is positioned more upstream in the scanning direction than the storage capacitor wire Cs2 (the storage capacitor wires Cs1 and Cs2 correspond to a pixel (e.g., pixel P) which is first to receive data among pixels in corresponding one of the pixel arrays), a potential phase of an odd-numbered storage capacitor wire (e.g., Cs1) leads a potential phase of a subsequent odd-numbered storage capacitor wire (e.g., Cs3) by two horizontal scanning periods. Similarly, a potential phase of an even-numbered storage capacitor wire (e.g., Cs2) leads a potential phase of a subsequent even-numbered storage capacitor wire (e.g., Cs4) by two horizontal scanning periods. The potential level of the storage capacitor wire Cs1 (first storage capacitor wire) shifts in the positive direction (L to H) at the timing t1, which is one (1) horizontal scanning period (1H) after the start of the frame. The potential level of the storage capacitor wire Cs2 (second storage capacitor wire) shifts in the positive direction (L to H) at the timing t2, which is two horizontal scanning periods (2H) after the start of the frame. Further, a difference between two potential levels between which the potential level of each of the odd-numbered storage capacitor wires (Cs1, Cs3, and so on) switches remains constant, while a difference between two potential levels between which the potential level of each of the even-numbered storage capacitor wires (Cs2, Cs4, and so on) switches also remains constant. Note however that the difference between the two potential levels between which the potential level of each of the odd-numbered storage capacitor wires (Cs1, Cs3, and so on) switches is larger than the difference between the two potential levels between which the potential level of each of the even-numbered storage capacitor wires (Cs2, Cs4, and so on) switches.

According to the embodiment, it is possible to control the pixel P so that the subpixel 1a serves as a super-bright subpixel (M), the subpixel 1b serves as a bright subpixel (m), the subpixel 1c serves as a super-dark subpixel (A), and the subpixel 1d serves as a dark subpixel (a). Further, it is possible to control a pixel, which is adjacent to the pixel P in the column direction, so that the subpixel 2a serves as a bright subpixel (m), the subpixel 2b serves as a super-bright subpixel (M), the subpixel 2c serves as a dark subpixel (a), and the subpixel 2d serves as a super-dark subpixel (A). Moreover, it is possible to control a pixel, which is adjacent to the pixel P in the row direction, so that the subpixel 1A serves as a super-bright subpixel (M), the subpixel 1B serves as a bright subpixel (m), the subpixel 1C serves as a super-dark subpixel (A), and the subpixel 1D serves as a dark subpixel (a).

According to the embodiment of Fig. 4, it is possible to attain advantages same as those of the embodiment of Fig. 3, except for an advantage regarding arrangement of bright and dark subpixels in each of the subpixel arrays.

The following description deals with an embodiment of Fig. 5. (a) of Fig. 5 is a timing diagram illustrating how the display section included in the liquid crystal display device is driven. (b) of Fig. 5 is a view schematically illustrating a configuration of the display section and a process of how the display section is driven. The left side of (b) of Fig. 5 illustrates the display section at a timing t1 of (a) of Fig. 5. The center of (b) of Fig. 5 illustrates the display section at a timing t2 of (a) of Fig. 5. The right side of (b) of Fig. 5 illustrates the display section at a timing t3 of (a) of Fig. 5. The embodiments of Figs. 5 and 1 are different from each other in control of the storage capacitor wires. Therefore, (i) the configuration of the display section and (ii) control of the first and second data signal lines of the embodiment of Fig. 5 are same as those of Fig. 1.

As illustrated in (a) and (b) of Fig. 5, a potential level of the storage capacitor wire Cs1 shifts after scanning of the scanning signal line G1 that is connected to the subpixel (e.g., 1a or 1c) facing the storage capacitor wires Cs1. The potential level of the storage capacitor wire Cs1 shifts a plurality of times after the scanning during a frame period during which the scanning is carried out. On the other hand, a potential level of the storage capacitor wire Cs2 shifts after scanning of the scanning signal lines G1 and G2 that are connected to the subpixels (e.g., 1b, 1d, 1B, 1D, 2a, 2c, 2A, or 2C) facing the storage capacitor wire Cs2. The potential level of the storage capacitor wire Cs2 shifts a plurality of times after the scanning during a frame period during which the scanning is carried out. That is, the potential level of each of the storage capacitor wires (Cs1, Cs2, and so on) changes so that the potential level is switched between two levels (High and Low) for every one (1) horizontal scanning period (1H). In a case where a first storage capacitor wire is the storage capacitor wire Cs1, which is positioned more upstream in the scanning direction than the storage capacitor wire Cs2 (the storage capacitor wires Cs1 and Cs2 correspond to a pixel (e.g., pixel P) which is first to receive data among pixels in corresponding one of the pixel arrays), potential phases of the odd-numbered storage capacitor wires (Cs1, Cs3, and so on) are identical. Similarly, potential phases of the even-numbered storage capacitor wires (Cs2, Cs4, and so on) are identical. The potential level of the storage capacitor wire Cs1 (first storage capacitor wire) shifts in the positive direction (L to H) at the timing t1, which is one (1) horizontal scanning period (1H) after the start of the frame. The potential level of the storage capacitor wire Cs2 (second storage capacitor wire) shifts in the negative direction (H to L) at the timing t1, which is one (1) horizontal scanning period (1H) after the start of the frame. Further, a difference between two potential levels between which the potential level of each of the odd-numbered storage capacitor wires (Cs1, Cs3, and so on) switches remains constant, while a difference between two potential levels between which the potential level of each of the even-numbered storage capacitor wires (Cs2, Cs4, and so on) switches also remains constant. Note however that the difference between the two potential levels between which the potential level of each of the odd-numbered storage capacitor wires (Cs1, Cs3, and so on) switches is larger than the difference between the two potential levels between which the potential level of each of the even-numbered storage capacitor wires (Cs2, Cs4, and so on) switches.

According to the configuration, it is possible to control the pixel P so that the subpixel 1a serves as a super-bright subpixel (M), the subpixel 1b serves as a dark subpixel (a), the subpixel 1c serves as a super-dark subpixel (A), and the subpixel 1d serves as a bright subpixel (m). Further, it is possible to control a pixel, which is adjacent to the pixel P in the column direction, so that the subpixel 2a serves as a bright subpixel (m), the subpixel 2b serves as a super-dark subpixel (A), the subpixel 2c serves as a dark subpixel (a), and the subpixel 2d serves as a super-bright subpixel (M). Moreover, it is possible to control a pixel, which is adjacent to the pixel P in the row direction, so that the subpixel 1A serves as a super-bright subpixel (M), the subpixel 1B serves as a dark subpixel (a), the subpixel 1C serves as a super-dark subpixel (A), and the subpixel 1D serves as a bright subpixel (m).

As described above, according to the embodiment of Fig. 5, it is possible to attain advantages same as those of the embodiment of Fig. 1, except for an advantage regarding securement of a sufficient level shift amount. Besides, it is possible to arrange the subpixel arrays such that (i) the super-bright subpixel or the bright subpixel and (ii) the super-dark subpixel or the dark subpixel are arranged checkerwise. Accordingly, it is possible to more surely prevent the display roughness. Further, the number of types of potential phase for each of the storage capacitor wires is reduced to two. As such, it is possible to achieve more simple configuration for controlling the potential of each of the storage capacitor wires.

The following description deals with an embodiment of Fig. 6. (a) of Fig. 6 is a timing diagram illustrating how the display section included in the liquid crystal display device is driven. (b) of Fig. 6 is a view schematically illustrating a configuration of the display section and a process of how the display section is driven. The left side of (b) of Fig. 6 illustrates the display section at a timing t1 of (a) of Fig. 6. The center of (b) of Fig. 6 illustrates the display section at a timing t2 of (a) of Fig. 6. The right side of (b) of Fig. 6 illustrates the display section at a timing t3 of (a) of Fig. 6. The embodiments of Figs. 6 and 1 are different from each other in relation of connection between the subpixels and the first and second data signal lines. Therefore, (i) control of the first and second data signal lines and (ii) control of the storage capacitor wires of the embodiment of Fig. 6 are same as those of Fig. 1.

Specifically, as illustrated in (b) of Fig. 6, in one of two pixels adjacent to each other in the column direction, two subpixels (first and second subpixels) arrayed along the column direction are connected to corresponding one of the first data signal lines, while two subpixels (third and fourth subpixels) arrayed along the column direction are connected to corresponding one of the second data signal lines. In the other one of the two pixels adjacent to each other in the column direction, two subpixels included in a subpixel array including the first and second subpixels are connected to the corresponding one of the second data signal lines, while two subpixels included in the subpixel array including the third and fourth subpixels are connected to the corresponding one of the first data signal lines.

For example, first and second data signal lines S1 and s1 are provided correspondingly to a pixel array including a pixel P, and the pixel P includes four subpixels 1a through 1d which are connected to a scanning signal line G1. Meanwhile, the two subpixels 1a and 1b (first and second subpixels) arrayed along the column direction are both connected to the first data signal line S1, while the two subpixels 1c and 1d (third and fourth subpixels) arrayed along the column direction are both connected to the second data signal line s1. On the other hand, a pixel adjacent to the pixel P in the column direction includes four subpixels 2a through 2d which are connected to a scanning signal line G2. The two subpixels 2a and 2c are arrayed along the row direction on one side (the upper side of (b) of Fig. 6) of the scanning signal line G2, whereas the two subpixels 2b and 2d are arrayed along the row direction on the other side (the lower side of (b) of Fig. 6) of the scanning signal line G2. The subpixels 2a and 2b included in a pixel array including the subpixels 1a and 1b of pixel P are both connected to the second data signal line s1, whereas the subpixels 2c and 2d included in a pixel array including the subpixels 1c and 1d of pixel P are both connected to the first data signal line S1.

According to the embodiment, it is possible to control the pixel P so that the subpixel 1a serves as a super-bright subpixel (M), the subpixel 1b serves as a dark subpixel (a), the subpixel 1c serves as a super-dark subpixel (A), and the subpixel 1d serves as a bright subpixel (m). Further, it is possible to control a pixel, which is adjacent to the pixel P in the column direction, so that the subpixel 2a serves as a bright subpixel (m), the subpixel 2b serves as a super-dark subpixel (A), the subpixel 2c serves as a dark subpixel (a), and the subpixel 2d serves as a super-bright subpixel (M). Moreover, it is possible to control a pixel, which is adjacent to the pixel P in the row direction, so that the subpixel 1A serves as a super-bright subpixel (M), the subpixel 1B serves as a dark subpixel (a), the subpixel 1C serves as a super-dark subpixel (A), and the subpixel 1D serves as a bright subpixel (m).

According to the embodiment of Fig. 6, besides the advantages same as those of the embodiment of Fig. 1, it is possible to arrange the subpixel arrays such that (i) the super-bright subpixel or the bright subpixel and (ii) the super-dark subpixel or the dark subpixel are arranged checkerwise. As such, it is possible to more surely prevent the display roughness.

The following description deals with an embodiment of Fig. 7. (a) of Fig. 7 is a timing diagram illustrating how the display section included in the liquid crystal display device is driven. (b) of Fig. 7 is a view schematically illustrating a configuration of the display section and a process of how the display section is driven. The left side of (b) of Fig. 7 illustrates the display section at a timing t1 of (a) of Fig. 7. The center of (b) of Fig. 7 illustrates the display section at a timing t2 of (a) of Fig. 7. The right side of (b) of Fig. 7 illustrates the display section at a timing t3 of (a) of Fig. 7. The embodiments of Figs. 7 and 3 are different from each other in relation of connection between the subpixels and the first and second data signal lines. Therefore, (i) control of the first and second data signal lines and (ii) control of the storage capacitor wires of the embodiment of Fig. 7 are same as those of Fig. 3.

Specifically, as illustrated in (b) of Fig. 7, in one of two pixels adjacent to each other in the column direction, two subpixels (first and second subpixels) arrayed along the column direction are connected to corresponding one of the first data signal lines, while two subpixels (third and fourth subpixels) arrayed along the column direction are connected to corresponding one of the second data signal lines. In the other one of the two pixels adjacent to each other in the column direction, two subpixels included in a subpixel array including the first and second subpixels are connected to the corresponding one of the second data signal lines, while two subpixels included in a subpixel array including the third and fourth subpixels are connected to the corresponding one of the first data signal lines.

For example, first and second data signal lines S1 and s1 are provided correspondingly to a pixel array including a pixel P, and the pixel P includes four subpixels 1a through 1d which are connected to a scanning signal line G1. Meanwhile, the two subpixels 1a and 1b (first and second subpixels) arrayed along the column direction are both connected to the first data signal line S1, while the two subpixels 1c and 1d (third and fourth subpixels) arrayed along the column direction are both connected to the second data signal line s1. On the other hand, a pixel adjacent to the pixel P in the column direction includes four subpixels 2a through 2d which are connected to a scanning signal line G2. The two subpixels 2a and 2c are arrayed along the row direction on one side (the upper side of (b) of Fig. 7) of the scanning signal line G2, whereas the two subpixels 2b and 2d are arrayed along the row direction on the other side (the lower side of (b) of Fig. 7) of the scanning signal line G2. The two subpixels 2a and 2b included in a pixel array including the subpixels 1a and 1b of the pixel P are both connected to the second data signal line s1, whereas the two subpixels 2c and 2d included in a pixel array including the subpixels 1c and 1d of the pixel P are both connected to the first data signal line S1.

According to the embodiment, it is possible to control the pixel P so that the subpixel 1a serves as a super-bright subpixel (M), the subpixel 1b serves as a dark subpixel (a), the subpixel 1c serves as a super-dark subpixel (A), and the subpixel 1d serves as a bright subpixel (m). Further, it is possible to control a pixel, which is adjacent to the pixel P in the column direction, so that the subpixel 2a serves as a bright subpixel (m), the subpixel 2b serves as a super-dark subpixel (A), the subpixel 2c serves as a dark subpixel (a), and the subpixel 2d serves as a super-bright subpixel (M). Moreover, it is possible to control a pixel, which is adjacent to the pixel P in the row direction, so that the subpixel 1A serves as a super-bright subpixel (M), the subpixel 1B serves as a dark subpixel (a), the subpixel 1C serves as a super-dark subpixel (A), and the subpixel 1D serves as a bright subpixel (m).

According to the configuration of Fig. 7, besides the advantages same as those of the embodiment of Fig. 3, it is possible to arrange the subpixel arrays such that (i) the super-bright subpixel or the bright subpixel and (ii) the super-dark subpixel or the dark subpixel are arranged checkerwise. As such, it is possible to more surely prevent the display roughness.

(a) of Fig. 19 illustrates an exemplary configuration of the display section of Figs. 6 and 7. As illustrated in (a) of Fig. 19, in each of the pixels, a source electrode and a drain electrode of each of transistors are provided on a scanning signal line passing in the middle of the pixel. In each even-numbered pixel included in each of the pixel arrays, the drain electrodes of the transistors are drawn toward corresponding one of the first data signal lines or corresponding one of the second data signal lines. In this way, connection between the subpixels and the first and second data signal lines, as illustrated in (b) of Fig. 6 and (b) of Fig. 7, are achieved. Here, a slit separating between pixel electrodes, which are adjacent to each other in the row direction in each of the pixels, can be in a linear shape in the column direction (see (a) of Fig. 19). Alternatively, the slit can be in a 90-degree rotated V shape (see (b) of Fig. 19). The configuration of (b) of Fig. 19 is suitably applicable for, for example, an MVA liquid crystal display device, in which ribs and/or slits in the 90-degree rotated V shape are formed on surfaces, of the pixel electrodes, facing a color filter substrate.

The following description deals with an embodiment of Fig. 8. (a) of Fig. 8 is a timing diagram illustrating how the display section included in the liquid crystal display device is driven. (b) of Fig. 8 is a view schematically illustrating a configuration of the display section and a process of how the display section is driven. The left side of (b) of Fig. 8 illustrates the display section at a timing t1 of (a) of Fig. 8. The center of (b) of Fig. 8 illustrates the display section at a timing t2 of (a) of Fig. 8. The right side of (b) of Fig. 8 illustrates the display section at a timing t3 of (a) of Fig. 8. The embodiments of Figs. 8 and 1 are different from each other in control of the first and second data signal lines. Therefore, (i) the configuration of the display section and (ii) control of the storage capacitor wires of the embodiment of Fig. 8 are same as those of Fig. 1.

Specifically, as illustrated in (a) and (b) of Fig. 8, each pair of the first and second data signal lines receive signal potentials corresponding to identical data (gray scale data) but having respective different polarities (for example, assuming that Vcom is a reference potential, the signal potentials are identical in absolute value but opposite in direction from Vcom to each other). Each of the polarities of the signal potentials is reversed for every one (1) horizontal scanning period (1H). Also in the configuration of Fig. 8, (i) one, of the first data signal lines, corresponding to one of two pixel arrays adjacent to each other and (ii) one, of the second data signal lines, corresponding to the other one of the two pixel arrays adjacent to each other receive signal potentials having respective different polarities. Fig. 14 is a timing diagram, for the configuration of Fig. 8, illustrating (i) potentials of the first data signal line S1 and the second data signal line s1, (ii) potentials of the storage capacitor wire Cs1 and the storage capacitor wire Cs2, and (iii) potentials of the respective subpixels (1 through 1d) included in the pixel P (potentials of pixel electrodes included in the respective subpixels).

According to the embodiment, it is possible to control the pixel P so that the subpixel 1a serves as a super-bright subpixel (M), the subpixel 1b serves as a dark subpixel (a), the subpixel 1c serves as a super-dark subpixel (A), and the subpixel 1d serves as a bright subpixel (m). Further, it is possible to control a pixel, which is adjacent to the pixel P in the column direction, so that the subpixel 2a serves as a bright subpixel (m), the subpixel 2b serves as a super-dark subpixel (A), the subpixel 2c serves as a dark subpixel (a), and the subpixel 2d serves as a super-bright subpixel (M). Moreover, it is possible to control a pixel, which is adjacent to the pixel P in the row direction, so that the subpixel 1A serves as a super-bright subpixel (M), the subpixel 1B serves as a dark subpixel (a), the subpixel 1C serves as a super-dark subpixel (A), and the subpixel 1D serves as a bright subpixel (m).

According to the configuration of Fig. 8, besides the advantages of the embodiment of Fig. 1, it is possible to arrange the subpixel arrays such that (i) the super-bright subpixel or the bright subpixel and (ii) the super-dark subpixel or the dark subpixel are arranged checkerwise. As such, it is possible to more surely prevent the display roughness.

The following description deals with an embodiment of Fig. 9. (a) of Fig. 9 is a timing diagram illustrating how the display section included in the liquid crystal display device is driven. (b) of Fig. 9 is a view schematically illustrating a configuration of the display section and a process of how the display section is driven. The left side of (b) of Fig. 9 illustrates the display section at a timing t1 of (a) of Fig. 9. The center of (b) of Fig. 9 illustrates the display section at a timing t2 of (a) of Fig. 9. The right side of (b) of Fig. 9 illustrates the display section at a timing t3 of (a) of Fig. 9. The embodiments of Figs. 9 and 3 are different from each other in control of the first and second data signal lines. Therefore, (i) the configuration of the display section and (ii) control of the storage capacitor wires of the embodiment of Fig. 9 are same as those of Fig. 3.

Specifically, as illustrated in (a) and (b) of Fig. 9, each pair of the first and second data signal lines receive signal potentials corresponding to identical data (gray scale data) but having respective different signal polarities (for example, assuming that Vcom is a reference potential, the signal potentials are identical in absolute value but opposite in direction from Vcom to each other). Each of the polarities of the signal potentials is reversed for every one (1) horizontal scanning period (1H). Also in the configuration of Fig. 9, (i) one, of the first data signal lines, corresponding to one of two pixel arrays adjacent to each other and (ii) one, of the second data signal lines, corresponding to the other one of the two pixel arrays adjacent to each other receive signal potentials having respective different polarities. Fig. 15 is a timing diagram, for the configuration of Fig. 9, illustrating (i) potentials of the first data signal line S1 and the second data signal line s1, (ii) potentials of the storage capacitor wire Cs1 and the storage capacitor wire Cs2, and (iii) potentials of the respective subpixels (1a through 1d) included in the pixel P (potentials of pixel electrodes included in the respective subpixels).

According to the embodiment, it is possible to control the pixel P so that the subpixel 1a serves as a super-bright subpixel (M), the subpixel 1b serves as a dark subpixel (a), the subpixel 1c serves as a super-dark subpixel (A), and the subpixel 1d serves as a bright subpixel (m). Further, it is possible to control a pixel, which is adjacent to the pixel P in the column direction, so that the subpixel 2a serves as a bright subpixel (m), the subpixel 2b serves as a super-dark subpixel (A), the subpixel 2c serves as a dark subpixel (a), and the subpixel 2d serves as a super-bright subpixel (M). Moreover, it is possible to control a pixel, which is adjacent to the pixel P in the row direction, so that the subpixel 1A serves as a super-bright subpixel (M), the subpixel 1B serves as a dark subpixel (a), the subpixel 1C serves as a super-dark subpixel (A), and the subpixel 1D serves as a bright subpixel (m).

According to the configuration of Fig. 9, besides the advantages same as those of the embodiment of Fig. 3, it is possible to arrange the subpixel arrays such that (i) the super-bright subpixel or the bright subpixel and (ii) the super-dark subpixel or the dark subpixel are arranged checkerwise. As such, it is possible to more surely prevent the display roughness.

The following description deals with an embodiment of Fig. 10. (a) of Fig. 10 is a timing diagram illustrating how the display section included in the liquid crystal display device is driven. (b) of Fig. 10 is a view schematically illustrating a configuration of the display section and a process of how the display section is driven. The left side of (b) of Fig. 10 illustrates the display section at a timing t1 of (a) of Fig. 10. The center of (b) of Fig. 10 illustrates the display section at a timing t2 of (a) of Fig. 10. The right side of (b) of Fig. 10 illustrates the display section at a timing t3 of (a) of Fig. 10. The embodiments of Figs. 10 and 1 are different from each other in control of the first and second data signal lines. Therefore, (i) the configuration of the display section and (ii) control of the storage capacitor wires of the embodiment of Fig. 10 are same as those of Fig. 1.

Specifically, as illustrated in (a) and (b) of Fig. 10, each pair of the first and second data signal lines receive signal potentials corresponding to identical data (gray scale data) but having respective different signal potentials (for example, assuming that Vcom is a reference potential, the signal potentials are identical in absolute value but opposite in direction from Vcom to each other). Each of the polarities of the signal potentials is reversed for every one (1) vertical scanning period. One, of the first data signal lines, corresponding to one of two pixel arrays adjacent to each other and one, of the second data signal lines, corresponding to the other one of the two pixel arrays adjacent to each other receive signal potentials having an identical polarity. For example, in a frame, the first data signal lines S1 and S2 respectively receive positive and negative signal potentials, whereas the second data signal lines s1 and s2 respectively receive negative and positive signal potentials. In a subsequent frame, the first data signal liens S1 and S2 respectively receive negative and positive signal potentials, whereas the second data signal lines s1 and s2 respectively receive positive and negative signal potentials.

According to the configuration, it is possible to control the pixel P so that the subpixel 1a serves as a super-bright subpixel (M), the subpixel 1b serves as a dark subpixel (a), the subpixel 1c serves as a super-dark subpixel (A), and the subpixel 1d serves as a bright subpixel (m). Further, it is possible to control a pixel, which is adjacent to the pixel P in the column direction, so that the subpixel 2a serves as a dark subpixel (a), the subpixel 2b serves as a super-bright subpixel (M), the subpixel 2c serves as a bright subpixel (m), and the subpixel 2d serves as a super-dark subpixel (A). Moreover, it is possible to control a pixel, which is adjacent to the pixel P in the row direction, so that the subpixel 1A serves as a super-dark subpixel (A), the subpixel 1B serves as a bright subpixel (m), the subpixel 1C serves as a super-bright subpixel (M), and the subpixel 1D serves as a dark subpixel (a).

According to the embodiment of Fig. 10, it is possible to attain advantages same as those of the embodiment of Fig. 1, except for an advantage regarding arrangement of bright and dark subpixels in each of the subpixel arrays. Besides, since two data signal lines adjacent to each other with no pixel array therebetween receive signal potentials having the identical polarity, it is possible to reduce power consumption due to a parasitic capacitance defined by the two data signal lines. As such, it is possible to reduce a load on a source driver.

The following description deals with an embodiment of Fig. 11. (a) of Fig. 11 is a timing diagram illustrating how the display section included in the liquid crystal display device is driven. (b) of Fig. 11 is a view schematically illustrating a configuration of the display section and a process of how the display section is driven. The left side of (b) of Fig. 11 illustrates the display section at a timing t1 of (a) of Fig. 11. The center of (b) of Fig. 11 illustrates the display section at a timing t2 of (a) of Fig. 11. The right side of (b) of Fig. 11 illustrates the display section at a timing t3 of (a) of Fig. 11. The embodiments of Figs. 11 and 1 are different from each other in (i) a value of a capacitance defined by each of the subpixels and corresponding one of the storage capacitor wires in the display section and (ii) a level shift amount of the potential of each of the storage capacitor wires. Therefore, (a) configurations other than those described above and (b) control of wires of the embodiment of Fig. 11 are same as those of Fig. 1.

As illustrated in (a) and (b) of Fig. 11, a difference between two potential levels between which the potential level of each of the odd-numbered storage capacitor wires (Cs1, Cs3, and so on) shifts is identical, while a difference between two potential levels between which the potential level of each of the even-numbered storage capacitor wires (Cs2, Cs4, and so on) switches is also identical. Further, the difference between two potential levels between which the potential level of each of the odd-numbered storage capacitor wires (Cs1, Cs3, and so on) shifts is same as the difference between two potential levels between which the potential level of each of the even-numbered storage capacitor wires (Cs2, Cs4, and so on) switches. Meanwhile, four subpixels included in each of the pixels each have an identical area size. Moreover, (i) a capacitance defined by each of two subpixels adjacent to each other in the row direction and corresponding one of the storage capacitor wires is larger than (ii) a capacitance defined by each of the other two subpixels and corresponding one of the storage capacitor wires. For example, the four subpixels (1a through 1d) included in the pixel P each have the identical area size. Further, (i) a capacitance defined by each of two subpixels (1a and 1c) adjacent to each other in the row direction and the storage capacitor wire Cs1 is larger than (ii) a capacitance defined by each of the other two subpixels (16 and 1d) and the storage capacitor wire Cs2.

As described above, an effective potential of the pixel electrode 1a is represented by VS - VF + Kca × Vp, an effective potential of the pixel electrode 1b is represented by VS - VF - KCb × Vq, an effective potential of the pixel electrode 1c is represented by Vs - VF + KCc × Vp, and an effective potential of the pixel electrode 1d is represented by Vs - VF - KCd × Vq. According to the present embodiment, Kca = CCSa/ (CLCa + CCSa) = KCc = CCSc/ (CLCc + CCSc) > KCb = CCSb/ (CLCb + CCSb) = KCd = CCSd/(CLCd + CCSd), and in addition, Vp = Vq. Accordingly, it is possible to control the pixel P so that the subpixel 1a serves as a super-bright subpixel (M); the subpixel 1b serves as a dark subpixel (a), the subpixel 1c serves as a super-dark subpixel (A), and the subpixel 1d serves as a bright subpixel (m). Further, it is possible to control a pixel, which is adjacent to the pixel P in the column direction, so that the subpixel 2a serves as a dark subpixel (a), the subpixel 2b serves as a super-bright subpixel (M), the subpixel 2c serves as a bright subpixel (m), and the subpixel 2d serves as a super-dark subpixel (A). Moreover, it is possible to control a pixel, which is adjacent to the pixel P in the row direction, so that the subpixel 1A serves as a super-bright subpixel (M), the subpixel 1B serves as a dark subpixel (a), the subpixel 1C serves as a super-dark subpixel (A), and the subpixel 1D serves as a bright subpixel (m). Fig. 16 is a timing diagram, for the embodiment of Fig. 11, illustrating (i) potentials of the first data signal line S1 and the second data signal line s1, (ii) potentials of the storage capacitor wire Cs1 and the storage capacitor wire Cs2, and (iii) potentials of the subpixels (1a through 1d) included in the pixel P (potentials of pixel electrodes included in the respective subpixels).

According to the embodiment of Fig. 11, it is possible to attain advantages same as those of the embodiment of Fig. 1. Besides, it is possible to control the storage capacitor wires so that potentials of the respective storage capacitor wires shift by the identical amount. As such, it is possible to simplify the configuration for controlling the potentials of the respective storage capacitor wires.

Fig. 20 illustrates an exemplary configuration of the display section of (b) of Fig. 11. As illustrated in Fig. 20, the pixel P is configured such that (i) a source electrode and a drain electrode of each of four transistors are provided on the scanning signal line G1 passing in the middle of the pixel P, (ii) the storage capacitor wire Cs1 faces pixel electrodes PEa and PEc included respectively in the subpixels 1a and 1c, and (iii) the storage capacitor wire Cs2 faces pixel electrodes PEb and PEd included respectively in the subpixels 1b and 1d. The pixel electrode PEb and the storage capacitor wire Cs2 overlap with each other by a larger area size than the pixel electrode PEa and the storage capacitor wire Cs1 do. Further, the pixel electrode PEd and the storage capacitor wire Cs2 overlap with each other by a larger area size than the pixel electrode PEc and the storage capacitor wire Cs1 do. According to Fig. 20, each of the pixel arrays is provided correspondingly with one of the first data signal lines and one of the second data signal lines at both side ends of the pixel array. However, the present embodiment is not limited to this configuration. For example, as illustrated in Fig. 21, the present embodiment can be configured such that the first and second data signal lines S1 and s1 are provided respectively at one side end and in the middle (e.g., in a space between the subpixels 1a and 1c adjacent to each other in the row direction) of corresponding one of the pixel arrays.

The configuration of Fig. 1 can be modified so that the level shift amount (amplitude) by which the potential level of each of the storage capacitor wires shifts and/or a direction in which the potential level of each of the storage capacitor wires shifts are changed for every frame. That is, the configuration is modified so that each of the storage capacitor wires performs a potential level shifting at a first timing after scanning of corresponding one of the scanning signal lines in such a manner that the level shifting is different between successive frames in terms of at least one of (i) the level shift amount and (ii) a level shift direction. More specifically, there are prepared (a) two types of level shift amount (large, small) and (b) two types of level shift direction (positive, negative) for each of the above level shiftings. Then, four types of level shift pattern obtained by combining (a) one of the two types of level shift amount and (b) one of the two types of level shift direction (i.e., (1) the level shift amount is large and the direction is negative, (2) the level shift amount is large and the direction is positive, (3) the level shift amount is small and the direction is negative, and (4) the level shift amount is small and the direction is positive) are carried out, in respective successive four frames, at the first timing after the scanning of the corresponding one of the scanning signal lines.

For example, as illustrated in (a) of Fig. 22, in a frame 1, the potential level of the storage capacitor wire Cs1 shifts in the positive direction (L to H) by a large amount, whereas the potential level of the storage capacitor wire Cs2 shifts in the negative direction (H to L) by a small amount, at a timing t2 which is two horizontal scanning periods after the start of the frame 1. In a subsequent frame 2, the potential level of the storage capacitor wire Cs1 shifts in the positive direction (L to H) by the small amount, whereas the potential level of the storage capacitor wire Cs2 shifts in the negative direction (H to L) by the large amount, at the timing t2 which is two horizontal scanning periods after the start of the frame 2. In a subsequent frame 3, the potential level of the storage capacitor wire Cs1 shifts in the negative direction (H to L) by the large amount, whereas the potential level of the storage capacitor wire Cs2 shifts in the positive direction (L to H) by the small amount, at the timing t2 which is two horizontal periods after the start of the frame 3. In a subsequent frame 4, the potential level of the storage capacitor wire Cs1 shifts in the negative direction (H to L) by the small amount, whereas the potential level of the storage capacitor wire Cs2 shifts in the positive direction (L to H) by the large amount, at the timing t2 which is two horizontal scanning periods after the start of the frame 4. This makes it possible to achieve such a configuration that layout of the super-bright subpixel (M), the dark subpixel (a), the super-dark subpixel, and the bright subpixel (m) is changed for every frame (see (b) of Fig. 22). As such, it is possible to prevent image sticking, display roughness, and the like.

Further, the configuration of Fig. 2 also makes it possible to prevent the image sticking, display roughness, and the like (see (b) of Fig. 23). This is achieved by modifying the configuration of Fig. 2 so that the amount by which the potential level of each of the storage capacitor wires shifts and/or the direction in which the potential level of each of the storage capacitor wires shifts are changed for each frame, as illustrated in (a) of Fig. 23. Furthermore, the configuration of Fig. 3 also makes it possible to prevent the image sticking, display roughness, and the like (see (b) of Fig. 24). This is achieved by modifying the configuration of Fig. 3 so that the amount by which the potential level of each of the storage capacitor wires shifts and/or the direction in which the potential level of each of the storage capacitor wires shifts are changed for each frame, as illustrated in (a) of Fig. 24. Moreover, the configuration of Fig. 8 also makes it possible to prevent the image sticking (see (b) of Fig. 25). This is achieved by modifying the configuration of Fig. 8 so that the amount by which the potential level of each of the storage capacitor wires shifts and/or the direction in which the potential level of each of the storage capacitor wires shifts are changed for each frame, as illustrated in (a) of Fig. 25.

The following description discusses a configuration of Fig. 26. (a) of Fig. 26 is a timing diagram illustrating how a display section of the liquid crystal display comparative example is driven. (b) of Fig. 26 is a view schematically illustrating a configuration of the display section and a process of how the display section is driven. The left side of (b) of Fig. 26 illustrates the display section at a timing t1 of (a) of Fig. 26. The center of (b) of Fig. 26 illustrates the display section at a timing t2 of (a) of Fig. 26. The right side of (b) of Fig. 26 illustrates the display section at a timing t3 of (a) of Fig. 26. As illustrated in (b) of Fig. 26, a display section 10b is configured such that (i) first and second data signal lines are provided correspondingly to each pixel array at its both side ends and (ii) each pixel includes three subpixels which are connected to identical one of scanning signal lines. Each pixel is associated correspondingly with two storage capacitor wires. In each pixel, two subpixels of the three subpixels and one of the two storage capacitor wires define respective capacitances. Further, one of the two subpixels is connected to corresponding one of the first data signal lines, whereas the other one of the two subpixels is connected to corresponding one of the second data signal lines. Meanwhile, the other one of the three subpixels and the other one of the two storage capacitor wires define a capacitance. The other one of the three subpixels is connected to the corresponding one of the first data signal lines or the corresponding one of the second data signal lines.

More specifically, in each pixel, two subpixels of the three subpixels are arrayed along the row direction on one side of corresponding one of the scanning signal lines, while the other one subpixel of the three subpixels is provided on the other side of the corresponding one of the scanning signal lines. The two subpixels arrayed along the row direction define respective capacitances with corresponding one of the storage capacitor wires. In one of two pixels adjacent to each other in the column direction, two subpixels (first and third subpixels), of the three subpixels, arrayed along the row direction define respective capacitances with same one of the storage capacitor wires, whereas the other one subpixel (second subpixel) defines a capacitance with another one of the storage capacitor wires. In the other one of the two pixels adjacent to each other in the column direction, two, of the three subpixels, arrayed along the row direction define respective capacitances with the another one of the storage capacitor wires. Further, (i) one, of the second data signal lines, corresponding to one of two pixel arrays adjacent to each other and (ii) one, of the first data signal lines, corresponding to the other one of the two pixel arrays adjacent to each other are adjacent to each other with no pixel array therebetween.

For example, first and second data signal lines S1 and s1 are provided correspondingly to a pixel array including a pixel P, and the pixel P includes subpixels 1a through 1c which are connected to a scanning signal line G1. Specifically, in the pixel P, the subpixels 1a and 1c are arrayed along the row direction on one side (the upper side of Fig. 26) of the scanning signal line G1, whereas the subpixel 1b is provided on the other side (the lower side of Fig. 26) of the scanning signal line G1. The subpixels 1a and 1b (first and second subpixels) are both connected to the first data signal line S1, whereas the subpixel 1c (third subpixel) is connected to the second data signal line s1. Further, the subpixels 1a and 1c arrayed along the row direction define respective capacitances with the storage capacitor wire Cs1, while the subpixel 1b defines a capacitance with the storage capacitor wire Cs2.

Similarly, a pixel adjacent to the pixel P in the column direction includes three subpixels 2a through 2c, which are connected to a scanning signal line G2. Specifically, the subpixels 2a and 2c are arrayed along the row direction on one side (the upper side of Fig. 26) of the scanning signal line G2, while the subpixel 2b is provided on the other side (the lower side of Fig. 26) of the scanning signal line G2. The subpixels 2a and 2b are both connected to the first data signal line S1, while the subpixel 2c is connected to the second data signal line s1. The subpixels 2a and 2c arrayed along the row direction define respective capacitances with the storage capacitor wire Cs2 (which defines the capacitance also with the subpixel 1b of the pixel P), whereas the subpixel 2b defines a capacitance with a storage capacitor wire Cs3.

Further, first and second signal lines S2 and s2 are provided correspondingly to a pixel array adjacent to the pixel array including the pixel P, and a pixel adjacent to the pixel P in the row direction includes three subpixels 1A through 1C which are connected to the scanning signal line G1. Specifically, the subpixels 1A and 1C are arrayed along the row direction on one side (the upper side of Fig. 26) of the scanning signal line G1, while the subpixel 1B is provided on the other side (the lower side of Fig. 26) of the scanning signal line G1. The subpixels 1A and 1B are both connected to the first data signal line S2, while the subpixel 1C is connected to the second data signal line s2. The subpixels 1A and 1C arrayed along the row direction define respective capacitances with the storage capacitor wire Cs1, while the subpixel 1B defines a capacitance with the storage capacitor wire Cs2.

As described above, (i) a subpixel (1b or 1B) included in one of two pixels adjacent to each other in the column direction and (ii) subpixels (2a and 2c, or 2A and 2C) included in the other one of the two pixels adjacent to each other in the column direction, define respective capacitances with identical one of the storage capacitor wires (i.e., the storage capacitor wire Cs2). In other words, two subpixels adjacent to each other in the column direction with no scanning signal line therebetween (e.g., 1b and 2a, 1b and 2c, 1B and 2A, or 1B and 2C) define respective capacitances with the identical one of the storage capacitor wires (i.e., the storage capacitor wire Cs2).

Fig. 39 illustrates an equivalent circuit of the pixel P. As illustrated in Fig. 39, the pixel P includes three subpixels 1a through 1c. The subpixel 1a includes a transistor TRa and a pixel electrode PEa. The subpixel 1b includes a transistor TRb and a pixel electrode PEb. The subpixel 1c includes a transistor TRc and a pixel electrode PEc.

The transistors TRa and TRb are both connected to the scanning signal line G1 and the data signal line S1, whereas the transistor TRc is connected to the scanning signal line G1 and the data signal line s1. The pixel electrode PEa and the storage capacitor wire Cs1 define a capacitance CCSa, while the pixel electrode PEa and a common electrode (counter electrode) com define CLCa. The pixel electrode PEb and the storage capacitor wire Cs2 define a capacitance CCSb, while the pixel electrode PEb and the common electrode (counter electrode) com define CLCb. The pixel electrode PEc and the storage capacitor wire Cs1 define a capacitance CCSc, while the pixel electrode PEc and the common electrode (counter electrode) com define CLCc.

Now, refer back to (a) and (b) of Fig. 26. Each pair of the first and second data signal lines receive signal potentials corresponding to identical data (gray scale data) but having respective different polarities (for example, assuming that Vcom is a reference potential, the signal potentials are identical in absolute value but opposite in direction from Vcom to each other). Each of the polarities of the signal potentials is reversed for every one (1) vertical scanning period. One, of the first data signal lines, corresponding to one of two pixel arrays adjacent to each other and one, of the second data signal lines, corresponding to the other one of the two pixel arrays adjacent to each other receive signal potentials having respective different polarities. An example is as follows. First, in a frame, the first data signal lines S1 and S2 receive signal potentials having a positive polarity, while the second data signal lines s1 and s2 receive signal potentials having a negative polarity. Then, in a subsequent frame, the first data signal lines S1 and S2 receive the signal potentials having the negative polarity, while the second data signal lines s1 and s2 receive the signal potentials having the positive polarity.

Further, as illustrated in (a) and (b) of Fig. 26, a potential level of each of the storage capacitor wires shifts after scanning of a scanning signal line that is connected to the subpixel or subpixels facing the storage capacitor wire. The potential level of each of the storage capacitor wires shifts a plurality of times after the scanning in a frame in which the scanning is carried out. Specifically, the potential level of each of the storage capacitor wires changes so that the potential level is periodically switched between two levels during one frame period. In a case where a first storage capacitor wire is one, being positioned upstream in a scanning direction, of two storage capacitor wires corresponding to a pixel which is included in each pixel array and is first to receive data among pixels of the pixel array, potential phases of odd-numbered storage capacitor wires are subsequently shifted in the same direction by the same amount. Similarly, potential phases of even-numbered storage capacitor wires are subsequently shifted in the same direction by the same amount. Further, each of the above two levels remains constant over a plurality of horizontal scanning periods.

More specifically, a potential phase of each odd-numbered storage capacitor wire leads a potential phase of a subsequent odd-numbered storage capacitor wire by two horizontal scanning periods, while a potential phase of each even-numbered storage capacitor wire leads a potential phase of a subsequent even-numbered storage capacitor wire by two horizontal scanning periods. The potential level of the first storage capacitor wire and the potential level of a second storage capacitor wire shift, two horizontal scanning periods after start of a corresponding frame, in respective opposite directions at the same timing. Here, the potential level of each odd-numbered storage capacitor wire is switched between two levels whose difference is identical, while the potential level of each even-numbered storage capacitor wires is switched between two levels whose difference is also identical. Further, the difference between the two levels between which the potential level of each odd-numbered storage capacitor wire is switched is same as the difference between the two levels between which the potential level of each even-numbered storage capacitor wire is switched. Furthermore, two subpixels, of the three subpixels, arrayed along the row direction in each pixel each have an identical area size. Note however that the area size of each of the two subpixels is smaller than an area size of the other one subpixel of the three subpixels. Moreover, (i) each of the capacitances defined by the two subpixels and corresponding one of the storage capacitor wires and (ii) a capacitance defined by the other one subpixel and corresponding one of the storage capacitor wires are identical.

For example, a potential level of the storage capacitor wire Cs1 shifts after scanning of the scanning signal line G1 that is connected to the subpixel (e.g., 1a or 1c) facing the storage capacitor wire Cs1. The potential level of the storage capacitor wire Cs1 shifts a plurality of times after the scanning during a frame period during which the scanning is carried out. On the other hand, a potential level of the storage capacitor wire Cs2 shifts after scanning of the scanning signal wires G1 and G2, that are connected to the subpixels (e.g., 1b, 1B, 2a, 2C, 2A, or 2C) facing the storage capacitor wire Cs2. The potential level of the storage capacitor wire Cs2 shifts a plurality of times after the scanning during a frame period during which the scanning is carried out. That is, the potential level of each of the storage capacitor wires (Cs1, Cs2, and so on) changes so that the potential level is switched between two levels (High and Low) for every 10 horizontal scanning periods (10H). In a case where a first storage capacitor wire is the storage capacitor wire Cs1, which is positioned more upstream in the scanning direction than the storage capacitor wire Cs2 (the storage capacitor wires Cs1 and Cs2 correspond to a pixel (e.g., pixel P) which is first to receive data among pixels in corresponding one of the pixel arrays), a potential phase of an odd-numbered storage capacitor wire (e.g., Cs1) leads a potential phase of a subsequent odd-numbered storage capacitor wire (e.g., Cs3) by two horizontal scanning periods. Similarly, a potential phase of an even-numbered storage capacitor wire (e.g., Cs2) leads a potential phase of a subsequent even-numbered storage capacitor wire (e.g., Cs4) by two horizontal scanning periods. The potential level of the storage capacitor wire Cs1 (first storage capacitor wire) shifts in a positive direction (L to H) at the timing t2, which is two horizontal scanning periods (2H) after the start of the frame. The potential level of the storage capacitor wire Cs2 (second storage capacitor wire) shifts in a negative direction (H to L) at the timing t2, which is two horizontal scanning periods (2H) after the start of the frame. Further, a difference between two potential levels (level shift amount) between which the potential level of each of the odd-numbered storage capacitor wires (Cs1, Cs3, and so on) switches remains constant throughout one frame period, while a difference between two potential levels (level shift amount) between which the potential level of each of the even-numbered storage capacitor wires (Cs2, Cs4, and so on) switches also remains constant throughout one frame period. Further, the difference between the two levels between which the potential level of each of the odd-numbered storage capacitor wires (Cs1, Cs3, and so on) switches is same as the difference between the two levels between which the potential level of each of the even-numbered storage capacitor wires (Cs2, Cs4, and so on) switches. Furthermore, for example in the pixel P, two subpixels (1a and 1c), of the three subpixels, arrayed along the row direction each have an identical area size. Note however that the area size of each of the two subpixels (1a and 1c) is smaller than that of the other one subpixel (1b) of the three subpixels. In addition, (i) each of the capacitances defined by the subpixels 1a and 1c and the storage capacitor wire Cs1 and (ii) the capacitance defined by the subpixel 1b and the storage capacitor wire Cs2 are identical in value. That is, in Fig. 39, Kca = CCSa/(CLCa + CCSa) = KCc = CCSc/(CLCc + CCSc) > KCb = CCSb/(CLCb + CCSb).

The display section 10b configured as above, in which the first and second data signal lines and the storage capacitor wires are controlled as above, is driven in a manner shown in (b) of Fig. 26. The following description discusses how the pixel P is driven, with reference to Figs. 26, 37, and 39. Fig. 37 is a timing diagram illustrating (i) potentials of the first data signal line S1 and the second data signal line s1, (ii) potentials of the storage capacitor wire Cs1 and the storage capacitor wire Cs2, and (iii) potentials of the subpixels (1a thorough 1c) included in the pixel P (i.e., potentials of pixel electrodes included in respective subpixels).

Specifically, assuming that (i) VS represents a signal potential supplied to the data signal S1, (ii) Vs represents a signal potential supplied to the data signal line s1, (iii) VF represents a feed-through potential when transistors are in an OFF state, (iv) 2 × Vp represents a level shift amount (a difference between High and Low) of the potential level of the storage capacitor wire Cs1, and (v) 2 × Vq represents a level shift amount (a difference between High and Low) of the potential level of the storage capacitor wire Cs2, an effective potential of the pixel electrode 1a is represented by VS - VF + Kca x Vp, an effective potential of the pixel electrode 1b is represented by VS - VF - KCb × Vq, and an effective potential of the pixel electrode 1c is represented by Vs - VF + KCc × Vp. However, according to the present embodiment, Kca = CCSa/ (CLCa + CCSa) = KCc= CCSc/(CLCc + CCSc) > KCb = CCSb/(CLCb + CCSb). In addition, Vp = Vq. Accordingly, it is possible to control the pixel P so that the subpixel 1a serves as a super-bright subpixel (M), the subpixel 1b serves as a dark subpixel (a), and the subpixel 1c serves as a super-dark subpixel (A). Further, it is possible to control a pixel, which is adjacent to the pixel P in the column direction, so that the subpixel 2a serves as a super-dark subpixel (A), the subpixel 2b serves as a dark subpixel (a), and the subpixel 2c serves as a super-bright subpixel (M). Moreover, it is possible to control a pixel, which is adjacent to the pixel P in the row direction, so that the subpixel 1A serves as a super-bright subpixel (M), the subpixel 1B serves as a dark subpixel (a), and the subpixel 1C serves as a super-dark subpixel (A).

As described above, according to the embodiment of Fig. 26, it is possible to (i) control the three subpixels included in one pixel so that they have respective different luminance levels and (ii) display a gray level by making use of area coverage modulation of the three subpixels, without increasing the number of storage capacitor wires (i.e., without providing a complicated configuration for controlling a potential of each of the storage capacitor wires). Accordingly, it is possible to reduce viewing angle dependence of a gamma characteristic (e.g., excess brightness of a display screen). Moreover, each pair of first and second data signal lines receive signal potentials corresponding to the same gray scale level but having respective different polarities. This makes it possible to simplify data processing and an arithmetic circuit configuration therefor, as compared to a configuration in which the each pair of the first and second data signal lines receive signal potentials corresponding to respective different gray scale levels so that the subpixels have respective different luminance levels. Furthermore, in each of the subpixel arrays, (i) super-bright subpixels and super-dark subpixels are alternately provided or (ii) bright subpixels and dark subpixels are alternately provided. Accordingly, it is possible to prevent display roughness and display unevenness in a line form in the row direction. Moreover, since the potential level of each of the storage capacitor wires is periodically shifted, it is possible to control the potential phase of each of the storage capacitor wires so that every predetermined number of storage capacitor wires are identical in potential phase. This makes it possible to simplify a configuration for controlling the potential of each of the storage capacitor wires. In addition, since the potential level shifts every 10H, it is possible to shift the potential level by a sufficient amount even if an waveform distortion occurs.

The following description discusses a configuration of Fig. 27. (a) of Fig. 27 is a timing diagram illustrating how a display section of the liquid crystal display is driven. (b) of Fig. 27 is a view schematically illustrating a configuration of the display section and a process of how the display section is driven. The left side of (b) of Fig. 27 illustrates the display section at a timing t1 of (a) of Fig. 27. The center of (b) of Fig. 27 illustrates the display section at a timing t2 of (a) of Fig. 27. The right side of (b) of Fig. 27 illustrates the display section at a timing t3 of (a) of Fig. 27. The embodiments of Figs. 26 and 27 are different from each other in control of the storage capacitor wires. Therefore, (i) the configuration of the display section and (ii) control of the first and the second data signal lines of the embodiment of Fig. 27 are same as those of Fig. 26.

As illustrated in (a) and (b) of Fig. 27, a potential level of the storage capacitor wire Cs1 shifts after scanning of the scanning signal line G1 that is connected to the subpixel (e.g., 1a or 1c) facing the storage capacitor wires Cs1. The potential level of the storage capacitor wire Cs1 shifts once after the scanning during a frame period during which the scanning is carried out. On the other hand, a potential level of the storage capacitor wire Cs2 shifts after scanning of the scanning signal lines G1 and G2 that are connected to the subpixels (e.g., 1b, 1B, 2a, 2C, 2A, or 2C) facing the storage capacitor wire Cs2. The potential level of the storage capacitor wire Cs2 shifts once after the scanning during a frame period during which the scanning is carried out. That is, the potential level of each of the storage capacitor wires (Cs1, Cs2, and so on) changes so that the potential level is switched between two levels (High and Low) for every one (1) vertical scanning period (one (1) frame period). In a case where a first storage capacitor wire is the storage capacitor wire Cs1, which is positioned more upstream in the scanning direction than the storage capacitor wire Cs2 (the storage capacitor wires Cs1 and Cs2 correspond to a pixel (e.g., pixel P) which is first to receive data among pixels in corresponding one of the pixel arrays), a potential phase of an odd-numbered storage capacitor wire (e.g., Cs1) leads a potential phase of a subsequent odd-numbered storage capacitor wire (e.g., Cs3) by two horizontal scanning periods. Similarly, a potential phase of an even-numbered storage capacitor wire (e.g., Cs2) leads a potential phase of a subsequent even-numbered storage capacitor wire (e.g., Cs4) by two horizontal scanning periods. The potential level of the storage capacitor wire Cs1 (first storage capacitor wire) shifts in the positive direction (L to H) at the timing t1, which is one (1) horizontal scanning period (1H) after the start of the frame. The potential level of the storage capacitor wire Cs2 (second storage capacitor wire) shifts in the negative direction (H to L) at the timing t2, which is two horizontal scanning periods (2H) after the start of the frame. Further, a difference between two potential levels (level shift amount) between which the potential level of each of the odd-numbered storage capacitor wires (Cs1, Cs3, and so on) switches remains constant throughout one frame period, while a difference between two potential levels (level shift amount) between which the potential level of each of the even-numbered storage capacitor wires (Cs2, Cs4, and so on) switches also remains constant throughout one frame period. Moreover, (i) the difference between the two potential levels between which the potential level of each of the odd-numbered storage capacitor wires (Cs1, Cs3, and so on) switches and (ii) the difference between the two potential levels between which the potential level of each of the even-numbered storage capacitor wires (Cs2, Cs4, and so on) switches are identical.

According to the embodiment, it is possible to control the pixel P so that the subpixel 1a serves as a super-bright subpixel (M), the subpixel 1b serves as a dark subpixel (a), and the subpixel 1c serves as a super-dark subpixel (A). Further, it is possible to control a pixel, which is adjacent to the pixel P in the column direction, so that the subpixel 2a serves as a super-dark subpixel (A), the subpixel 2b serves as a dark subpixel (a), and the subpixel 2c serves as a super-bright subpixel (M). Moreover, it is possible to control a pixel, which is adjacent to the pixel P in the row direction, so that the subpixel 1A serves as a super-bright subpixel (M), the subpixel 1B serves as a dark subpixel (a), and the subpixel 1C serves as a super-dark subpixel (A).

According to the configuration of Fig. 27, it is possible to attain advantages same as those of the embodiment of Fig. 26, except that an advantage that every predetermined number of storage capacitor wires are identical in potential phase. Besides, it is possible to reduce the level shift amount (amplitude) of the potential of each of the storage capacitor wires, and reduce power consumption.

The following description discusses a configuration of Fig. 28. (a) of Fig. 28 is a timing diagram illustrating how a display section of the liquid crystal display is driven. (b) of Fig. 28 is a view schematically illustrating a configuration of the display section and a process of how the display section is driven. The left side of (b) of Fig. 28 illustrates the display section at a timing t1 of (a) of Fig. 28. The center of (b) of Fig. 28 illustrates the display section at a timing t2 of (a) of Fig. 28. The right side of (b) of Fig. 28 illustrates the display section at a timing t3 of (a) of Fig. 28.

The configuration of Fig. 28 is obtained by modifying the configuration of Fig. 26 so that the potential of each of the storage capacitor wires in the configuration of Fig. 28 is out of phase with the potential of each of the storage capacitor wires in the configuration of Fig. 26 by half a period. According to the configuration of Fig. 28, it is possible to control the pixel P so that the subpixel 1a serves as a super-dark subpixel (A), the subpixel 1b serves as a bright subpixel (m), and the subpixel 1c serves as a super-bright subpixel (M). Further, it is possible to control a pixel, which is adjacent to the pixel P in the column direction, so that the subpixel 2a serves as a super-bright subpixel (M), the subpixel 2b serves as a bright subpixel (m), and the subpixel 2c serves as a super-dark subpixel (A). Moreover, it is possible to control a pixel, which is adjacent to the pixel P in the row direction, so that the subpixel 1A serves as a super-dark subpixel (A), the subpixel 1B serves as a bright subpixel (m), and the subpixel 1C serves as a super-bright subpixel (M).

According to the configuration of Fig. 28, it is possible to attain advantages same as those of the configuration of Fig. 26.

The following description discusses a configuration of Fig. 29. (a) of Fig. 29 is a timing diagram illustrating how a display section of the liquid crystal display is driven. (b) of Fig. 29 is a view schematically illustrating a configuration of the display section and a process of how the display section is driven. The left side of (b) of Fig. 29 illustrates the display section at a timing t1 of (a) of Fig. 29. The center of (b) of Fig. 29 illustrates the display section at a timing t2 of (a) of Fig. 29. The right side of (b) of Fig. 29 illustrates the display section at a timing t3 of (a) of Fig. 29.

The configuration of Fig. 29 is obtained by changing the configuration of Fig. 26 in control of the first and second data signal lines. Specifically, (i) one, of the first data signal lines, corresponding to one of two pixel arrays adjacent to each other and (ii) one, of the second data signal lines, corresponding to the other one of the two pixel arrays adjacent to each other receive signal potentials having an identical polarity. Accordingly, it is possible to control the pixel P so that the subpixel 1a serves as a super-bright subpixel (M), the subpixel 1b serves as a dark subpixel (a), and the subpixel 1c serves as a super-dark subpixel (A). Further, it is possible to control a pixel, which is adjacent to the pixel P in the column direction, so that the subpixel 2a serves as a super-dark subpixel (A), the subpixel 2b serves as a dark subpixel (a), and the subpixel 2c serves as a super-bright subpixel (M). Moreover, it is possible to control a pixel, which is adjacent to the pixel P in the row direction, so that the subpixel 1A serves as a super-dark subpixel (A), the subpixel 1B serves as a dark subpixel (a), and the subpixel 1C serves as a super-bright subpixel (M).

According to the configuration of Fig. 29, it is possible to attain advantages same as those of the configuration of Fig. 26. Further, since two data signal lines adjacent to each other with no pixel array therebetween receive signal potentials having an identical polarity, it is possible to reduce power consumption due to a parasitic capacitance defined by the two data signal lines. As such, it is possible to reduce a load on a source driver.

The following description discusses a configuration of Fig. 30. (a) of Fig. 30 is a timing diagram illustrating how a display section of the liquid crystal display is driven. (b) of Fig. 30 is a view schematically illustrating a configuration of the display section and a process of how the display section is driven. The left side of (b) of Fig. 30 illustrates the display section at a timing t1 of (a) of Fig. 30. The center of (b) of Fig. 30 illustrates the display section at a timing t2 of (a) of Fig. 30. The right side of (b) of Fig. 30 illustrates the display section at a timing t3 of (a) of Fig. 30.

The configuration of Fig. 30 is obtained by changing the configuration of Fig. 26 in a potential phase of each of the storage capacitor wires. Specifically, a potential phase of an odd-numbered storage capacitor wire (e.g., Cs1) leads a potential phase of a subsequent odd-numbered storage capacitor wire (e.g., Cs3) by two horizontal scanning periods, while a potential phase of an even-numbered storage capacitor wire (e.g., Cs2) leads a potential phase of a subsequent even-numbered storage capacitor wire (e.g., Cs4) by two horizontal scanning periods. The potential of the storage capacitor wire Cs1 (first storage capacitor wire) shifts in the negative direction (H to L) at the timing t2, which is two horizontal periods (2H) after the start of corresponding frame. On the other hand, the potential of the storage capacitor wire Cs2 (second storage capacitor wire) shifts in the negative direction (H to L) at the timing t2, which is two horizontal periods (2H) after the start of the corresponding frame.

Accordingly, it is possible to control the pixel P so that the subpixel 1a serves as a super-dark subpixel (A), the subpixel 1b serves as a dark subpixel (a), and the subpixel 1c serves as a super-bright subpixel (M). Further, it is possible to control a pixel, which is adjacent to the pixel P in the column direction, so that the subpixel 2a serves as a super-dark subpixel (A), the subpixel 2b serves as a dark subpixel (a), and the subpixel 2c serves as a super-bright subpixel (M). Moreover, it is possible to control a pixel, which is adjacent to the pixel P in the row direction, so that the subpixel 1A serves as a super-dark subpixel (A), the subpixel 1B serves as a dark subpixel (a), and the subpixel 1C serves as a super-bright subpixel (M).

According to the configuration of Fig. 30, it is possible to attain advantages same as those of the configuration of Fig. 26. Besides, it is possible to reduce the number of types of potential phases for each of the storage capacitor wires. As such, it is possible to achieve more simple configuration for controlling the potential of each of the storage capacitor wires.

The following description discusses a configuration of Fig. 31. (a) of Fig. 31 is a timing diagram illustrating how a display section of the liquid crystal display is driven. (b) of Fig. 31 is a view schematically illustrating a configuration of the display section and a process of how the display section is driven. The left side of (b) of Fig. 31 illustrates the display at a timing t1 of (a) of Fig. 31. The center of (b) of Fig. 31 illustrates the display section at a timing t2 of (a) of Fig. 31. The right side of (b) of Fig. 31 illustrates the display section at a timing t3 of (a) of Fig. 31.

The configuration of Fig. 31 is obtained by changing the configuration of Fig. 26 in control of the first and second data signal lines. Specifically, each pair of the first and second data signal lines receive signal potentials corresponding to identical data (gray scale data) but having respective different polarities. Meanwhile, a polarity of each of the signal potentials is reversed for every one (1) horizontal scanning period.

According to the configuration of Fig. 31, it is possible to attain advantages same as those of the configuration of Fig. 26.

The following description discusses a configuration of Fig. 32. (a) of Fig. 32 is a timing diagram illustrating how a display section of the liquid crystal display is driven. (b) of Fig. 32 is a view schematically illustrating a configuration of the display section and a process of how the display section is driven. The left side of (b) of Fig. 32 illustrates the display at a timing t1 of (a) of Fig. 32. The center of (b) of Fig. 32 illustrates the display section at a timing t2 of (a) of Fig. 32. The right side of (b) of Fig. 32 illustrates the display section at a timing t3 of (a) of Fig. 32. The configuration of Fig. 32 is obtained by changing the configuration of Fig. 26 in an arrangement of pixels and control of the storage capacitor wires.

As illustrated in (b) of Fig. 32, in one of two pixels adjacent to each other in the column direction, two subpixels (first and third subpixels), of the three subpixels, arrayed along the row direction define respective capacitances with identical one of the storage capacitor wires, while the other one subpixel (second subpixel) of the three subpixels defines a capacitance with another one of the storage capacitor wires. In the other one of the two pixels adjacent to each other in the column direction, a subpixel, other than two subpixels arrayed along the row direction, defines a capacitance with the another one of the storage capacitor wires. Moreover, (i) one, of the second data signal lines, corresponding to one of two pixel arrays adjacent to each other and (ii) one, of the first data signal lines, corresponding to the other one of the two pixel arrays adjacent to each other are adjacent to each other with no pixel array therebetween.

For example, first and second data signal lines S1 and s1 are provided correspondingly to a pixel array including a pixel P, and the pixel P includes three subpixels 1a through 1c which are connected to a scanning signal line G1. Specifically, the two subpixels 1a and 1c are arrayed along the row direction on one side (the upper side of (b) of Fig. 32) of the scanning signal line G1, whereas the other subpixel 1b is provided on the other side (the lower side of (b) of Fig. 32) of the scanning signal line G1. The subpixels 1a and 1b (first and second subpixels) are both connected to the first data signal line S1, whereas the subpixel 1c (third subpixel) is connected to the second data signal line s1. Further, the subpixels 1a and 1c arrayed along the row direction define respective capacitances with the storage capacitor wire Cs1, whereas the other subpixel 1b defines a capacitance with the storage capacitor wire Cs2.

Meanwhile, a pixel adjacent to the pixel P in the column direction includes three subpixels 2a through 2c, which are connected to a scanning signal line G2. Specifically, the subpixels 2a and 2c are arrayed along the row direction on one side (the upper side of (b) of Fig. 32) of the scanning signal line G2, while the other subpixel 2b is provided on the other side (the lower side of (b) of Fig. 32) of the scanning signal line G2. The subpixels 2a and 2b are both connected to the first data signal line S1, while the subpixel 2c is connected to the second data signal line s1. Further, the subpixel 2b, which is other than the subpixels 2a and 2c arrayed along the row direction, defines a capacitance with the storage capacitor wire Cs2 (which defines the capacitance also with the subpixel 1b of the pixel P), while the subpixels 2a and 2c define respective capacitances with a storage capacitor wire Cs3.

Further, first and second data signal lines S2 and s2 are provided correspondingly to a pixel array adjacent to the pixel array including the pixel P. A pixel that is adjacent to the pixel P in the row direction includes three subpixels 1A through 1C, which are connected to the scanning signal line G1. Specifically, the subpixels 1A and 1C are arrayed along the row direction on one side (the upper side in (b) of Fig. 32) of the scanning signal line G1, while the subpixel 1B is provided on the other side (the lower side in (b) of Fig. 32) of the scanning signal line G1. The subpixels 1A and 1B are both connected to the first data signal line S2, while the subpixel 1C is connected to the second data signal line s2. Further, the subpixels 1A and 1C arrayed along the row direction define respective capacitances with the storage capacitor wire Cs1, while the subpixel 1B defines a capacitance with the storage capacitor wire Cs2.

A potential phase of each of the storage capacitor wires shifts in the following manner. A potential phase of each odd-numbered storage capacitor wire leads a potential phase of a subsequent odd-numbered storage capacitor wire by two horizontal scanning periods, while a potential phase of each even-numbered storage capacitor wire remains constant. A potential level of a storage capacitor wire (first storage capacitor wire) shifts one (1) horizontal scanning period after the start of a corresponding frame. Further, a difference between two potential levels, between which the potential level of each odd-numbered storage capacitor wire is switched, is constant.

Specifically, a potential phase of an odd-numbered storage capacitor wire (e.g., Cs1) leads a potential phase of a subsequent odd-numbered storage capacitor wire (e.g., Cs3) by two horizontal scanning periods. On the other hand, a potential phase of each of the even-numbered storage capacitor wires (e.g., Cs2, Cs4, and so on) remains constant. The potential level of the storage capacitor wire Cs1 shifts in the positive direction (L to H) at the timing t1, which is one (1) horizontal scanning period (1H) after the start of the corresponding frame. Further, a difference between two potential levels, between which the potential level of each of the odd-numbered storage capacitor wires (Cs1, Cs3, and so on) is switched, remains constant throughout one frame period.

According to the above configuration, the following is possible. Assuming that a subpixel having a luminance corresponding to a signal potential supplied to the subpixel is referred to as a neutral subpixel (indicated with "N"), it is possible to control the pixel P so that the subpixel 1a serves as a super-bright subpixel (M), the subpixel 1b serves as a neutral subpixel (N), and the subpixel 1c serves as a super-dark subpixel (A). Further, it is possible to control a pixel, which is adjacent to the pixel P in the column direction, so that the subpixel 2a serves as a super-dark subpixel (A), the subpixel 2b serves as a neutral subpixel (N), and the subpixel 2c serves as a super-bright subpixel (M). Moreover, it is possible to control a pixel, which is adjacent to the pixel P in the row direction, so that the subpixel 1A serves as a super-bright subpixel (M), the subpixel 1B serves as a neutral subpixel (N), and the subpixel 1C serves as a super-dark subpixel (A).

According to the configuration of Fig. 32, it is possible to attain advantages same as those of the configuration of Fig. 26. Besides, it is possible to reduce the number of types of the potential phases for each of the storage capacitor wires. As such, it is possible to achieve more simple configuration for controlling the potential of each of the storage capacitor wires. Moreover, it is possible to control each of the pixels so that its including three subpixels serve as the supper-bright subpixel, the super-dark subpixel, and the neutral subpixel having the luminance corresponding to the signal potential, respectively. As such, it is possible to prevent, in each of the pixels, excessive brightness or excessive darkness.

The following description discusses a configuration of Fig. 33. (a) of Fig. 33 is a timing diagram illustrating how a display section of the liquid crystal display is driven. (b) of Fig. 33 is a view schematically illustrating a configuration of the display section and a process of how the display section is driven. The left side of (b) of Fig. 33 illustrates the display section at a timing t1 of (a) of Fig. 33. The center of (b) of Fig. 33 illustrates the display section at a timing t2 of (a) of Fig. 33. The right side of (b) of Fig. 33 illustrates the display section at a timing t3 of (a) of Fig. 33.

The configuration of Fig. 33 is obtained by changing the configuration of Fig. 32 in relation of connection between the pixels and the first and second data signal lines. Specifically, in one of two pixels adjacent to each other in the column direction, a subpixel other than two subpixels arrayed along the row direction is connected to corresponding one of the first data signal lines. In the other one of the two pixels adjacent to each other in the column direction, a subpixel other than two subpixels arrayed along the row direction is connected to corresponding one of the second data signal lines. Further, in one of two pixels adjacent to each other in the row direction, a subpixel other than two subpixels arrayed along the row direction is connected to corresponding one of the first data signal lines. In the other one of the two pixels adjacent to each other in the row direction, a subpixel other than two subpixels arrayed along the row direction is connected to corresponding one of the second data signal lines.

According to the above configuration, it is possible to control the pixel P so that the subpixel 1a serves as a super-bright subpixel (M), the subpixel 1b serves as a neutral subpixel (N), and the subpixel 1c serves as a super-dark subpixel (A). Further, it is possible to control a pixel, which is adjacent to the pixel P in the column direction, so that the subpixel 2a serves as a super-dark subpixel (A), the subpixel 2b serves as a neutral subpixel (N), and the subpixel 2c serves as a super-bright subpixel (M). Moreover, it is possible to control a pixel, which is adjacent to the pixel P in the row direction, so that the subpixel 1A serves as a super-bright subpixel (M), the subpixel 1B serves as a neutral subpixel (N), and the subpixel 1C serves as a super-dark subpixel (A).

According to the configuration of Fig. 33, it is possible to attain advantages same as those of the configuration of Fig. 32. Besides, it is possible to provide neutral subpixels (N) in a 2 × 2 matrix in such a way that polarities of the respective neutral subpixels (N) are distributed checkerwise. As such, it is possible to prevent flicker.

The following description discusses a configuration of Fig. 34. (a) of Fig. 34 is a timing diagram illustrating how a display section of the liquid crystal display is driven. (b) of Fig. 34 is a view schematically illustrating a configuration of the display section and a process of how the display section is driven. The left side of (b) of Fig. 34 illustrates the display section at a timing t1 of (a) of Fig. 33. The center of (b) of Fig. 34 illustrates the display section at a timing t2 of (a) of Fig. 34. The right side of (b) of Fig. 34 illustrates the display section at a timing of t3 of (a) of Fig. 34.

The configuration of Fig. 34 is obtained by changing the configuration of Fig. 32 in control of the first and second data signal lines. Specifically, (i) one, of the first data signal lines, corresponding to one of two pixel arrays adjacent to each other and (ii) one, of the second data signal lines, corresponding to the other one of the two pixel arrays adjacent to each other receive signal potentials having an identical polarity. According to the configuration, it is possible to control the pixel P so that the subpixel 1a serves as a super-bright subpixel (M), the subpixel 1b serves as a neutral subpixel (N), and the subpixel 1c serves as a super-dark subpixel (A). Further, it is possible to control a pixel, which is adjacent to the pixel P in the column direction, so that the subpixel 2a serves as a super-dark subpixel (A), the subpixel 2b serves as a neutral subpixel (N), and the subpixel 2c serves as a super-bright subpixel (M). Moreover, it is possible to control a pixel, which is adjacent to the pixel P in the row direction, so that the subpixel 1A serves as a super-dark subpixel (A), the subpixel 1B serves as a neutral subpixel (N), and the subpixel 1C serves as a super-bright subpixel (M).

According to the configuration of Fig. 34, it is possible to attain advantages same as those of the configuration of Fig. 32. Besides, two data signal lines adjacent to each other with no pixel array therebetween receive signal potentials having an identical polarity. Therefore, it is possible to reduce power consumption due to a parasitic capacitance defined by the two data signal lines. As such, it is possible to reduce a load on the source driver.

The following description discusses a configuration of Fig. 35. (a) of Fig. 35 is a timing diagram illustrating how a display section of the liquid crystal display is driven. (b) of Fig. 35 is a view schematically illustrating a configuration of the display section and a process of how the display section is driven. The left side of (b) of Fig. 35 illustrates the display section at a timing t1 of (a) of Fig. 35. The center of (b) of Fig. 35 illustrates the display section at a timing t2 of (a) of Fig. 35. The right side of (b) of Fig. 35 illustrates the display section at a timing t3 of (a) of Fig. 35. The configurations of Fig. 35 and Fig. 32 are different from each other in control of the storage capacitor wires. Therefore, (i) the configuration of the display section and (ii) control of the first and second data signal lines of the embodiment of Fig. 35 are same as those of Fig. 32.

As illustrated in (a) and (b) of Fig. 35, a potential level of each of the storage capacitor wires (Cs1, Cs2, and so on) changes so that the potential level is switched between two levels (High and Low) for every 10 horizontal scanning periods (10H). In a case where a first storage capacitor wire is the storage capacitor wire Cs1, which is positioned more upstream in the scanning direction than the storage capacitor wire Cs2 (the storage capacitor wires Cs1 and Cs2 correspond to a pixel (e.g., pixel P) which is first to receive data among pixels in corresponding one of the pixel arrays), a potential phase of an odd-numbered storage capacitor wire (e.g., Cs1) leads a potential phase of the subsequent odd-numbered storage capacitor wire (e.g., Cs3) by two horizontal scanning periods. Similarly, a potential phase of an even-numbered storage capacitor wire (e.g., Cs2) leads a potential phase of the subsequent even-numbered storage capacitor wire (e.g., Cs4) by two horizontal scanning periods. The potential level of the storage capacitor wire Cs1 (first storage capacitor wire) shifts in the positive direction (L to H) at the timing t2, which is two horizontal scanning periods (2H) after the start of a corresponding frame. The potential level of the storage capacitor wire Cs2 (second storage capacitor wire) shifts in the negative direction (H to L) at the timing t2, which is two horizontal scanning periods (2H) after the start of a corresponding frame. Further, a difference between two potential levels (level shift amount) between which the potential level of each of the odd-numbered storage capacitor wires (Cs1, Cs3, and so on) switches remains constant throughout one (1) frame period, while a difference between two potential levels (level shift amount) between which the potential level of each of the even-numbered storage capacitor wires (Cs2, Cs4, and so on) switches also remains constant throughout one (1) frame period. Note however that the difference between the two potential levels between which the potential level of each of the odd-numbered storage capacitor wires (Cs1, Cs3, and so on) switches is larger than the difference between the two potential levels between which the potential level of each of the even-numbered storage capacitor wires (Cs2, Cs4, and so on) switches. Meanwhile, two subpixels, of the three subpixels, arrayed along the row direction in each pixel each have an identical area size, which is half an area size of the other one subpixel of the three subpixels included in the one pixel. Each of capacitances defined by the two subpixels arrayed along the row direction and corresponding one of the storage capacitor wires is half a capacitance defined by the other one subpixel and another one of the storage capacitor wires. For example, the two subpixels (1a and 1c) arrayed along the row direction in the pixel P each have the identical area size, which is half the area size of the other subpixel (1b). Each of capacitances defined by the two subpixels (1a and 1c) and the storage capacitor wire Cs1 is half a capacitance defined by the other subpixel (1b) and the storage capacitor wire Cs2. As such, in Fig. 39, Kca = CCSa/ (CLCa + CCSa) = KCc = CCSc/ (CLCc + CCSc) = KCb = CCSb/(CLCb + CCSb).

According to the configuration of Fig. 35, it is possible to control the pixel P so that the subpixel 1a serves as a super-bright subpixel (M), the subpixel 1b serves as a dark subpixel (a), and the subpixel 1c serves as a super-dark subpixel (A). Further, it is possible to control a pixel, which is adjacent to the pixel P in the column direction, so that the subpixel 2a serves as a super-dark subpixel (A), the subpixel 2b serves as a dark subpixel (a), and the subpixel 2c serves as a super-bright subpixel (M). Moreover, it is possible to control a pixel, which is adjacent to the pixel P in the row direction, so that the subpixel 1A serves as a super-bright subpixel (M), the subpixel 1B serves as a dark subpixel (a), and the subpixel 1C serves as a super-dark subpixel (A).

According to the configuration of Fig. 35, it is possible to attain advantages same as those of the configuration of Fig. 32, except for an advantage of preventing excess brightness or excess darkness in each of the pixels.

The following description discusses a configuration of Fig. 36. (a) of Fig. 36 is a timing diagram illustrating how a display section of the liquid crystal display is driven. (b) of Fig. 36 is a view schematically illustrating a configuration of the display section and a process of how the display section is driven. The left side of (b) of Fig. 36 illustrates the display section at a timing t1 of (a) of Fig. 36. The center of (b) of Fig. 36 illustrates the display section at a timing t2 of (a) of Fig. 36. The right side of (b) of Fig. 36 illustrates the display section at a timing t3 of (a) of Fig. 36.

The configuration of Fig. 36 is obtained by changing the configuration of Fig. 35 in control of the first and second data signal lines. Specifically, (i) one, of the first data signal lines, corresponding to one of two pixel arrays adjacent to each other and (ii) one, of the second data signal lines, corresponding to the other one of the two pixel arrays adjacent to each other receive signal potentials having an identical polarity. According to the configuration, it is possible to control pixel P so that the subpixel 1a is the super-bright t subpixel (M), the subpixel 1b is the dark subpixel (a), and the subpixel 1c is the super-dark subpixel (A). Further, it is possible to control a pixel, which is adjacent to the pixel P in the column direction, so that the subpixel 2a is the super-dark subpixel (A), the subpixel 2b is the dark subpixel (a), and the subpixel 2c is the super-bright subpixel (M). Moreover, it is possible to control a pixel, which is adjacent to the pixel P in the row direction, so that the subpixel 1A is the super-dark subpixel (A), the subpixel 1B is the dark subpixel (a), and the subpixel 1C is the super-bright subpixel (M).

According to the configuration of Fig. 36, it is possible to attain advantages same as those of the configuration of Fig. 35. Besides, since two data signal lines adjacent to each other with no pixel array therebetween receive signal potentials having the identical polarity, it is possible to prevent power consumption due to a parasitic capacitance defined by the two data signal lines. As such, it is possible to reduce a load on the source driver.

According to the present embodiment, the potential level of each of the storage capacitor wires is controlled by a storage capacitor wire signal (CS signal) supplied to each of the storage capacitor wires. It should be noted that the potential phase of each of the storage capacitor wires is illustrated without taking into consideration a waveform distortion due to a parasitic capacitance etc. Therefore, in the present embodiment, the potential phase of each of the storage capacitor wires is same as a phase (waveform) of the storage capacitor wire signal (CS signal).

Fig. 40 is a block diagram illustrating a configuration of a liquid crystal display device of the present invention. As illustrated in Fig. 40, the liquid crystal display device of the present invention includes a display section (liquid crystal panel), a source driver, a gate driver, a backlight, a backlight drive circuit, a display control circuit, a data rearrangement circuit 44, and a CS control circuit. The source driver drives data signal lines. The gate driver drives scanning signal lines. The data rearrangement circuit 44 rearranges pieces of input data (described later). The display control circuit controls the source driver, the gate driver, and the backlight drive circuit. The CS control circuit controls a phase and cycle etc. of the CS signal, which is for controlling a potential of each of storage capacitor wires (CS wires).

The display control circuit receives, from an external signal source (e.g., tuner), (i) a digital video signal Dv indicative of an image to be displayed, (ii) a horizontal sync signal HSY and a vertical sync signal VSY, which correspond to the digital video signal Dv, and (iii) a control signal Dc for controlling display operation. Based on the signals Dv, HSY, VSY, and Dc thus received, the display control circuit generates, as signals for causing the display section to display the image indicated by the digital video signal Dv, (a) a data start pulse signal SSP, (b) a data clock signal SCK, (c) a latch strobe signal LS, (d) a digital image signal DA (corresponding to the video signal Dv) indicative of the image to be displayed, (e) a gate start pulse signal GSP, (f) a gate clock signal GCK, and (f) a gate driver output control signal (scanning signal output control signal) GOE. Then, the display control circuit outputs these signals.

More specifically, the display control circuit processes the video signal Dv by using its incorporated memory to adjust a timing or the like, if needed, so as to obtain the digital image signal DA. Then, the display control circuit outputs the digital image signal DA. Further, the display control circuit generates, as a signal having pulses and corresponding to each image indicated by the digital image signal DA, the data clock signal SCK. Based on the horizontal sync signal HSY, the display control circuit generates the data start pulse signal SSP, which is in a high-level (H level) state for only a predetermined period in every one (1) horizontal scanning period. Based on the vertical sync signal VSY, the display control circuit generates the gate start pulse signal GSP, which is in the H level state for only a predetermined period in every one (1) frame (one (1) vertical scanning period). Based on the horizontal sync signal HSY, the display control section generates the gate clock signal GCK. Based on the horizontal sync signal HSY and the control signal Dc, the display control circuit generates the latch strobe signal LS and the gate driver output control signal COE.

Among the signals thus generated by the display control circuit as above, the digital image signal DA, the latch strobe signal LS, a signal POL which controls a polarity of a signal potential (data signal potential), the data start pulse signal SSP, and the data clock signal SCK are inputted into the source driver. On the other hand, the gate start pulse signal GSP, the gate clock signal GCK, and the gate driver output control signal GOE are inputted into the gate driver. Further, the gate start pulse signal GSP and the gate clock signal GCK, which are outputted from the display control circuit, are inputted into the CS control circuit.

Based on the digital image signal DA, the data clock signal SCK, the latch strobe signal LS, the data start pulse signal SSP, and the polarity reversal signal POL, the source driver sequentially generates, every one (1) horizontal scanning period, data signals which have analog potentials corresponding to respective pixel values of pixels in the scanning signal lines for the image indicated by the digital image signal DA. Then, the source driver supplies these signals to the data signal lines (e.g., S1a, S1A, S1x, and S1y).

The gate driver generates a scanning signal based on the gate start pulse signal GSP and the gate clock signal GCK, and the gate driver output control signal GOE. Then, the gate driver supplies these signals to the scanning signal lines, thereby selectively driving the scanning signal lines.

Since the data signal lines and the scanning signal lines in the display section (liquid crystal panel) are driven by the source driver and the gate driver as above, each of pixel electrodes receives a signal potential from corresponding one of the data signal lines via a TFT which is connected with selected one of the scanning signal lines. Accordingly, a liquid crystal layer included in each of pixels receives a voltage corresponding to the digital image signal DA. The voltage controls an amount of light, which is emitted from the backlight and transmits the liquid crystal layer. As such, the image indicated by the digital video signal Dv is displayed on the pixels.

Fig. 41 illustrates a configuration of the data rearrangement circuit 44 (refer to Fig. 40) which is employed in the liquid crystal display of the present invention. As illustrated in Fig. 41, the data rearrangement circuit 44 includes a rearrangement control circuit 61, a first line memory 51A, and a second line memory 51B. The rearrangement control circuit 61 receives the parallel inputted signals Dv, HSY, VSY, and Dc, which are data for one (1) line, and generates output data for one (1) horizontal scanning period (1H). For example, the rearrangement control circuit 61 temporarily stores, on the first memory 51A, pieces of data for a pixel array. Meanwhile, the rearrangement control circuit 61 temporality stores, on the second line memory 51B, pieces of data that are same as those stored in the first memory 51A. Then, the rearrangement control circuit 61 reads out the pieces of data alternately from the first line memory 51A and the second line memory 51B. In this way, the rearrangement control circuit 61 generates serial data, for one (1) horizontal scanning period, in which plural pairs of pieces of identical data are sequentially aligned. The pieces of data read out alternately from the first line memory 51A and the second line memory 51B correspond to signal potentials to be supplied to first data signal lines and second data signal lines, respectively.

Further, as illustrated in Fig. 42, the display control circuit transmits, to the source driver, the data generated in the data rearrangement circuit 44. The source driver includes a DAC1 (for a positive polarity) and a DAC2 (for a negative polarity). Two pieces of data (two pieces of identical gray scale data) corresponding to one pixel array (a pair of first and second signal lines) are inputted into the DAC1 1 and the DAC1, respectively, so as to be converted into analog signal potentials.

In this Description, the "potential polarity" is indicative of a longitudinal level with respect to a reference potential. Further, the "reversal of polarity (reversal of potential polarity)" indicates that a potential lower than the reference potential shifts to a potential higher than the reference potential, or that a potential higher than the reference potential shifts to a potential lower than the reference potential. The reference potential can be Vcom (common potential), which is a potential of a common electrode (counter electrode). Alternatively, the reference potential can be any other potential.

The following description discusses an exemplary configuration of the liquid crystal display device of the present invention for use in a television receiver. Fig. 43 is a block diagram illustrating a configuration of a liquid crystal display device 800 for use in the television receiver. The liquid crystal display device 800 includes a liquid crystal display unit 84, a Y/C separation circuit 80, a video chroma circuit 81, an A/D converter 82, a liquid crystal controller 83, a backlight drive circuit 85, a backlight 86, a microcomputer 87, and a gray scale circuit 88. The liquid crystal display unit 84 includes (i) a liquid crystal panel and (ii) a source driver and a gate driver which are for driving the liquid crystal panel.

According to the liquid crystal display device 800 as above, first, a composite color video signal Scv, serving as a television signal, is externally supplied to the Y/C separation circuit 80. Then, the Y/C separation circuit 80 separates the composite color video signal Scv into a luminance signal and a color signal. The luminance signal and color signal are converted, by the video chroma circuit 81, into analog RGB signals corresponding to three primary colors of light. The analog RGB signals are further converted, by the A/C converter 82, into digital RGB signals. The digital RGB signals are inputted into the liquid crystal controller 83. Meanwhile, the Y/C separation circuit 80 extracts horizontal and vertical sync signals from the externally-inputted composite color video signal Scv. The horizontal and vertical sync signals are also inputted into the liquid crystal controller 83 via the microcomputer 87.

The liquid crystal display unit 84 receives the digital RGB signals from the liquid crystal controller 83, at a predetermined timing. The digital RGB signals are inputted into the liquid crystal display unit 84 together with a timing signal, which is based on the above horizontal and vertical sync signals. The gray scale circuit 88 generates gray scale potentials for R, G, and B (three primary colors of light), respectively. The gray scale potentials are also supplied to the liquid crystal display unit 84. The liquid crystal display unit 84 generates driving signals (data signals = signal potentials, scanning signals etc.) based on the digital RGB signals, the timing signal, and the gray scale potentials. The driving signals are generated in the source driver, the gate driver, and the like included in the liquid crystal display unit 84. Based on the driving signals, the liquid crystal display unit 84 causes its incorporated liquid crystal panel to display a color image. In order for the liquid crystal display unit 84 to display an image, the liquid crystal panel included in the liquid crystal display unit 84 needs to be backlit. According to the liquid crystal display device 800, a backside surface of the liquid crystal panel is irradiated by the backlight 86 which is driven by the backlight drive circuit 85, under control of the microcomputer 87.

The microcomputer 87 controls a whole system, such as a drive system as above. In addition, the video signal (composite color video signal) which is externally supplied is not limited to a video signal of television broadcasting, and can therefore be a video signal such as a video signal taken with a camera or a video signal supplied over the Internet. The liquid crystal display device 800 is thus capable of displaying an image based on a variety of video signals.

In a case where the liquid crystal display device 800 displays an image based on the television broadcasting, the liquid crystal display device 800 is connected with a tuner section 90 (see Fig. 44). The liquid crystal display device 800 and the tuner section 90 constitute a television receiver 601 of the present invention. The tuner section 90 extracts, from a wave (a high-frequency signal) received via an antenna (not illustrated), a signal of a channel to be received. The tuner section 90 then converts the signal to an intermediate frequency signal. Then, the tuner section 90 detects the intermediate frequency signal so as to extract the composite color video signal Scv, serving as a television signal. The composite color video signal Scv is supplied to the liquid crystal display device 800 as described earlier. The liquid crystal display device 800 then displays an image based on the composite color video signal Scv.

Fig. 45 is an exploded perspective view illustrating an exemplary configuration of a television receiver of the present invention. As illustrated in Fig. 45, the television receiver 601 of the present invention is constituted by the liquid crystal display device 800, a first housing 801, and a second housing 806. The liquid crystal display device 800 is arranged so as to be sandwiched between and held by the first housing 801 and the second housing 806. The first housing 801 has an opening 801a for transmitting an image to be displayed on the liquid crystal display device 800. The second housing 806 covers a backside of the display device 800, and includes an operation circuit 805 for handling the liquid crystal display device 800. Further, the second housing 806 is supported by a support member 808 at the bottom.

The invention is not limited to the description of the embodiments above, but may be altered within the scope of the claims. An embodiment based on a proper combination of technical means disclosed in different embodiments is encompassed in the technical scope of the invention.

### Industrial Applicability

A liquid crystal panel of the present invention and a liquid crystal display device of the present invention are suitably applicable for use in, for example, a liquid crystal television.

## Claims

1. A liquid crystal display device, comprising:
scanning signal lines (G1, G2);
first data signal lines (S1, S2) and a second data signal line (s1, s2);
a first storage capacitor wire (Cs1) and a second storage capacitor wire (Cs2); and
pixels;
wherein each one of the pixels (P) is provided with:
a first pixel electrode (PEa) connected with one (S1) of the first data signal lines (S1, S2) and one (G1) of the scanning signal lines (G1, G2) via a transistor,
a second pixel electrode (PEb) connected with said one (S1) of the first data signal lines (S1, S2) and said one (G1) of the scanning signal lines (G1, G2) via a transistor, and
a third pixel electrode (PEc) connected with one (s1) of the second data signal lines (s1, s2) and said one (G1) of the scanning signal lines (G1, G2) via a transistor; and
wherein each of the first and third pixel electrodes (PEa, PEc) forms a respective capacitor with the first storage capacitor wire (Cs1) and the second pixel electrode (PEb) forms a capacitor with the second storage capacitor wire (Cs2);
wherein the liquid crystal display device further comprises:
a gate driver; and
a CS control circuit adapted to shift a potential level of the first storage capacitor wire (Cs1) and a potential level of the second storage capacitor wire (Cs2) at least once after a scan of the scanning signal line by the gate driver in a frame in which the scan is carried out; wherein at least one of (i) a direction of first timing level shift after the scan and (ii) an amount of first timing level shift after the scan is different between successive frames;
**characterized in that**
the CS control circuit is adapted to carry out four types of first timing level shift after the scan in respective successive four frames, the four types of first timing level shift being obtained by combining (i) an amount of first timing level shift which is either the larger or the smaller of two level shifts, together with (ii) a direction of first timing level shift which is a positive or either negative.

2. The liquid crystal display device according to claim 1, further comprising a fourth pixel electrode (PEd) connected with said one (s1) of the second data signal lines (s1, s2) and said one (G1) of the scanning signal lines (G1, G2) via a transistor;
wherein the fourth pixel electrode (PEd) forms a capacitor with the second storage capacitor wire (Cs2); and
wherein the source driver is further adapted to supply a second signal potential to the fourth electrode via said one (s1) of the second signal lines.

3. The liquid crystal display according to claim 1 or 2, further comprising a source driver adapted to supply a first signal potential to the first and second pixel electrodes (PEa, PEb) via said one (S1) of the first signal lines, and to supply a second signal potential to the third electrode (PEc) via said one (s1) of the second signal lines;
wherein each of the first and second signal potential supplied by the source driver is corresponding to one gray scale data for said one (P) of the pixels;
wherein a polarity of the first signal potential is different from a polarity of the second signal potential.

4. The liquid crystal display device according to claim 1, wherein an amount of level shift of the first storage capacitor wire (Cs1) is different from an amount of level shift of the second storage capacitor wire (Cs2).

5. The liquid crystal display device according to claim 1, wherein a direction of level shift of the first storage capacitor wire (Cs1) is different from a direction level shift of the second storage capacitor wire (Cs2).

6. The liquid crystal device according to claim 4, wherein a capacitance between the first storage capacitor wire (Cs1) and the first pixel electrode (PEa) is substantially the same as a capacitance between the second storage capacitor wire (Cs2) and the second pixel electrode (PEb).

7. The liquid crystal display device according to any one of claim 1, wherein an amount of level shift of the first storage capacitor wire (Cs1) and an amount of level shift of the second storage capacitor wire (Cs2) are substantially identical.

8. The liquid crystal display device according to claim 7, wherein a capacitance between the first storage capacitor wire (Cs1) and the first pixel electrode (PEa) is larger than a capacitance between the second storage capacitor wire (Cs2) and the second pixel electrode (PEb).

9. The liquid crystal display device according to claim 1, wherein a direction in which the scanning signal line extends is referred to as a row direction;
one of the pixel (P) is adjacent to two pixels in the column direction;
one of the two pixels includes pixel electrode which forms a capacitor with the first storage capacitor; and
the other of the two pixels includes a pixel electrode which forms a capacitor with the second storage capacitor.

## Patentansprüche

1. Flüssigkristallanzeigevorrichtung mit:
Scansignalleitungen (G1, G2) ;
ersten Datensignalleitungen (S1, S2) und einer zweiten Datensignalleitung (s1, s2);
einem ersten Speicherkondensatordraht (Cs1) und einem zweiten Speicherkondensatordraht (Cs2) und
Pixeln,
wobei
jedes der Pixel (P) Folgendes aufweist:
eine erste Pixelelektrode (PEa), die über einen Transistor mit einer (S1) der ersten Datensignalleitungen (S1, S2) und einer (G1) der Scansignalleitungen (G1, G2) verbunden ist;
eine zweite Pixelelektrode (PEb), die über einen Transistor mit der einen (S1) der ersten Datensignalleitungen (S1, S2) und der einen (G1) der Scansignalleitungen (G1, G2) verbunden ist; und
eine dritte Pixelelektrode (PEc), die über einen Transistor mit einer (s1) der zweiten Datensignalleitungen (s1, s2) und der einen (G1) der Scansignalleitungen (G1, G2) verbunden ist,
die erste und die dritte Pixelelektrode (PEa, PEc) jeweils einen entsprechenden Kondensator mit dem ersten Speicherkondensatordraht (Cs1) bilden und die zweite Pixelelektrode (PEb) einen Kondensator mit dem zweiten Speicherkondensatordraht (Cs2) bildet, und
die Flüssigkristallanzeigevorrichtung weiterhin Folgendes aufweist:
einen Gate-Treiber und
eine CS-Steuerschaltung, die so eingerichtet ist, dass sie den Potentiallevel des ersten Speicherkondensatordrahts (Cs1) und den Potentiallevel des zweiten Speicherkondensatordrahts (Cs2) mindestens einmal nach einem Scannen der Scansignalleitung durch den Gate-Treiber in einem Frame, in dem das Scannen durchgeführt wird, verändert, wobei (i) die Richtung der Levelveränderung zu einem ersten Zeitpunkt nach dem Scannen und/oder (ii) der Betrag der Levelveränderung zu dem ersten Zeitpunkt nach dem Scannen zwischen aufeinander folgenden Frames verschieden ist,
**dadurch gekennzeichnet, dass**
die CS-Steuerschaltung so eingerichtet ist, dass sie vier Arten der Levelveränderung zu dem ersten Zeitpunkt nach dem Scannen in jeweils aufeinander folgenden vier Frames durchführt, wobei die vier Arten der Levelveränderung zu dem ersten Zeitpunkt dadurch erhalten werden, dass (i) der Betrag der Levelveränderung zu dem ersten Zeitpunkt, die entweder die größere oder die kleinere von zwei Levelveränderungen ist, mit (ii) der Richtung der Levelveränderung zu dem ersten Zeitpunkt, die entweder positiv oder negativ ist, kombiniert wird.

2. Flüssigkristallanzeigevorrichtung nach Anspruch 1, die weiterhin eine vierte Pixelelektrode (PEd) aufweist, die über einen Transistor mit der einen (s1) der zweiten Datensignalleitungen (s1, s2) und der einen (G1) der Scansignalleitungen (G1, G2) verbunden ist,
wobei die vierte Pixelelektrode (PEd) einen Kondensator mit dem zweiten Speicherkondensatordraht (Cs2) bildet und
wobei der Source-Treiber weiterhin so eingerichtet ist, dass er ein zweites Signalpotential über die eine (s1) der zweiten Signalleitungen für die vierte Elektrode bereitstellt.

3. Flüssigkristallanzeigevorrichtung nach Anspruch 1 oder 2, die weiterhin einen Source-Treiber aufweist, der so eingerichtet ist, dass er ein erstes Signalpotential über die eine (S1) der ersten Signalleitungen für die erste und die zweite Pixelelektrode (PEa, PEb) bereitstellt und ein zweites Signalpotential über die eine (s1) der zweiten Signalleitungen für die dritte Elektrode (PEc) bereitstellt,
wobei das erste und das zweite Signalpotential, die von dem Source-Treiber bereitgestellt werden, jeweils Grauwertskalendaten für das eine der Pixel (P) entsprechen und
wobei die Polarität des ersten Signalpotentials von der Polarität des zweiten Signalpotentials verschieden ist.

4. Flüssigkristallanzeigevorrichtung nach Anspruch 1, **dadurch gekennzeichnet, dass** der Betrag der Levelveränderung des ersten Speicherkondensatordrahts (Cs1) von dem Betrag der Levelveränderung des zweiten Speicherkondensatordrahts (Cs2) verschieden ist.

5. Flüssigkristallanzeigevorrichtung nach Anspruch 1, **dadurch gekennzeichnet, dass** die Richtung der Levelveränderung des ersten Speicherkondensatordrahts (Cs1) von der Richtung der Levelveränderung des zweiten Speicherkondensatordrahts (Cs2) verschieden ist.

6. Flüssigkristallanzeigevorrichtung nach Anspruch 4, **dadurch gekennzeichnet, dass** die Kapazität zwischen dem ersten Speicherkondensatordraht (Cs1) und der ersten Pixelelektrode (PEa) im Wesentlichen gleich der Kapazität zwischen dem zweiten Speicherkondensatordraht (Cs2) und der zweiten Pixelelektrode (PEb) ist.

7. Flüssigkristallanzeigevorrichtung nach Anspruch 1, **dadurch gekennzeichnet, dass** der Betrag der Levelveränderung des ersten Speicherkondensatordrahts (Cs1) und der Betrag der Levelveränderung des zweiten Speicherkondensatordrahts (Cs2) im Wesentlichen identisch sind.

8. Flüssigkristallanzeigevorrichtung nach Anspruch 7, **dadurch gekennzeichnet, dass** die Kapazität zwischen dem ersten Speicherkondensatordraht (Cs1) und der ersten Pixelelektrode (PEa) größer als die Kapazität zwischen dem zweiten Speicherkondensatordraht (Cs2) und der zweiten Pixelelektrode (PEb) ist.

9. Flüssigkristallanzeigevorrichtung nach Anspruch 1, **dadurch gekennzeichnet, dass**
die Richtung, in der die Scansignalleitung verläuft, als eine Zeilenrichtung bezeichnet wird,
eines der Pixel (P) an zwei Pixel in der Spaltenrichtung angrenzt,
eines der beiden Pixel eine Pixelelektrode aufweist, die einen Kondensator mit dem ersten Speicherkondensator bildet, und
das andere der beiden Pixel eine Pixelelektrode aufweist, die einen Kondensator mit dem zweiten Speicherkondensator bildet.

## Revendications

1. Dispositif d'affichage à cristaux liquides, comprenant :
des lignes de signaux de balayage (G1, G2) ;
des premières lignes de signaux de données (S1, S2) et une seconde ligne de signaux de données (s1, s2) ;
un premier fil de condensateur de stockage (Cs1) et un second fil de condensateur de stockage (Cs2) ; et des pixels ;
dans lequel chacun des pixels (P) est doté des éléments ci-dessous :
une première électrode de pixels (PEa) connectée avec l'une (S1) des premières lignes de signaux de données (S1, S2) et l'une (G1) des lignes de signaux de balayage (G1, G2) par l'intermédiaire d'un transistor ;
une deuxième électrode de pixels (PEb) connectée à ladite une (S1) des premières lignes de signaux de données (S1, S2) et à ladite une (G1) des lignes de signaux de balayage (G1, G2) par l'intermédiaire d'un transistor ; et
une troisième électrode de pixels (PEC) connectée à l'une (s1) des secondes lignes de signaux de données (s1, s2) et à ladite une (G1) des lignes de signaux de balayage (G1, G2) par l'intermédiaire d'un transistor ; et
dans lequel chacune des première et troisième électrodes de pixels (PEa, PEc) forme un condensateur respectif avec le premier fil de condensateur de stockage (Cs1), et la deuxième électrode de pixels (PEb) forme un condensateur avec le second fil de condensateur de stockage (Cs2) ;
dans lequel le dispositif d'affichage à cristaux liquides comprend en outre :
un pilote de grille ; et
un circuit de commande de condensateur CS apte à décaler un niveau de potentiel du premier fil de condensateur de stockage (Cs1) et un niveau de potentiel du second fil de condensateur de stockage (Cs2) au moins une fois après un balayage de la ligne de signaux de balayage par le pilote de grille dans une trame dans laquelle le balayage est mis en oeuvre ; dans lequel au moins l'une parmi (i) une direction du premier décalage de niveau de temporisation après le balayage, et (ii) une quantité du premier décalage de niveau de temporisation après le balayage est différente entre des trames successives ;
**caractérisé en ce que** :
le circuit de commande de condensateur CS est apte à mettre en oeuvre quatre types de premier décalage de niveau de temporisation après le balayage dans quatre trames successives respectives, les quatre types de premier décalage de niveau de temporisation étant obtenus en combinant (i) une quantité du premier décalage de niveau de temporisation qui correspond soit au plus grand soit au plus petit de deux décalages de niveau, avec (ii) une direction du premier décalage de niveau de temporisation qui est soit positive, soit négative.

2. Dispositif d'affichage à cristaux liquides selon la revendication 1, comprenant en outre une quatrième électrode de pixels (PEd) connectée à ladite une (s1) des secondes lignes de signaux de données (s1, s2) et à ladite une (G1) des lignes de signaux de balayage (G1, G2) par l'intermédiaire d'un transistor ;
dans lequel la quatrième électrode de pixels (PEd) forme un condensateur avec le second fil de condensateur de stockage (Cs2) ; et
dans lequel le pilote source est en outre apte à fournir un second potentiel de signal à la quatrième électrode par l'intermédiaire de ladite une (s1) des secondes lignes de signaux.

3. Dispositif d'affichage à cristaux liquides selon la revendication 1 ou 2, comprenant en outre un pilote source apte à fournir un premier potentiel de signal aux première et deuxième électrodes de pixels (PEa, PEb) par l'intermédiaire de ladite une (S1) des premières lignes de signaux, et à fournir un second potentiel de signal à la troisième électrode (PEc) par l'intermédiaire de ladite une (s1) des secondes lignes de signaux ;
dans lequel chacun des premier et second potentiels de signal fournis par le pilote source correspond à des données d'échelle de gris pour ledit un (P) des pixels ;
dans lequel une polarité du premier potentiel de signal est différente d'une polarité du second potentiel de signal.

4. Dispositif d'affichage à cristaux liquides selon la revendication 1, dans lequel une quantité de décalage de niveau du premier fil de condensateur de stockage (Cs1) est différente d'une quantité de décalage de niveau du second fil de condensateur de stockage (Cs2).

5. Dispositif d'affichage à cristaux liquides selon la revendication 1, dans lequel une direction de décalage de niveau du premier fil de condensateur de stockage (Cs1) est différente d'une direction de décalage de niveau du second fil de condensateur de stockage (Cs2).

6. Dispositif d'affichage à cristaux liquides selon la revendication 4, dans lequel une capacité entre le premier fil de condensateur de stockage (Cs1) et la première électrode de pixels (PEa) est sensiblement identique à la capacité entre le second fil de condensateur de stockage (Cs2) et la deuxième électrode de pixels (PEb).

7. Dispositif d'affichage à cristaux liquides selon la revendication 1, dans lequel une quantité de décalage de niveau du premier fil de condensateur de stockage (Cs1) et une quantité de décalage de niveau du second fil de condensateur de stockage (Cs2) sont sensiblement identiques.

8. Dispositif d'affichage à cristaux liquides selon la revendication 7, dans lequel une capacité entre le premier fil de condensateur de stockage (Cs1) et la première électrode de pixels (PEa) est supérieure à une capacité entre le second fil de condensateur de stockage (Cs2) et la deuxième électrode de pixels (PEb).

9. Dispositif d'affichage à cristaux liquides selon la revendication 1, dans lequel une direction dans laquelle s'étend la ligne de signaux de balayage est appelée une direction de rangée ;
l'un des pixels (P) est adjacent à deux pixels dans la direction de colonne ;
l'un des deux pixels inclut une électrode de pixels qui forme un condensateur avec le premier condensateur de stockage ; et
l'autre des deux pixels inclut une électrode de pixels qui forme un condensateur avec le second condensateur de stockage.
